(19) Europäisches Patentamt
European Patent Office
Office européen des brevets

(11) EP 1 102 163 A2

(12) EUROPEAN PATENT APPLICATION

(43) Date of publication:
**23.05.2001 Bulletin 2001/21**

(51) Int Cl.$^7$: **G06F 9/302**

(21) Application number: **00310098.9**

(22) Date of filing: **14.11.2000**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **15.11.1999 US 165512 P**
**18.02.2000 US 183527 P**

(71) Applicant: **Texas Instruments Incorporated**
**Dallas, Texas 75251 (US)**

(72) Inventors:
- **Hoyle, David**
  **Arizona 85208 (US)**
- **Golston, Jeremiah E.**
  **Texas 75025 (US)**
- **Zbiciak, Joseph R.**
  **North Richland Hills Texas 76180 (US)**
- **Markandey, Vishal**
  **Dallas Texas 75209 (US)**
- **Simar, Jr.,Laurence R.**
  **Texas 77469 (US)**
- **Stotzer, Eric J.**
  **Houston Texas 77042 (US)**

(74) Representative:
**Legg, Cyrus James Grahame et al**
**ABEL & IMRAY,**
**20 Red Lion Street**
**London WC1R 4PQ (GB)**

# (54) Microprocessor with improved instruction set architecture

(57) A data processing system on an integrated circuit 42 with microprocessor 1 and peripheral devices 60-61 is provided with an emulation unit 50 which allows debugging and emulation of integrated circuit 42 when connected to an external test system 51. Microprocessor 1 has in instruction execution pipeline that has several execution phases that involve fetch/decode units lOa-c and functional execution units 12, 14, 16 and 18. The pipeline of microprocessor 1 is unprotected so that memory access latency to data memory 22 and register file 20 can be utilized by system program code which is stored in instruction memory 23. Multi-field arithmetic/logic unit (ALU) circuitry (L1, L2, S1, S2) is provided for operating on a set of source operands to form a multi-field destination operand by treating the plurality of source operands as a set of N1 fields, such that the multi-field result includes N1 results corresponding to the set of N1 fields. Multi-field multiplication circuitry (M1, M2) is provided for operating on a set of source operands to form a multi-field destination operand by treating the plurality of source operands as a set of N2 fields, such that the multi-field result includes N2 results corresponding to the set of N2 fields. An instruction set architecture (ISA) is provided that is optimized for intensive numeric algorithm processing and includes a set of single instruction, multiple data (SIMD) instructions to direct the operation of the multi-field ALU circuitry and the multi-field multiplication circuitry. Non-aligned data transfer to data memory (D1, D2, 22) can be performed for byte, half word, word, and double-word data items.

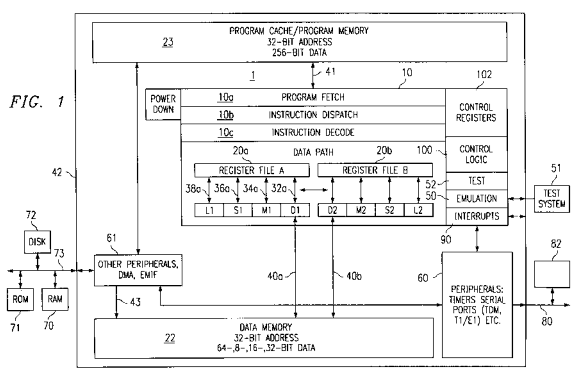


EP 1 102 163 A2

## Description

This invention relates to data processing devices, electronic processing and control systems and methods of their manufacture and operation, and particularly relates to microprocessors optimized for digital signal processing.

Generally, a microprocessor is a circuit that combines the instruction-handling, arithmetic, and logical operations of a computer on a single semiconductor integrated circuit. Microprocessors can be grouped into two general classes, namely general-purpose microprocessors and special-purpose microprocessors. General-purpose microprocessors are designed to be programmable by the user to perform any of a wide range of tasks, and are therefore often used as the central processing unit (CPU) in equipment such as personal computers. Special-purpose microprocessors, in contrast, are designed to provide performance improvement for specific predetermined arithmetic and logical functions for which the user intends to use the microprocessor. By knowing the primary function of the microprocessor, the designer can structure the microprocessor architecture in such a manner that the performance of the specific function by the special-purpose microprocessor greatly exceeds the performance of the same function by a general-purpose microprocessor regardless of the program implemented by the user.

One such function that can be performed by a special-purpose microprocessor at a greatly improved rate is digital signal processing. Digital signal processing generally involves the representation, transmission, and manipulation of signals, using numerical techniques and a type of special-purpose microprocessor known as a digital signal processor (DSP). Digital signal processing typically requires the manipulation of large volumes of data, and a digital signal processor is optimized to efficiently perform the intensive computation and memory access operations associated with this data manipulation. For example, computations for performing Fast Fourier Transforms (FFTs) and for implementing digital filters consist to a large degree of repetitive operations such as multiply-and-add and multiple-bit-shift. DSPs can be specifically adapted for these repetitive functions, and provide a substantial performance improvement over general-purpose microprocessors in, for example, real-time applications such as image and speech processing.

DSPs are central to the operation of many of today's electronic products, such as high-speed modems, high-density disk drives, digital cellular phones, complex automotive systems, and video-conferencing equipment. DSPs will enable a wide variety of other digital systems in the future, such as video-phones, network processing, natural speech interfaces, and ultra-high speed modems. The demands placed upon DSPs in these and other applications continue to grow as consumers seek increased performance from their digital products, and as the convergence of the communications, computer and consumer industries creates completely new digital products.

Microprocessor designers have increasingly endeavored to exploit parallelism to improve performance. One parallel architecture that has found application in some modern microprocessors utilizes multiple instruction fetch packets and multiple instruction execution packets with multiple functional units.

Digital systems designed on a single integrated circuit are referred to as an application specific integrated circuit (ASIC). MegaModules are being used in the design of ASICsto create complex digital systems a single chip. (MegaModule is a trademark of Texas Instruments Incorporated.) Types of MegaModules include SRAMs, FIFOs, register files, RAMs, ROMs, universal asynchronous receiver-transmitters (UARTs), programmable logic arrays and other such logic circuits. MegaModules are usually defined as integrated circuit modules of at least 500 gates in complexity and having a complex ASIC macro function. These MegaModules are predesigned and stored in an ASIC design library. The MegaModules can then be selected by a designer and placed within a certain area on a new IC chip.

Designers have succeeded in increasing the performance of DSPs, and microprocessors in general, by increasing clock speeds, by removing data processing bottlenecks in circuit architecture, by incorporating multiple execution units on a single processor circuit, and by developing optimizing compilers that schedule operations to be executed by the processor in an efficient manner. The increasing demands of technology and the marketplace make desirable even further structural and process improvements in processing devices, application systems and methods of operation and manufacture.

The invention provides a microprocessor having an instruction execution pipeline with a plurality of pipeline phases, comprising:

program fetch circuitry operable to fetch instructions; instruction decode circuitry connected to receive fetched instructions from the program fetch circuitry, the instruction decode circuitry operable to decode a set of single instruction, multiple data (SIMD) instructions; and

at least a first functional unit connected to receive control signals from the instruction decode circuitry, wherein the first functional unit comprises:

multi-field arithmetic/logic unit (ALU) circuitry connected to receive a plurality of source operands and having outputs connected to provide a multi-field result as a destination operand in response to control signals from the instruction decode circuitry, wherein the multi-field ALU circuitry is operable to treat the plurality of source operands as a set of N1 fields, such that the multi-field result includes N1 results corresponding to the set of N1 fields; and wherein the first functional unit is operable to provide the multi-field result in response to a single SIMD instruction of a first type.

Preferably, the microprocessor further comprises a second functional unit connected to operate in parallel with the first functional unit, wherein the second functional unit comprises multi-field multiplication circuitry connected to receive a plurality of source operands and having outputs connected to provide a multi-field result as a destination operand in response to control signals from the instruction decode circuitry, wherein the multi-field multiplication circuitry is operable to treat the plurality of source operands as a set of N2 fields, such that the multi-field result includes N2 results corresponding to the set of N2 fields; and

wherein the second functional unit is operable to provide the multi-field result in response to a single SIMD instruction of a second type.

Preferably, the microprocessor further comprises:

at least a first load/store unit connected to at least a first storage register of the microprocessor;
a memory subsystem having at least a first memory port connected to the first load/store unit;
address generation circuitry in the first load/store unit having a first address output connected to the first memory port, the address generation circuitry operable to provide a first byte address on the first address output;
an extraction circuit connected to the first memory port, wherein the extraction circuit is operable to provide a first non-aligned multi-byte data item to the first load/store unit responsive to the first byte address; and wherein the load/store unit is operable to provide the multi-byte data item in response to a single instruction of a third type.

Preferably, the first storage register is part of a register file connected to the first functional unit and to the second functional unit for providing the plurality of source operands and connected to the first functional unit and to the second function unit to receive the destination operands.

Preferably, the instructions of the first type, second type and third type all have a field for identifying a predicate register.

Preferably, the microprocessor is included in a digital system and, preferably, the digital system is a cellular telephone, further comprising:

an integrated keyboard connected to the CPU via a keyboard adapter;
a display, connected to the CPU via a display adapter;
radio frequency (RF) circuitry connected to the CPU; and
an aerial connected to the RF circuitry.

The invention provides a method of operating a microprocessor, comprising the steps of:

providing multi-field arithmetic/logic unit (ALU) circuitry for operating on a set of source operands to form a multi-field destination operand by treating the plurality of source operands as a set of Nl fields, such that the multi-field result includes Nl results corresponding to the set of N1 fields; and
providing a set of single instruction, multiple data (SIMD) instructions to direct the operation of the multi-field ALU circuitry.

Further, a method of operating a microprocessor, comprises the steps of:

providing multi-field arithmetic/logic unit (ALU) circuitry for operating on a set of source operands to form a multi-field destination operand by treating the plurality of source operands as a set of N1 fields, such that the multi-field result includes N1 results corresponding to the set of N1 fields;
providing multi-field multiplication circuitry for operating on a set of source operands to form a multi-field destination operand by treating the plurality of source operands as a set of N2 fields, such that the multi-field result includes N2 results corresponding to the set of N2 fields; and
providing a set of single instruction, multiple data (SIMD) instructions to direct the operation of the multi-field ALU circuitry and the multi-field multiplication circuitry.

Preferably, the method further comprises the step of providing load/store circuitry operable to transfer a multi-byte data item to a memory circuit at a byte address that is not word aligned.

An illustrative embodiment of the present invention seeks to provide a microprocessor, and a method for operating a microprocessor that improves digital signal processing performance. Aspects of the invention are specified in the claims.

In an embodiment of the present invention, a digital signal processor is provided which has improvements over prior art devices including: register file enhancements, data path extensions, additional functional unit hardware, increased orthogonality of the instruction set, data flow enhancements/SIMD operation, and additional instructions that reduce code size and increase register flexibility.

In an embodiment of the present invention, data flow enhancements include: an extensive collection of PACK and byte shift instructions which simplifies manipulation of packed data types; Single Instruction, Multiple Data (SIMD) instructions that operate directly on packed data to streamline data flow and increase instruction set efficiency, including:

- Quad 8 x 8 multiply operations
- Paired 16 x 16 multiply operations
- Quad 8 x 8 multiply with add operations
- Paired 16 x 16 multiply with add/subtract operations
- Quad 8-bit arithmetic operations
- Paired 16-bit arithmetic operations
- Quad 8-bit min/max operations
- Paired 16-bit min/max operations
- Quad 8-bit compare operations
- Paired 16-bit compare operations
- Paired 16-bit shift operations

Other features and advantages of the present invention will become apparent by reference to the following detailed description when considered in conjunction with the accompanying drawings, in which:

Figure 1 is a block diagram of a digital signal processor (DSP), showing components thereof pertinent to an embodiment of the present invention;
Figure 2A-2E is a block diagram of the functional units, data paths and register files of Figure 1;
Figure 3A shows the addressing mode register (AMR) of the DSP of Figure 1;
Figure 3B shows the control status register (CSR) which contains control and status bits of the DSP of Figure 1;
Fig. 3C shows an E1 Phase Program Counter (PCE1) register of the DSP;
Figure 4 shows a Galois Field Polynomial Generator Function Register
Figure 5 depicts a general-purpose input register (IN) which supports 32 general-purpose input signals of the DSP of Figure 1;
Figure 6 depicts a general-purpose output register (OUT) which supports 32 general-purpose output signals of the DSP of Figure 1;
Figure 7 illustrates the register storage scheme for 40-bit data of the DSP of Figure 1;
Figures 8A-8J show an opcode map for the DSP of Figure 1;
Figure 9A shows the basic format of a fetch packet of the DSP of Figure 1;
Figure 9B depicts a fetch packet of Figure 9A with fully serial *p*-bits;
Figure 9C depicts a fetch packet of Figure 9A with fully parallel *p*-bits;
Figure 9D depicts a fetch packet of Figure 9A with partially serial *p*-bits;
Figures 10A and 10B illustrate aspects of non-aligned address formation and non-aligned data extraction from a circular buffer region;
Figure 11 shows the phases of the pipeline of the DSP of Figure 1;
Figure 12 shows the branch instruction phases;
Figure 13 shows the operation of the pipeline of the DSP of Figure 1 based on clock cycles and fetch packets;
Figure 14 depicts fetch packet n, which contains three execute packets, shown followed by six fetch packets (n+1 through n+6), each with one execution packet (containing 8 parallel instructions);
Figure 15 is a block diagram of an MTAP to Test Port Interface for the processor of Figure 1;
Figure 16A is an illustration of fetch packets and execution packets in a prior art processor;
Figure 16B is an illustration of execution packets spanning fetch packets for the processor of Figure 1; and
Figure 17 is a block diagram of an alternative embodiment of the processor of Figure 1.

Figure 1 is a block diagram of a microprocessor 1 which has an embodiment of the present invention. Microprocessor 1 is a VLIW digital signal processor ("DSP"). In the interest of clarity, Figure 1 only shows those portions of microprocessor 1 that are relevant to an understanding of an embodiment of the present invention. Details of general construction for DSPs are well known, and may be found readily elsewhere. For example, U.S. Patent 5,072,418 issued to Frederick Boutaud, et al, describes a DSP in detail and is incorporated herein by reference. U.S. Patent 5,329,471 issued to Gary Swoboda, et al, describes in detail how to test and emulate a DSP and is incorporated herein by reference. Details of portions of microprocessor 1 relevant to an embodiment of the present invention are explained in sufficient detail hereinbelow, so as to enable one of ordinary skill in the microprocessor art to make and use the invention.

In microprocessor 1 there are shown a central processing unit (CPU) 10, data memory 22, program memory 23, peripherals 60 and an external memory interface (EMIF) with a direct memory access (DMA) 61. CPU 10 further has an instruction fetch/decode unit 10a-c, a plurality of execution units, including an arithmetic and load/store unit D1, a multiplier M1, an ALU/shifter unit S1, an arithmetic logic unit ("ALU") L1, a shared multiport register file 20a from which data are read and to which data are written. Instructions are fetched by fetch unit 10a from instruction memory 23 over a set of busses 41. Decoded instructions are provided from the instruction fetch/decode unit 10a-c to the functional units D1, M1, S1, and L1 over various sets of control lines which are not shown. Data are provided to/from the register file 20a from/to to load/store units D1 over a first set of busses 32a, to multiplier M1 over a second set of busses 34a, to ALU/shifter unit S1 over a third set of busses 36a and to ALU L1 over a fourth set of busses 38a. Data are provided to/from the memory 22 from/to the load/store units D1 via a fifth set of busses 40a. Note that the entire data path described above is duplicated with register file 20b and execution units D2, M2, S2, and L2. In this embodiment of the present invention, two unrelated aligned double word (64 bits) load/store transfers can be made in parallel between CPU 10 and data memory 22 on each clock cycle using bus set 40a and bus set 40b.

A single non-aligned double word load/store transfer is performed by scheduling a first .D unit resource and two load/store ports on memory 22. Advantageously, an extraction circuit is connected to the memory subsystem to provide a non-aligned data item extracted from two aligned data items requested by the .D unit. Advantageously, a second .D unit can perform 32-bit logical or arithmetic instructions in addition to the .S and .L units while the address port of the second .D unit is being used to transmit one of two contiguous addresses provided by the first .D unit. Furthermore, a non-aligned access near the end of a circular buffer region in the target memory provides a non-aligned data item that wraps around to the other end of the circular buffer

Emulation circuitry 50 provides access to the internal operation of integrated circuit 1 that can be controlled by an external test/development system (XDS) 51. External test system 51 is representative of a variety of known test systems for debugging and emulating integrated circuits. One such system is described in U.S. Patent 5,535,331, which is incorporated herein by reference. Test circuitry 52 contains control registers and parallel signature analysis circuitry for testing integrated circuit 1.

Note that the memory 22 and memory 23 are shown in Figure 1 to be a part of a microprocessor 1 integrated circuit, the extent of which is represented by the box 42. The memories 22-23 could just as well be external to the microprocessor 1 integrated circuit 42, or part of it could reside on the integrated circuit 42 and part of it be external to the integrated circuit 42. These are matters of design choice. Also, the particular selection and number of execution units are a matter of design choice, and are not critical to the invention.

When microprocessor 1 is incorporated in a data processing system, additional memory or peripherals may be connected to microprocessor 1, as illustrated in Figure 1. For example, Random Access Memory (RAM) 70, a Read Only Memory (ROM) 71 and a Disk 72 are shown connected via an external bus 73. Bus 73 is connected to the External Memory Interface (EMIF) which is part of functional block 61 within microprocessor 1. A Direct Memory Access (DMA) controller is also included within block 61. The DMA controller is generally used to move data between memory and peripherals within microprocessor 1 and memory and peripherals which are external to microprocessor 1.

In the present embodiment, CPU core 10 is encapsulated as a MegaModule, however, other embodiments of the present invention may be in custom designed CPU's or mass market microprocessors, for example.

A detailed description of various architectural features of the microprocessor of Figure 1 is provided in coassigned application Serial No. 09/012,813 (TI-25311) and is incorporated herein by reference. A description of a portion of the instruction set not described herein for the microprocessor of Figure 1 is also provided in coassigned application Serial No. 09/012,813 (TI-25311) and is incorporated herein by reference.

Figure 2A is a block diagram of the execution units and register files of the microprocessor of Figure 1 and shows a more detailed view of the buses connecting the various functional blocks. In this figure, all data busses are 32 bits wide, unless otherwise noted. There are two general-purpose register files (A and B) in the processor's data paths. Each of these files contains 32 32-bit registers (A0-A31 for file A and BO-B31 for file B). The general-purpose registers can be used for data, data address pointers, or condition registers. Any number of reads of a given register can be performed in a given cycle.

The general-purpose register files support data ranging in size from packed 8-bit data through 64-bit fixed-point data. Values larger than 32 bits, such as 40-bit long and 64-bit double word quantities, are stored in register pairs, with the 32 LSBs of data placed in an even-numbered register and the remaining 8 or 32 MSBs in the next upper register (which is always an odd-numbered register). Packed data types store either four 8-bit values or two 16-bit values in a single 32-bit register.

There are 32 valid register pairs for 40-bit and 64-bit data, as shown in Table 1. In assembly language syntax, a colon between the register names denotes the register pairs and the odd numbered register is encoded in the instruction opcode.

Table 1.

| 40-Bit/64-Bit Register Pairs | |
|---|---|
| Register Files | |
| A | B |
| A1:A0 | B1:B0 |
| A3:A2 | B3:B2 |
| A5:A4 | B5:B4 |
| A7:A6 | 67:B6 |
| A9:A8 | B9:B8 |
| A11:A10 | B11:B10 |
| A13:A12 | B13:B12 |
| A15:A14 | B15:B14 |
| A17:A16 | B17:B16 |
| A19:A18 | B19:B18 |
| A21:A20 | B21:B20 |
| A23:A22 | B23:B22 |
| A25:A24 | B25:B24 |
| A27:A26 | B27:B26 |
| A29:A28 | B29:B28 |
| A31:A30 | B31:B30 |

Figure 7 illustrates the register storage scheme for 40-bit data. Operations requiring a long input ignore the 24 MSBs of the odd register. Operations producing a long result zero-fill the 24 MSBs of the odd register. The even register is encoded in the opcode.

The eight functional units in processor 10's data paths are be divided into two groups of four; each functional unit in one data path is almost identical to the corresponding unit in the other data path. The functional units are described in Table 2.

Besides being able to perform 32-bit data manipulations, processor 10 also contains many 8-bit and 16-bit data instructions in the instruction set. For example, the MPYU4 instruction performs four 8x8 unsigned multiplies with a single instruction on a .M unit. The ADD4 instruction performs four 8-bit additions with a single instruction on a .L unit.

Table 2.

| Functional Units and Operations Performed | |
|---|---|
| Functional Unit<br>Operations | Fixed-Point |
| | |
| .L unit (.L1, .L2)<br>arithmetic and compare operations | 32/40-bit |
| logical operations | 32-bit |
| Leftmost 1 or 0 counting for 32 bits | |
| Normalization count for 32 and 40 bits | |
| shifts | Byte |
| packing/unpacking | Data |
| constant generation | 5-bit |

Table 2. (continued)

| Functional Units and Operations Performed | |
|---|---|
| Functional Unit<br>Operations | Fixed-Point |
| 16-bit arithmetic operations<br>bit arithmetic operations | Paired<br>Quad 8- |
| 16-bit min/max operations<br>bit min/max operations | Paired<br>Quad 8- |
| | |
| .S unit (.S1, .S2)<br>arithmetic operations | 32-bit |
| bit shifts and 32-bit bit-field operations | 32/40- |
| logical operations | 32-bit |
| Branches | |
| Constant generation | |
| Register transfers to/from control register file (.S2 only) | |
| shifts | Byte |
| packing/unpacking | Data |
| 16-bit compare operations<br>8-bit compare operations | Paired<br>Quad |
| 16-bit shift operations<br>16-bit saturated arithmetic operations<br>8-bit saturated arithmetic operations | Paired<br>Paired<br>Quad |
| | |
| .M unit (.M1, .M2)<br>operations | 16 x 16 multiply |
| multiply operations | 16 x 32 |
| expansion | Bit |
| interleaving/de-interleaving | Bit |
| x 8 multiply operations | Quad 8 |
| 16 x 16 multiply operations | Paired |
| 16 x 16 multiply with add/subtract operations | Paired<br>Quad 8 |
| x 8 multiply with add operations | |
| Variable shift operations<br>Rotation<br>Field Multiply | Galois |
| | |
| .D unit (.D1, .D2)<br>subtract, linear and circular address calculation | 32-bit add, |
| and stores with 5-bit constant offset | Loads |
| and stores with 15-bit constant offset (.D2 only) | Loads |
| and store double words with 5-bit constant | Load |

Table 2. (continued)

| Functional Units and Operations Performed | |
|---|---|
| Functional Unit Operations | Fixed-Point |
| and store non-aligned words and double words | Load |
| constant generation | 5-bit |
| bit logical operations | 32- |

Most data lines in the CPU support 32-bit operands, and some support long (40-bit) and double word (64-bit) operands. Each functional unit has its own 32-bit write port into a general-purpose register file (Refer to Figure 2A). All units ending in 1 (for example, .L1) write to register file A 20a and all units ending in 2 write to register file B 20b. Each functional unit has two 32-bit read ports for source operands *src1* and *src2.* Four units (.L1, .L2, .S1, and .S2) have an extra 8-bit-wide port for 40-bit long writes, as well as an 8-bit input for 40-bit long reads. Because each unit has its own 32-bit write port, when performing 32 bit operations all eight units can be used in parallel every cycle. Since each multiplier can return up to a 64-bit result, two write ports are provided from the multipliers to the register file.

Register File Cross Paths

Each functional unit reads directly from and writes directly to the register file within its own data path. That is, the .L1, .S1, .D1, and .M1 units write to register file A and the .L2, .S2, .D2, and .M2 units write to register file B. The register files are connected to the opposite-side register file's functional units via the 1X and 2X cross paths. These cross paths allow functional units from one data path to access a 32-bit operand from the opposite side's register file. The 1X cross path allows data path A's functional units to read their source from register file B. Similarly, the 2X cross path allows data path B's functional units to read their source from register file A.

All eight of the functional units have access to the opposite side's register file via a cross path. The .M1, .M2, . S1, .S2, .D1 and .D2 units' *src2* inputs are selectable between the cross path and the same side register file. In the case of the .L1 and .L2 both *src1* and *src2* inputs are also selectable between the cross path and the same-side register file.

Only two cross paths, 1X and 2X, exist in this embodiment of the architecture. Thus the limit is one source read from each data path's opposite register file per cycle, or a total of two cross-path source reads per cycle. Advantageously, multiple units on a side may read the same cross-path source simultaneously. Thus the cross path operand for one side may be used by any one, multiple or all the functional units on that side in an execute packet. In the C62x/ C67x, only one functional unit per data path, per execute packet could get an operand from the opposite register file.

A delay clock cycle is introduced whenever an instruction attempts to read a register via a cross path that was updated in the previous cycle. This is known as a cross path stall. This stall is inserted automatically by the hardware; no NOP instruction is needed. It should be noted that no stall is introduced if the register being read is the destination for data loaded by a LDx instruction.

Memory, Load and Store Paths

Processor 10 supports double word loads and stores. There are four 32-bit paths for loading data for memory to the register file. For side A, LD1a is the load path for the 32 LSBs; LD1b is the load path for the 32 MSBs. For side B, LD2a is the load path for the 32 LSBs; LD2b is the load path for the 32 MSBs. There are also four 32-bit paths, for storing register values to memory from each register file. ST1a is the write path for the 32 LSBs on side A; ST1b is the write path for the 32 MSBs for side A. For side B, ST2a is the write path for the 32 LSBs; ST2b is the write path for the 32 MSBs.

Some of the ports for long and double word operands are shared between functional units. This places a constraint on which long or double word operations can be scheduled on a datapath in the same execute packet.

Data Address Paths

Bus 40a has an address bus DA1 which is driven by mux 200a. This allows an address generated by either load/store unit D1 or D2 to provide a memory address for loads or stores for register file 20a. Data Bus LD1 loads data from an address in memory 22 specified by address bus DA1 to a register in load unit D1. Unit D1 may manipulate the data provided prior to storing it in register file 20a. Likewise, data bus ST1 stores data from register file 20a to memory 22. Load/store unit D1 performs the following operations: 32-bit add, subtract, linear and circular address calculations. Load/store unit D2 operates similarly to unit D1, with the assistance of mux 200b for selecting an address.

The DA1 and DA2 resources and their associated data paths are specified as T1 and T2 respectively. T1 consists of the DA1 address path and the LD1a, LD1b, ST1a and ST1b data paths. Similarly, T2 consists of the DA2 address path and the LD2a, LD2b, ST2a and ST2b data paths. The T1 and T2 designations appear in functional unit fields for load and store instructions.

For example, the following load instruction uses the .D1 unit to generate the address but is using the LD2a path resource from DA2 to place the data in the B register file. The use of the DA2 resource is indicated with the T2 designation.

LDW .D1T2 *A0[3], B1

Figure 2B is a top level block diagram of .L unit 18a or 18b, which is optimized to handle logical operations, although hardware is available for a set of add and subtract operations and also for the multi-field intermingling instruction of the present invention. Logic block 700 performs various Boolean logic functions. Pass gates 700a together with keeper gates 700b form a latch to hold the contents of a first source operand srcl, which is selected from either register file 20a or 20b via mux 211 (see Figure 2A). Similarly, pass gates 700ca together with keeper gates 700d form a latch to hold the contents of a second source operand src2, which is selected from either register file 20a or 20b via mux 212 (see Figure 2).

Multiplexer block 702 provides byte intermingling. Pass gates and keeper gates hold first and second source operands srcl and src2.

Left Most Bit Detection (LMBD) block 704 performs leftmost bit detection in src2 or long_src and src2 as specified by srcl. First Adder block 706 performs 40-bit arithmetic using long_src and src2 and sign extended srcl. Second Adder block 708 performs multi-field arithmetic on packed data fields in srcl and src2.

Long mux 710 selects from either the long_src LNG or the eight msbs ADD1(39:32) output from 40-bit adder 706 to odd-destination mux 720. Other mux 712 selects from the outputs of logic block 700, mux block 702, LMBD block 704, first adder block 706, second adder block 708 and src1. Other mux 712 is divided into four 8-bit sub-blocks that can each be controlled to select respective portions of the six sets of inputs.

Odd destination mux 720 selects from the outputs of a scan register SCAN31:0 (not shown), the first adder 706 bits ADD1(31:0), long mux 710, other mux 712 and zeros or ones. Odd mux 720 is divided into three separately controlled sections for bits 31:16, 15:8 and 7:0. Even destination register 722 selects from the outputs of a scan register SCAN31:0 (not shown), the first adder 706 bits ADD1(31:0), other mux 712 and zeros or ones. Even mux 722 is divided into two separately controlled sections for bits 31:16 and 15:0.

Figure 2C is a top level block diagram of .S unit 16a, which is optimized to handle arithmetic, logical, and shifting and also for the multi-field saturation instructions of the present invention. The .S unit receives source operand one on inputs 700 and source operand two on inputs 702. An additional 8-bit source input is received on inputs 704 for long source operands. A destination operand output is provided output 710, while a long portion of a destination operand is provided on outputs 712. The .S unit has five major functional units: branch circuitry 720, logical function circuitry 722, adder functional circuitry 724, pack/unpack functional circuitry 726, and shifter circuitry 728.

The lower 32 bits (bits 31:0) of a result are selected by results multiplexer 730 and are stored in the even register of a register pair via outputs 710. The upper 8 bits (bits 39:33) of a long result are selected by multiplexer 730 and are stored in the odd register of the register pair via outputs 712.

Multi-field pack/unpack circuitry 728 performs multi-field packing and unpacking operations as well as multi-field saturation. Multi-field circuitry 228 also performs shifting of signed and unsigned packed data. Multi-field packing and unpacking can also be performed in .L functional units 18a, 18b and is described in detail in coassigned U.S. Patent application Serial No. _______________ (TI-30561) *Microprocessor Having a Set of Byte Intermingling Instructions* and is incorporated herein by reference.

Figure 2D is a top level block diagram of .M unit 14a, which is optimized to handle multiplication, although hardware is available for a limited set of non-multiply operations. In this embodiment, multiplier units M1, M2 are each similar and will be described in more detail with reference to Figures 7B-7D. A rounding multiply instruction MPY(H/L) IR can be executed on either one of the multiply units Ml, M2 during any execution cycle of the instruction execution pipeline, unless a resource conflict limits inclusion of a rounding multiply instruction within a given execution packet.

The .M unit has three major functional units: Galois multiply unit 700a-c, multiply unit 710 and other non-multiply functional circuitry in block 720. Galois multiplier 700a-c and multiplier 710 require three additional cycles to complete the multiply operations, so multiply instructions are categorized as having three delay slots. Pipeline registers 730-733 hold partial results between each pipeline execution phase. In general, multiply unit 710 can perform the following operations on a pair of multipliers 711a,b: two 16x16 multiplies or four 8x8 multiplies with all combination of signed or unsigned numbers, Q-shifting and P-shifting of multiply results, rounding for multiply instructions, controlling the carry chain by breaking/joining the carry chain at 16-bit block boundaries, and saturation multiplication where the final result is shifted left by 1 or returns Ox7FFFFFFF if an overflow occurs. Galois multiply unit 700 performs Galois multiply in parallel with M multiply unit 710. The lower 32 bits (bits 31:0) of a result are selected by multiplexer 734 and are stored in the even register of a register pair. The upper 32 bits (bits 63:33) of the result are selected by multiplexer 735 and are stored in the odd register of the register pair. A more detailed description of configurable multiply circuitry is provided in co-assigned U.S. Patent application _______________ (TI-26010) entitled *Data Processor With Flexible Multiply Unit* and is incorporated herein by reference. Details of the Galois multiply unit are provided in co-assigned U.S. Patent application _______________ (TI-26013) to David Hoyle ,entitled *Galois Field Multiply* and is incorporated herein by reference.

Figure 2e is a top level block diagram of D group unit 12a,b, which executes the load/store instructions and performs address calculations. D unit group 12a,b interfaces with Data Memory Controller 22. Load and Store instructions operate on data sizes from 8 bits to 64 bits. The different addressing modes supported by the D unit group are basic addressing, offset addressing, indexed addressing, auto-increment/auto-decrement, long immediate addressing, and circular addressing. In basic addressing mode, the content of a register is used as a memory address. In offset addressing mode, the memory address is determined by two values, a base value and an offset that is either added or subtracted from the base. The base value always comes from an address register, whereas the offset value may come from either an address register or a 5-bit unsigned constant contained in the instruction. Index addressing mode functions the same as offset addressing mode, except that the offset is interpreted as an index into a table of bytes, halfwords, words or double-words, as indicated by the data size of the load or store operation. In auto-increment/ decrement addressing mode, the base register is incremented/ decremented after the execution of the load/store instruction. There are two sub-modes, pre-increment/decrement, where the new value in the base register is used as the load/store address, and postincrement/decrement where the original value in the register is used as the load/store address. In long-immediate addressing mode, a 14-bit unsigned constant is added to a base register to determine the memory address. In circular addressing mode, the base register along with a block size define a region in memory. To access a memory location in that region, an new index value is generated from the original index modulo the block size. As depicted in Figure 2A, one unit (.S2) can read from and write to the control register file 102 using buses 220 and 221. Table 3 lists the control registers contained in the control register file, and briefly describes each. The control registers are described more fully later herein. Each control register is accessed by the MVC instruction; see the MVC instruction description later herein.

Additionally, some of the control register bits are specially accessed in other ways. For example, arrival of a maskable interrupt on an external interrupt pin, INT*m*, triggers the setting of flag bit IFR*m*. Subsequently, when that interrupt is processed, this triggers the clearing of IFR*m* and the clearing of the global interrupt enable bit, GIE. Finally, when that interrupt processing is complete, the B IRP instruction in the interrupt service routine restores the GIE's pre-interrupt value. Similarly, saturating instructions like SADD set the SAT (saturation) bit in the CSR (Control Status Register).

Table 3.

| Control Registers | | |
|---|---|---|
| Abbreviation | Name | Description |
| AMR | Addressing mode register | Specifies whether to use linear or circular addressing for one of eight registers; also contains sizes for circular addressing |
| CSR | Control status register | Contains the global interrupt enable bit, cache control bits, and other miscellaneous control and status bits |
| IFR | Interrupt flag register | Displays status of interrupts |
| ISR | Interrupt set register | Allows you to set pending interrupts manually |
| ICR | Interrupt clear register | Allows you to clear pending interrupts manually |
| IER | Interrupt enable register | Allows enabling/disabling of individual interrupts |
| ISTP | Interrupt service table pointer | Points to the beginning of the interrupt service table |
| IRP | Interrupt return pointer | Contains the address to be used to return from a maskable interrupt |
| NRP | Nonmaskable interrupt return pointer | Contains the address to be used to return from a nonmaskable interrupt |
| IN | General-purpose input register | Contains 32 input signals |

Table 3. (continued)

| Control Registers | | |
|---|---|---|
| Abbreviation | Name | Description |
| OUT | General-purpose output register | Contains 32 output signals |
| PCE1 | Program counter | Contains the address of the fetch packet that contains the execute packet in the E1 pipeline stage |
| PDATA_O | Program data out | Contains 32 output signals; used by the STP instruction to write to program space |

Pipelining/Timing of Control Register Accesses

As shown in Table 4, all MVC are single-cycle instructions, completing their access of the explicitly named registers in the E1 pipeline phase. This is true whether MVC is moving a general register to a control register or vice versa. In all cases, the source register content is read, moved through the .S2 unit, and written to the destination register in the El pipeline phase.

Table 4.

| Control register Pipelining | |
|---|---|
| Pipeline Stage | E1 |
| Read | *src2* |
| Written | *dst* |
| Unit in use | .S2 |

Even though MVC modifies the particular target control register in a single-cycle, it can take extra clocks to complete modification of the non-explicitly named register. For example, the MVC cannot modify bits in the IFR directly. Instead, MVC can only write 1's into the ISR or the ICR to specify setting or clearing, respectively, of the IFR bits. MVC completes this ISR/ICR write in a single (E1) cycle (as described above) but the modification of the IFR bits themselves occur one clock later.

Saturating instructions, such as SADD, set the SAT bit in the Control Status Register (CSR) indirectly. As a result, several of these instructions update the SAT bit one full clock cycle after their primary results are written to the register file. For example, SMPY writes its result at the end of pipeline stage E2; its primary result is available after one delay slot. In contrast, the SAT bit in the CSR is updated one cycle later than the result is written; this update occurs after two delay slots. (For specific instruction behavior, refer to the instruction's individual description).

The B IRP and B NRP instructions directly update the GIE and NMIE, respectively. Because these branches directly modify the CSR and IER (Interrupt Enable Register) respectively, there are no delay slots between when the branch is issued and when the control register updates take effect.

Figure 3A shows the addressing mode register, (AMR). Eight registers (A4-A7, B4-B7) can perform circular addressing. For each of these registers, the AMR specifies the addressing mode. A 2-bit field for each register is used to select the address modification mode: linear (the default) or circular mode. With circular addressing, the field also specifies which BK (block size) field to use for a circular buffer. In addition, the buffer must be aligned on a byte boundary equal to the block size. The mode select field encoding is shown in Table 5.

Table 5.

| Addressing Mode Field Encoding | |
|---|---|
| Mode | Description |
| 00 | Linear modification (default at reset) |
| 01 | Circular addressing using the BK0 field |
| 10 | Circular addressing using the BK1 field |
| 11 | Reserved |

The block size fields, BK0 and BK1, specify block sizes for circular addressing. The five bits in BK0 and BK1 specify the width. The formula for calculating the block size width is:

$$\text{Block size (in bytes)} = 2^{(N+1)}$$

where N is the value in BK1 or B0

Table 6 shows block size calculations for all 32 possibilities.

Table 6.

| Block Size Calculations | | | |
|---|---|---|---|
| N | Block Size | N | Block Size |
| 00000 | 2 | 10000 | 131,072 |
| 00001 | 4 | 10001 | 262,144 |
| 00010 | 8 | 10010 | 524,288 |
| 00011 | 16 | 10011 | 1,048,576 |
| 00100 | 32 | 10100 | 2,097,152 |
| 00101 | 64 | 10101 | 4,194,304 |
| 00110 | 128 | 10110 | 8,388,608 |
| 00111 | 256 | 10111 | 16,777,216 |
| 01000 | 512 | 11000 | 33,554,432 |
| 01001 | 1,024 | 11001 | 67,108,864 |
| 01010 | 2,048 | 11010 | 134,217,728 |
| 01011 | 4,096 | 11011 | 268,435,456 |
| 01100 | 8,192 | 11100 | 536,870,912 |
| 01101 | 16,384 | 11101 | 1,073,741,82 4 |
| 01110 | 32,768 | 11110 | 2,147,483,64 8 |
| 01111 | 65,536 | 11111 | 4,294,967,29 6 |
| Note: when N is 11111, the behavior is identical to linear addressing | | | |

The control status register (CSR), shown in Figure 3B, contains control and status bits. The function of the bit fields in the CSR are shown in Table 7.

Table 7.

| Control Status Register: Bit Fields, Read/Write Status and Function | | | |
|---|---|---|---|
| Bit Position | Width | BitField Name | Function |
| 31-24 | 8 | CPU ID | CPU ID. Defines which CPU. |
| 23-16 | 8 | Rev ID | Revision ID. Defines silicon revision of the CPU. |
| 15-10 | 6 | PWRD | Control power down modes. The values will always be read as zero. |
| 9 | 1 | SAT | The saturate bit, set when any unit performs a saturate, can be cleared only by the MVC instruction and can be set only by a functional unit. The set by a functional unit has priority over a clear (by the MVC instruction) if they occur on the same cycle. The saturate bit gets set one full cycle (1 delay slot) after a saturate occurs. This bit will not be modified by a conditional instruction whose condition is false. |
| 8 | 1 | EN | Endian bit: 1 = little endian, 0 = big endian. |

Table 7. (continued)

| Control Status Register: Bit Fields, Read/Write Status and Function | | | |
|---|---|---|---|
| Bit Position | Width | BitField Name | Function |
| 7-5 | 3 | PCC | Program cache control mode |
| 4-2 | 3 | DCC | Data cache control mode |
| 1 | 1 | PGIE | Previous GIE (global interrupt enable). Saves GIE when an interrupt is taken. |
| 0 | 1 | GIE | Global interrupt enable. Enables (1) or disables (0) all interrupts except the reset interrupt and NMI (nonmaskable interrupt). |

Figure 3C shows an E1 Phase Program Counter (PCE1) register, that contains a 32-bit address of a fetch packet in the E1 pipeline phase.

Figure 4 shows a Galois Field Polynomial Generator Function Register, (GFPGFR). The GFPGFR contains a Galois field polynomial generator and field size control bits. These bits control the operation of the GMPY4 instruction. This register is only settable via the MVC instruction.

Table 8 defines the fields of the GFPGFR. The default function after reset for the GMPY4 instruction of field size=7 and polynomial=0x1D.

Table 8.

| GFPGFR Fields | | | |
|---|---|---|---|
| Bit Position | Width | Field Name | Function |
| 31-27 | 5 | RESERVED | Reserved. Read as zero. Ignored on write. |
| 26-24 | 3 | SIZE | Field size. |
| 23-8 | 16 | RESERVED | Reserved. Read as zero. Ignored on write. |
| 7-0 | 8 | POLY | Polynomial Generator. |

If a GMPY4 instruction is contained in the next execute packet after an MVC instruction that changes the GFPGFR value, the GMPY4 will be controlled by the newly loaded GFPGFR value.

A general-purpose input register (IN) depicted in Figure 5 supports 32 general-purpose input signals, while a general-purpose output register (OUT) depicted in Figure 6 supports 32 general-purpose output signals. The function of these signals is described later herein.

Table 9 below explains various symbols used herein.

Table 9.

| Instruction Operation and Execution Notations | |
|---|---|
| Symbol | Meaning |
| long | 40-bit register value |
| +a | Perform twos-complement addition using the addressing mode defined by the AMR |
| -a | Perform twos-complement subtraction using the addressing mode defined by the AMR |
| xor | Bitwise exclusive OR |
| not | Bitwise logical complement |
| $^{b}y..z$ | Selection of bits y through z of bit string b |
| >>s | Shift right with sign extension |
| >>z | Shift right with a zero fill |
| *x* clear *b,e* | Clear a field in x, specified by b (beginning bit) and e (ending bit) |
| *x* exts *l,r* | Extract and sign-extend a field in x, specified by l (shift left value) and r (shift right value) |

Table 9. (continued)

| Instruction Operation and Execution Notations | |
|---|---|
| Symbol | Meaning |
| *x* extu *l,r* | Extract an unsigned field in x, specified by l (shift left value) and r (shift right value) |
| +s | Perform twos-complement addition and saturate the result to the result size, if an overflow or underflow occurs |
| -s | Perform twos-complement subtraction and saturate the result to the result size, if an overflow or underflow occurs |
| *x* set *b,e* | Set field in *x*, to all 1s specified by b (beginning bit) and e (ending bit) |
| lmb0(x) | Leftmost 0 bit search of x |
| lmb1(x) | Leftmost 1 bit search of x |
| norm(x) | Leftmost nonredundant sign bit of x |
| Symbol | Meaning |
| abs(x) | Absolute value of x |
| and | Bitwise AND |
| bi | Select bit i of source/destination b |
| bit_count | Count the number of bits that are 1 in a specified byte |
| bit_reverse | Reverse the order of bits in a 32-bit register |
| byte0 | 8-bit value in the least significant byte position in 32-bit register (bits 0-7) |
| byte1 | 8-bit value in the next to least significant byte position in 32-bit register (bits 8-15) |
| byte2 | 8-bit value in the next to most significant byte position in 32-bit register (bits 16-23) |
| byte3 | 8-bit value in the most significant byte position in 32-bit register (bits 24-31) |
| bv2 | Bit Vector of two flags for s2 or u2 data type |
| bv4 | Bit Vector of four flags for s4 or u4 data type |
| cond | Check for either creg equal to 0 or creg not equal to 0 |
| creg | 3-bit field specifying a conditional register |
| cstn | n-bit constant field (for example, cst5) |
| dst_h or dst_o | msb32 of dst (placed in odd register of 64-bit register pair) |
| dst_l or dst_e | lsb32 of dst (place in even register of a 64-bit register pair) |
| dws4 | Four packed signed 16-bit integers in a 64-bit register pair |
| dwu4 | Four packed unsigned 16-bit integers in a 64-bit register pair |
| gmpy | Galois Field Multiply |
| i2 | Two packed 16-bit integers in a single 32-bit register |
| i4 | Four packed 8-bit integers in a single 32-bit register |
| int | 32-bit integer value |
| lsbn or LSBn | n least significant bits (for example, l sb16) |
| msbn or MSBn | n most significant bits (for example, msb16) |
| nop | No operation |
| or | Bitwise OR |
| R | Any general-purpose register |

Table 9. (continued)

| Instruction Operation and Execution Notations | |
|---|---|
| Symbol | Meaning |
| rotl | Rotate left |
| sat | Saturate |
| sbyte0 | Signed 8-bit value in the least significant byte position in 32-bit register (bits 0-7) |
| sbyte1 | Signed 8-bit value in the next to least significant byte position in 32-bit register (bits 8-15) |
| sbyte2 | Signed 8-bit value in the next to most significant byte position in 32-bit register (bits 16-23) |
| sbyte3 | Signed 8-bit value in the most significant byte position in 32-bit register (bits 24-31) |
| scstn | Signed n-bit constant field (for example, scst7) |
| se | Sign-extend |
| sint | Signed 32-bit integer value |
| slsb16 | Signed 16-bit integer value in lower half of 32-bit register |
| smsbl6 | Signed 16-bit integer value in upper half of 32-bit register |
| s2 | Two packed signed 16-bit integers in a single 32-bit register |
| s4 | Four packed signed 8-bit integers in a single 32-bit register |
| sllong | Signed 64-bit integer value |
| ubyte0 | Unsigned 8-bit value in the least significant byte position in 32-bit register (bits 0-7) |
| ubyte1 | Unsigned 8-bit value in the next to least significant byte position in 32-bit register (bits 8-15) |
| ubyte2 | Unsigned 8-bit value in the next to most significant byte position in 32-bit register (bits 16-23) |
| ubyte3 | Unsigned 8-bit value in the most significant byte position in 32-bit register (bits 24-31) |
| ucstn | n-bit unsigned constant field (for example, ucst5) |
| uint | Unsigned 32-bit integer value |
| ullong | Unsigned 64-bit integer value |
| ulsb16 | Unsigned 16-bit integer value in lower half of 32-bit register |
| umsb16 | Unsigned 16-bit integer value in upper half of 32-bit register |
| u2 | Two packed unsigned 16-bit integers in a single 32-bit register |
| u4 | Four packed unsigned 8-bit integers in a single 32-bit register |
| xi2 | Two packed 16-bit integers in a single 32-bit register that can optionally use cross path |
| xi4 | Four packed 8-bit integers in a single 32-bit register that can optionally use cross path |
| xsint | Signed 32-bit integer value that can optionally use cross path |
| xs2 | Two packed signed 16-bit integers in a single 32-bit register that can optionally use cross path |
| xs4 | Four packed signed 8-bit integers in a single 32-bit register that can optionally use cross path |
| xuint | Unsigned 32-bit integer value that can optionally use cross path |
| Symbol | Meaning |
| xu2 | Two packed unsigned 16-bit integers in a single 32-bit register that can optionally use cross path |
| xu4 | Four packed unsigned 8-bit integers in a single 32-bit register that can optionally use cross path |
| → | Assignment |
| + | Addition |
| ++ | Increment by one |

Table 9. (continued)

| Instruction Operation and Execution Notations | |
|---|---|
| Symbol | Meaning |
| x | Multiplication |
| - | Subtraction |
| > | Greater than |
| < | Less than |
| << | Shift left |
| >> | Shift right |
| >= | Greater than or equal to |
| <= | Less than or equal to |
| == | Equal to |
| ~ | Logical Inverse |
| & | Logical And |

Table 10 defines the mapping between instructions and functional units for a set of basic instructions included in a DSP described in U.S. Patent Serial No. 09/012,813 (TI-25311, incorporated herein by reference). Table 11 defines a mapping between instructions and functional units for a set of extended instructions in an embodiment of the present invention. Alternative embodiments of the present invention may have different sets of instructions and functional unit mapping. Tables 10 and 11 are illustrative and are not exhaustive or intended to limit various embodiments of the present invention.

Table 10.

| Instruction to Functional Unit Mapping of Basic Instructions | | | |
|---|---|---|---|
| .L Unit | .M Unit | .S Unit | .D Unit |
| ABS | MPY | ADD | ADD |
| ADD | SMPY | ADDK | ADDA |
| AND | | ADD2 | LD mem |
| CMPEQ | | AND | LD mem (15-bit offset) (D2 only) |
| CMPGT | | B disp | MV |
| CMPGTU | | B IRP | NEG |
| CMPLT | | B NRP | ST mem |
| CMPLTU | | B reg | ST mem (15-bit offset) (D2 only) |
| LMBD | | CLR | SUB |
| MV | | EXT | SUBA |
| NEG | | EXTU | ZERO |
| NORM | | MVC | |
| NOT | | MV | |
| OR | | MVK | |
| SADD | | MVKH | |
| SAT | | NEG | |
| SSUB | | NOT | |

Table 10. (continued)

| Instruction to Functional Unit Mapping of Basic Instructions | | | |
|---|---|---|---|
| .L Unit | .M Unit | .S Unit | .D Unit |
| SUB | | OR | |
| SUBC | | SET | |
| XOR | | SHL | |
| ZERO | | SHR | |
| | | SHRU | |
| | | SSHL | |
| | | STP (S2 only) | |
| | | SUB | |
| | | SUB2 | |
| | | XOR | |
| | | ZERO | |

Table 11.

| Instruction to Functional Unit Mapping of Extended Instructions | | | |
|---|---|---|---|
| .L unit | .M unit | .S unit | .D unit |
| ABS2 | AVG2 | ADD2 | ADD2 |
| ADD2 | AVGU4 | ADDKPC | AND |
| ADD4 | BITC4 | AND | ANDN |
| AND | BITR | ANDN | LDDW |
| ANDN | DEAL | BDEC | LDNDW |
| MAX2 | DOTP2 | BNOP | LDNW |
| MAXU4 | DOTPN2 | BPOS | MVK |
| MIN2 | DOTPNRSU2 | CMPEQ2 | OR |
| MINU4 | DOTPNRUS2<br>DOTPRSU2 D<br>OTPRUS2 | CMPEQ4<br>CMPGT2<br>CMPGTU4 | STDW |
| MVK | DOTPSU4<br>DOTPUS4 | CMPLT2 | STNDW |
| OR | DOTPU4 | CMPLTU4 | STNW |
| PACK2 | GMPY4 | MVK | SUB2 |
| PACKH2 | MPY2 | OR | XOR |
| PACKH4 | MPYHI | PACK2 | |
| PACKHL2 | MPYHIR<br>MPYIH<br>MPYIHR | PACKH2 | |
| PACKL4 | MPYIL<br>MPYILR<br>MPYLI | PACKHL2 | |
| PACKLH2 | MPYLIR | PACKLH2 | |

Table 11. (continued)

| Instruction to Functional Unit Mapping of Extended Instructions | | | |
|---|---|---|---|
| .L unit | .M unit | .S unit | .D unit |
| SHLMB | MPYSU4<br>MPYUS4 | SADD2 | |
| SHRMB | MPYU4 | SADDU4 | |
| SUB2 | MVD | SADDSU2<br>SADDUS2 | |
| SUB4 | ROTL | SHLMB | |
| SUBABS4 | SHFL | SHR2 | |
| SWAP2 | SMPY2 | SHRMB | |
| .L unit | .M unit | .S unit | .D unit |
| SWAP4 | SSHVL | SHRU2 | |
| UNPKHU4 | SSHVR | SPACK2 | |
| UNPKLU4 | XPND2 | SPACKU4 | |
| XOR | XPND4 | SUB2 | |
| | | SWAP2 | |
| | | UNPKHU4 | |
| | | UNPKLU4 | |
| | | XOR | |

The DSP's opcode map is shown in Figures 8A-8J. Refer to Table 9 and the instruction descriptions later herein for explanations of the field syntaxes and values. An instruction syntax is used to describe each instruction. The opcode map breaks down the various bit fields that make up each instruction. There are certain instructions that can be executed on more than one functional unit, as was shown in Table 11. The syntax specifies the functional unit and various resources used by an instruction, typically as follows:

EXAMPLE (.unit) src, dst

The following are examples of what the syntax looks like for the ADD instruction:

1) ADD (.unit) *src1, src2, dst*
2) ADDU (.unit) *src1, src2, dst*
3) ADD (.unit) *src2, src1, dst*
unit = .L1, .L2, .S1, .S2, .D1, .D2

*src* and *dst* indicate source and destination respectively. The *(.unit)* dictates which functional unit the instruction is mapped to (.L1, .L2, .S1, .S2, .M1, .M2, .D1, or .D2). This instruction has three opcode map fields: *src1*, *src2*, and *dst.* The condition is controlled by a 3-bit *(creg)* field specifying a register to be tested, and a 1-bit field (*z*) specifying a test for zero or nonzero, as shown in Figures 3A-3J. The four MSBs of every opcode are *creg* and *z*. The specified register is tested at the beginning of the El pipeline stage for all instructions. The pipeline is described later herein. If *z* = 1, the test is for equality with zero. If *z* = 0, the test is for nonzero. The case of condition register field (*creg*) = 0 and *z* = 0 is treated as always true to allow instructions to be executed unconditionally. The *creg* register field is encoded as shown in Table 12.

Table 12.

| Registers That Can Be Tested by Conditional Operations | | | | |
|---|---|---|---|---|
| *Creg* | | | z | Register Tested |
| 31 | 30 | 29 | 28 | |
| 0 | 0 | 0 | 0 | Unconditional. |
| 0 | 0 | 0 | 1 | Reserved: When selected this indicates a SWBP instruction |
| 0 | 0 | 1 | z | B0 |
| 0 | 1 | 0 | z | B1 |
| 0 | 1 | 1 | z | B2 |
| 1 | 0 | 0 | z | |
| 1 | 0 | 0 | z | A1 |
| 1 | 0 | 1 | z | A2 |
| 1 | 1 | x | x | Reserved |

Notes : x is don't care for reserved cases.

Conditional instructions are represented by "[ ]" surrounding the condition register. The following execute packet contains two ADD instructions in parallel. The first ADD is conditional on B0 being non-zero. The second ADD is conditional on B0 being zero. '!' indicates the 'not' of the condition.

```
        [B0] ADD      .L1      A1,A2,A3
||    [!B0]    ADD      .L2      B1,B2,B3
```

The above instructions are mutually exclusive. This means that only one will execute.

If they are scheduled in parallel, mutually exclusive instructions must still follow all resource constraints mentioned later herein.

If mutually exclusive instructions share any resources as described later herein, they cannot be scheduled in parallel (put in the same execute packet), even though only one will end up executing.

The execution of instructions can be defined in terms of delay slots. Table 13 shows the types of instructions, how many delay slots each type instruction has, and the execute phases it uses. The number of delay slots is equivalent to the number of cycles required after the source operands are read for the result to be available for reading. For a single-cycle type instruction (such as CMPGT2), source operands read in cycle i produce a result that can be read in cycle i + 1. For a two-cycle instruction (such as AVGU4), source operands read in cycle i produce a result that can be read in cycle i + 2. For a four-cycle instruction (such as DOTP2), source operands read in cycle i produce a result that can be read in cycle i + 4. Table 13 shows the number of delay slots associated with each type of instruction.

Delay slots are equivalent to an execution or result latency. All of the additional instructions have a functional unit latency of 1. This means that a new instruction can be started on the functional unit every cycle. Single-cycle throughput is another term for single-cycle functional unit latency.

Table 13.

| Delay Slot and Functional Unit Latency Summary | | | | | |
|---|---|---|---|---|---|
| Instruction Type | Delay Slots | Function al Unit Latency | Read Cycles ψ | Write Cycles ψ | Branch Taken ψ |
| NOP (no operation) | 0 | 1 | | | |
| Store | 0 | 1 | i | i | |
| Single cycle | 0 | 1 | i | i | |

ψ Cycle i is in the E1 pipeline phase.

Table 13. (continued)

| Delay Slot and Functional Unit Latency Summary | | | | | |
|---|---|---|---|---|---|
| Instruction Type | Delay Slots | Function al Unit Latency | Read Cycles ψ | Write Cycles ψ | Branch Taken ψ |
| Two cycle | 1 | 1 | i | i + 1 | |
| Multiply (16x16) | 1 | 1 | i | i + 1 | |
| Four cycle | 3 | 1 | i | i + 3 | |
| Load | 4 | 1 | i | i, i + 4β | |
| Branch | 5 | 1 | i ϕ | | i + 5 |

ψ Cycle i is in the E1 pipeline phase.

β For loads, any address modification happens in cycle i. The loaded data is written into the register file in cycle i + 4.

ϕ The branch to label, branch to IRP, and branch to NRP instructions do not read any general purpose registers.

Instructions are always fetched eight at a time. This constitutes a *fetch packet.* The basic format of a fetch packet is shown in Figure 9A. The execution grouping of the fetch packet is specified by the *p*-bit, bit zero, of each instruction. Fetch packets are 8-word aligned.

The *p* bit controls the parallel execution of instructions. The *p* bits are scanned from left to right (lower to higher address). If the *p* bit of instruction *i* is 1, then instruction *i* +1 is to be executed in parallel with (in the same cycle as) instruction *i*. If the p-bit of instruction *i* is 0, then instruction *i* + 1 is executed in the cycle after instruction *i*. All instructions executing in parallel constitute an *execute packet.* An execute packet can contain up to eight instructions. All instructions in an execute packet must use a unique functional unit.

Figure 16A is an illustration of fetch packets and execution packets in a prior art processor. If an execution packet did not fit evenly within a fetch packet, NOP instructions were inserted in the instruction stream to pad out the fetch packet. For example, in Figure 16A, execution packet E3 cannot fit in the four-word space directly after execution packet E2, therefore four NOP instructions are inserted in the instruction sequence to pad out the fetch packet.

Figure 16B is an illustration of execution packets spanning fetch packets for the processor of Figure 1. Advantageously, in the present embodiment of processor 10, an execution packet can cross an eight-word fetch packet boundary, thereby eliminating a need to add NOP instructions to pad fetch packets. For example, eight-word execution packet EP1 completely occupies fetch packet 1600. Four-word execution packet EP2 partially fills fetch packet 1602. Six-word execution packet EP3 does not fit completely within fetch packet 1602, however, the first four words 1621, 1622, 1623 and 1624 are placed in fetch packet 1602 and the last two words 1625, 1626 are placed in fetch packet 1604. Therefore, the last *p* bit in a fetch packet is not always set to 0. If the last p-bit of a fetch packet is not zero, then instruction fetch control circuitry in stage 10a (Figure 1) fetches a second fetch packet and extracts instruction words until a p bit set to 0 is encountered. This sequence of instruction words is then ordered into a single execution packet, such as execution packet EP3, for example.

The following examples illustrate the conversion of a *p*-bit sequence into a cycle-by-cycle execution stream of instructions. There are three types of *p*-bit patterns for fetch packets. These three *p*-bit patterns result in the following execution sequences for the eight instructions: fully serial; fully parallel; or partially serial. These three sequences of execution are explained more fully below.

The fully serial *p*-bit pattern depicted in Figure 9B results in this execution sequence is illustrated in Table 14.

Table 14.

| Fully Serial *p*-bit Pattern Execution Sequence | |
|---|---|
| Cycle | Instructions |
| 1 | A |
| 2 | B |
| 3 | C |
| 4 | D |
| 5 | E |
| 6 | F |

Table 14. (continued)

| Fully Serial *p*-bit Pattern Execution Sequence | |
|---|---|
| Cycle | Instructions |
| 7 | G |
| 8 | H |

The eight instructions are executed sequentially.

The fully parallel *p*-bit pattern depicted in Figure 9C results in this execution sequence is illustrated in Table 15.

Table 15.

| Fully Parallel *p*-bit Pattern Execution Sequence | | | | | | | | |
|---|---|---|---|---|---|---|---|---|
| Cycle | Instructions | | | | | | | |
| 1 | A | B | C | D | E | F | G | H |

All eight instructions are executed in parallel.

The partially serial *p*-bit pattern depicted in Figure 9D results in this execution sequence is illustrated in Table 16.

Table 16.

| Partially Serial p-bit Pattern Execution Sequence | | | |
|---|---|---|---|
| Cycle | Instructions | | |
| 1 | A | | |
| 2 | B | | |
| 3 | C | D | E |
| 4 | F | G | H |

Note that the instructions C, D, and E do not use any of the same functional units, cross paths, or other data path resources. This is also true for instructions F, G, and H.

The | | characters signify that an instruction is to execute in parallel with the previous instruction. In the previous partially serial example, the code would be represented as this:

| | | |
|---|---|---|
| | instruction | A |
| | instruction | B |
| | instruction | C |
| \| \| | instruction | D |
| \| \| | instruction | E |
| | instruction | F |
| \| \| | instruction | G |
| \| \| | instruction | H |

If a branch into the middle of an execution packet occurs, all instructions at lower addresses are ignored. In the partially serial example, if a branch to the address containing instruction D occurs, then only D and E will execute. Even though instruction C is in the same execute packet, it is ignored. Instructions A and B are also ignored because they are in earlier execute packets.

Addressing Modes

The addressing modes are linear, circular using BKO, and circular using BK1. The mode is specified by the addressing mode register (AMR).

Eight registers can perform circular addressing. A4-A7 are used by the .D1 unit and B4-B7 are used by the .

D2 unit. No other units can perform circular addressing modes. For each of these registers, the AMR specifies the addressing mode.

The following instructions all use the AMR to determine what type of address calculations are performed for these registers: The LDB(U)/LDH(U)/LDW, STB/STH/STW, LDNDW, LDNW, STNDW, STNW, LDDW, STDW, ADDAB/ ADDAH/ADDAW/ADDAD, and SUBAB/SUBAH/ SUBAW. There is no SUBAD instruction. All registers can perform linear mode addressing.

Linear mode addressing operates as follows with LD/ST Instructions: linear mode simply shifts the *offsetR/ cst* operand to the left by 3, 2, 1, or 0 for double word, word, half-word, or byte access respectively and then performs an add or subtract *to baseR,* (depending on the operation specified). For the preincrement, pre-decrement, positive offset, and negative offset address generation options, the result of the calculation is the address to be accessed in memory. For post-increment or postdecrement addressing, the value of baseR before the addition or subtraction is the address to be accessed from memory. Address modes are specified by a mode field (see Figure 8E) and listed in Table 17. The increment/decrement mode controls whether the updated address is written back to the register file. Otherwise, it is rather similar to offset mode. The pre-increment and offset modes differ only in whether the result is written back to "base". The post-increment mode is similar to pre-increment (e.g. the new address is written to "base"), but differs in that the old value of "base" is used as the address for the access. The same applies for negative offset vs. decrement mode.

Linear mode addressing operates as follows with ADDA/SUBA Instructions: linear mode simply shifts *src1/cst* operand to the left by 3, 2, 1, or 0 for double word, word, halfword, or byte access respectively and then performs an add or subtract, (depending on the operation specified).

Table 17 -

| Address Generator Options | | |
|---|---|---|
| Mode Field | Syntax | Modification Performed |
| 0 1 0 1 | *+R[ offsetR] | Positive offset; addr = base + offset * scale |
| 0 1 0 0 | *-R[ offsetR] | Negative offset; addr = base - offset * scale |
| 1 1 0 1 | *++R[ offsetR] | Preincrement; addr = base + offset * scale; base = addr |
| 1 1 0 0 | *--R[ offsetR] | Predecrement; addr = base - offset * scale; base = addr |
| 1 1 1 1 | *R++[ offsetR] | Postincrement; addr = base; base = base + offset * scale |
| 1 1 1 0 | *R--[offsetR] | Postdecrement; addr = base; base = base - offset * scale |
| 0 0 0 1 | *+R[ ucst5] | Positive offset; addr = base + offset * scale |
| 0 0 0 0 | *-R[ ucst5] | Negative offset; addr = base - offset * scale |
| 1 0 0 1 | *++R[ ucst5] | Preincrement; addr = base + offset * scale; base = addr |
| 1 0 0 0 | *- -R[ ucst5] | Predecrement; addr = base - offset * scale; base = addr |
| 1 0 1 1 | *R++[ ucst5] | Postincrement; addr = base; base = base + offset * scale |
| 1 0 1 0 | *R- -[ ucst5] | Postdecrement; addr = base; base = base - offset * scale |

Circular mode addressing uses the BK0 and BK1 fields in the AMR to specify block sizes for circular addressing. Circular mode addressing operates as follows with LD/ST Instructions: after shifting *offsetR/cst* to the left by 3, 2, 1, or 0 for LDDW, LDW, LDH, or LDB respectively, and is then added to or subtracted from baseR to produce the final address. This add or subtract is performed by only allowing bits N through 0 of the result to be updated, leaving bits 31 through N+1 unchanged after address arithmetic. The resulting address is bounded to 2^(N+1) range, regardless of the size of the offsetR/cst.

As mentioned before, the circular buffer size in the AMR is not scaled; for example: a size of 8 is 8 bytes, not 8 x size of (type). So, to perform circular addressing on an array of 8 words, a size of 32 should be specified, or N = 4. Table 18 shows an LDW performed with register A4 in circular mode, with BK0 = 4, so the buffer size is 32 bytes, 16 halfwords, or 8 words. The value put in the AMR for this example is 00040001h.

Table 18. LDW in Circular Mode

| LDW .D1 *++A4[9],A1 | | | | | |
|---|---|---|---|---|---|
| Before LDW | | 1 cycle after LDW | | 5 cycles after LDW | |
| A4 | 0000 0100h | A4 | 0000 0104h | A4 | 0000 0104h |
| | | | | | |
| A1 | XXXX XXXXh | A1 | XXXX XXXXh | A1 | 1234 5678h |
| Mem 104h | 1234 5678h | mem 104 h | 1234 5678h | mem 104h | 1234 5678h |

Note: 9h words is 24h bytes. 24h bytes is 4 bytes beyond the 32-byte (20h) boundary 100h-11Fh; thus, it is wrapped around to (124h - 20h = 104h).

Circular mode addressing operates as follows with ADDA/SUBA Instructions: after shifting *srcl/cst* to the left by 3, 2, 1, or 0 for ADDAD, ADDAW, ADDAH, or ADDAB respectively, and is then added to or subtracted from baseR to produce the final address. This add or subtract is performed by only allowing bits N through 0 of the result to be updated, leaving bits 31 through N+1 unchanged after address arithmetic. The resulting address is bounded to 2^(N+1) range, regardless of the size of the offsetR/cst.

As mention before, the circular buffer size in the AMR is not scaled, for example: a size of 4 is 4 bytes, not 4 x size of (type). So, to perform circular addressing on an array of 8 words, a size of 32 should be specified, or N = 4. Table 19 shows an ADDAH performed with register A4 in circular mode, with BKO = 4, so the buffer size is 32 bytes, 16 halfwords, or 8 words. The value put in the AMR for this example is 0004 0001h.

Table 19.

| ADDAH in Circular Mode | | | | |
|---|---|---|---|---|
| ADDAH .D1 A4,A1,A4 | | | | |
| Before ADDAH | | | 1 cycle after ADDAH | |
| A4 | 0000 0100h | | A4 | 0000 0106h |
| | | | | |
| A1 | 0000 0013h | | A1 | 0000 0013h |

13h halfwords is 26h bytes. 26h bytes is 6 bytes beyond the 32-byte (20h) boundary 100h-11Fh; thus, it is wrapped around to (126h - 20h = 106h).

Non-Aligned Memory Access Considerations

Circular addressing may be used with non-aligned accesses. When circular addressing is enabled, address updates and memory accesses occur in the same manner as for the equivalent sequence of byte accesses. The only restriction is that the circular buffer size be at least as large as the data size being accessed. Non-aligned access to circular buffers that are smaller than the data being read will cause undefined results.

Non-aligned accesses to a circular buffer apply the circular addressing calculation to *logically adjacent* memory addresses. The result is that non-aligned accesses near the boundary of a circular buffer will correctly read data from both ends of the circular buffer, thus seamlessly causing the circular buffer to "wrap around" at the edges.

Figures 10A and 10B illustrate aspects of non-aligned address formation and non-aligned data extraction from a circular buffer region, according to an aspect of the present invention. Consider, for example, a circular buffer 500 that has a size of 16 bytes illustrated in Figure 10A. A circular buffer of this size is specified by setting either BK0 or BK1 to "00011." For example with register A4 in circular mode and BKO =3, the buffer size is 16 bytes, 8 half words, or 4 words. The value put in the AMR for this example is 00030001h. The buffer starts at address 0x0020 (502) and ends at 0x002F (504). The register A4 is initialized to the address 0x0028, for example; however, the buffer could be located at other places in the memory by setting more significant address bits in register A4. Below the buffer at address 0x1F (506) and above the buffer at address 0x30 (508) data can be stored that is not relevant to the buffer.

The effect of circular buffering is to make it so that memory accesses and address updates in the 0x20 - 0x2F range stay completely inside this range. Effectively, the memory map behaves as illustrated in Figure 5B. Executing a LDW instruction with an offset of 1 in post increment mode will provide an address of 0x0028 (511) and access word 510, for example. Executing the instruction a second time will provide an address of 0x002C (513) and access word 512 at the end of the circular buffer. Executing the instruction a third time will provide an address of 0x0020 (502a) and access word 514. Note that word 514 actually corresponds to the other end of the circular buffer, but was accessed by incrementing the address provided by the LDW instruction.

Table 20 shows an LDNW performed with register A4 in circular mode and BK0 = 3, so the buffer size is 16 bytes, 8 half words, or 4 words. The value put in the AMR for this example is 00030001h. The buffer starts at address 0x0020 and ends at 0x002F. The register A4 is initialized to the address 0x002A.

Table 20. LDNW in Circular Mode

| LDNW .D1 *++A4[2],A1 | | | | | | | | |
|---|---|---|---|---|---|---|---|---|
| | Before LDW | | | 1 cycle after LDW | | | 5 cycles after LDW | |
| | A4 | 0000 002Ah | | A4 | 0000 0022h | | A4 | 0000 00022h |
| | | | | | | | | |
| | A1 | XXXX XXXXh | | A1 | XXXX XXXXh | | A1 | 5678 9ABCh |
| Mem 0022h | | 5678 9ABCh | | mem 0022h | 5678 9ABCh | | mem 0022h | 5678 9ABCh |

2h words is 8h bytes. 8h bytes is 3 bytes beyond the 16 byte (10h) boundary starting at address 002Ah; thus, it is wrapped around to 0022h (002Ah + 8h = 0022h).

## Pipeline Operation

The DSP pipeline has several key features which improve performance, decrease cost, and simplify programming. They are: increased pipelining eliminates traditional architectural bottlenecks in program fetch, data access, and multiply operations; control of the pipeline is simplified by eliminating pipeline interlocks; the pipeline can dispatch eight parallel instructions every cycle; parallel instructions proceed simultaneously through the same pipeline phases; sequential instructions proceed with the same relative pipeline phase difference; and load and store addresses appear on the CPU boundary during the same pipeline phase, eliminating read-after-write memory conflicts.

A multi-stage memory pipeline is present for both data accesses and program fetches. This allows use of high-speed synchronous memories both on-chip and off-chip, and allows infinitely nestable zero-overhead looping with branches in parallel with other instructions.

There are no internal interlocks in the execution cycles of the pipeline, so a new execute packet enters execution every CPU cycle. Therefore, the number of CPU cycles for a particular algorithm with particular input data is fixed. If during program execution, there are no memory stalls, the number of CPU cycles equals the number of clock cycles for a program to execute.

Performance can be inhibited by stalls from the memory system, stalls for cross path dependencies, or interrupts. The reasons for memory stalls are determined by the memory architecture. Cross path stalls are described in detail in U.S. Patent Serial No. _______________ (TI-30563), to Steiss, et al and is incorporated herein by reference. To fully understand how to optimize a program for speed, the sequence of program fetch, data store, and data load requests the program makes, and how they might stall the CPU should be understood.

The pipeline operation, from a functional point of view, is based on CPU cycles. A CPU cycle is the period during which a particular execute packet is in a particular pipeline stage. CPU cycle boundaries always occur at clock cycle boundaries; however, stalls can cause CPU cycles to extend over multiple clock cycles. To understand the machine state at CPU cycle boundaries, one must be concerned only with the execution phases (E1-E5) of the pipeline. The phases of the pipeline are shown in Figure 11 and described in Table 21.

Table 21.

| Pipeline Phase Description | | | | |
|---|---|---|---|---|
| Pipeline | Pipeline Phase | Symb ol | During This Phase | Instruction Types Completed |
| Program Fetch | Program Address Generate | PG | Address of the fetch packet is determined. | |
| | Program Address Send | PS | Address of fetch packet is sent to memory. | |
| | Program Wait | PW | Program memory access is performed. | |
| | Program Data Receive | PR | Fetch packet is expected at CPU boundary. | |
| Program Decode | Dispatch | DP | Next execute packet in fetch packet determined and sent to the appropriate functional units to be decoded. | |
| | Decode | DC | Instructions are decoded at functional units. | |
| Execute | Execute 1 | E1 | For all instruction types, conditions for instructions are evaluated and operands read. Load and store instructions: address generation is computed and address modifications written to register file† Branch instructions: affects branch fetch packet in PG phase† Single-cycle instructions: results are written to a register file† | Single-cycle |

†This assumes that the conditions for the instructions are evaluated as true. If the condition is evaluated as false, the instruction will not write any results or have any pipeline operation after E1.

Table 21. (continued)

| Pipeline Phase Description | | | | |
|---|---|---|---|---|
| Pipeline | Pipeline Phase | Symb ol | During This Phase | Instruction Types Completed |
| | Execute 2 | E2 | Load instructions: address is sent to memory† Store instructions and STP: address and data are sent to memory† Single-cycle instructions that saturate results set the SAT bit in the Control Status Register (CSR) if saturation occurs. † Multiply instructions: results are written to a register file† | Stores STP Multiplies |
| | Execute 3 | E3 | Data memory accesses are performed. Any multiply instruction that saturates results sets the SAT bit in the Control Status Register (CSR) if saturation occurs. † | |
| | Execute 4 | E4 | Load instructions: data is brought to CPU boundary† | |
| | Execute 5 | E5 | Load instructions: data is loaded into register† | Loads |

†This assumes that the conditions for the instructions are evaluated as true. If the condition is evaluated as false, the instruction will not write any results or have any pipeline operation after E1.

Referring again to Figure 11 and Figure 1, the instruction execution pipeline of processor 10 involves a number of discrete stages, generally demarcated by temporary latches or registers to pass the results of one stage to the next. Instruction pipeline phases PG, PS, PW, and PR all involve instruction fetching and are embodied in program fetch circuit 10 in association with program memory subsystem 23. Pipeline phases DP and DC involve instruction decoding; phase DP is embodied in dispatch circuitry 10b, while pipeline phase DC is embodied in decode circuitry 10c. The execution phases E1-E5 are embodied in stages embodied within each functional unit L, S, M and D. For example, the D units embody all five execute stage in association with memory subsystem 22. Other of the functional units do not embody all five execution phase, but only what is required for the instruction types that are executed by a particular functional unit.

As discussed earlier, the execution of instructions can be defined in terms of delay slots as shown in Table 22. A delay slot is a CPU cycle that occurs after the first execution phase (El) of an instruction in which results from the instruction are not available. For example, a multiply instruction has 1 delay slot, this means that there is 1 CPU cycle before another instruction can use the results from the multiply instruction.

Table 22.

| Delay Slot Summary | | |
|---|---|---|
| Instruction Type | Delay Slots | Execute Stages Used |
| Branch (The cycle when the target enters E1) | 5 | E1-branch target E1 |
| Load (LD) (Incoming Data) | 4 | E1 - E5 |

Table 22. (continued)

| Delay Slot Summary | | |
|---|---|---|
| Instruction Type | Delay Slots | Execute Stages Used |
| Load (LD) (Address Modification) | 0 | E1 |
| Multiply | 1 | E1 - E2 |
| Single-cycle | 0 | E1 |
| Store | 0 | E1 |
| NOP (no execution pipeline operation) | - | - |
| STP (no CPU internal results written) | - | - |

Single cycle instructions execute during the E1 phase of the pipeline. The operand is read, operation is performed and the results are written to a register all during E1. These instructions have no delay slots.
Multiply instructions complete their operations during the E2 phase of the pipeline. In the E1 phase, the operand is read and the multiply begins. In the E2 phase, the multiply finishes, and the result is written to the destination *(dst)* register. Multiply instructions have 1 delay slot.
Load instructions have two results: data loaded from memory and address pointer modification.
Data loads complete their operations during the E5 phase of the pipeline. In the E1 phase, the address of the data is computed. In the E2 phase, the data address is sent to data memory. In the E3 phase, a memory read is performed. In the E4 stage, the data is received at the CPU core boundary. Finally, in the E5 phase, the data is loaded into a register. Because data is not written to the register until E5, these instructions have 4 delay slots. Because pointer results are written to the register in E1, there are no delay slots associated with the address modification.
Store instructions complete their operations during the E3 phase of the pipeline. In the E1 phase, the address of the data is computed. In the E2 phase, the data address is sent to data memory. In the E3 phase, a memory write is performed. The address modification is performed in the E1 stage of the pipeline. Even though stores finish their execution in the E3 phase of the pipeline, they have no delay slots and follow the following rules ( *i* = cycle):

1) When a load is executed before a store, the old value is loaded and the new value is stored.
2) When a store is executed before a load, the new value is stored and the new value is loaded.
3) When the instructions are in are in parallel, the old value is loaded and the new value is stored.

Branch instructions execute during the E1 phase of the pipeline five delay slots/CPU cycles after the branch instruction enters an initial E1 phase of the pipeline. Figure 12 shows the branch instruction phases. Figure 13 shows the operation of the pipeline based on clock cycles and fetch packets. In Figure 13, if a branch is in fetch packet n, then the E1 phase of the branch is the PG phase of n+6. In cycle 7 n is in the E1 phase and n+6 is in the PG phase. Because the branch target is in PG on cycle 7, it will not reach E1 until cycle 13. Thus, it appears as if the branch takes six cycles to execute, or has five delay slots.
In Figure 14, fetch packet n, which contains three execute packets, is shown followed by six fetch packets (n+1 through n+6), each with one execution packet (containing 8 parallel instructions). The first fetch packet (n) goes through the program fetch phases during cycles 1-4. During these cycles a program fetch phase is started for each of the following fetch packets.
In cycle 5, the program dispatch (DP) phase, the CPU scans the p bits and detects that there are three execute packets (k thru k+2) in fetch packet n. This forces the pipeline to stall, which allows the DP phase to start execute packets k+1 and k+2 in cycles 6 and 7. Once execute packet k+2 is ready to move on to the DC phase (cycle 8) the pipeline stall is released.
The fetch packets n+1 through n+4 were all stalled so the CPU would have time to perform the DP phase for each of the three execute packets (k thru k+2) in fetch packet n. Fetch packet n+5 was also stalled in cycles 6 and 7; it was not allowed to enter the PG phase until after the pipeline stall was released in cycle 8. The pipeline will continue as shown with fetch packets n+5 and n+6 until another fetch packet containing multiple execution packets enters the DP phase, or an interrupt occurs.
Pipeline discontinuities are caused by memory stalls, multi-cycle NOPs, and the STP instruction. During a memory stall, the CPU cycle (which normally occurs during one clock cycle) occurs in two or more cycles. All of the pipeline phases stall during these extra clock cycles. The results of the program execution are identical with or without the stall. With a memory stall execution will take more clock cycles to finish.
The NOP count instruction provides count cycles of NOPs. If count> 2, the NOP is a multi-cycle NOP. A NOP 2 for example, fills in extra delay slots for the instructors in the execute packet it is contained in and for all previous execute packets. Thus, if a NOP 2 is in parallel with an MPY instruction, the MPY's results will be available for use by instructions in the next execute packet. If the delay slots of a branch complete while a multi-cycle NOP is still dispatching NOPs into the pipeline, the branch overrides the multi-cycle NOP and the branch target begins execution after 5 delay slots.

STP is an advanced instruction that can be used only when both these conditions are met: 1) it cannot contain a parallel branch instructor that would force a program fetch, and 2) no program fetch is happening because either its second delay slot contains a multi-cycle NOP, or its third and fourth delay slot execute packets are in the same fetch packet.

Memory System

DSP program memory system 23 includes 64K bytes of memory and a memory/cache controller. The program memory can operate as either a 64K byte internal program memory or as a direct mapped program cache. There are four modes under which the program memory system operates: program memory mode; cache enable mode; cache freeze mode; and cache bypass mode. The mode under which the program memory operates is determined by the program cache control (PCC) field (bits 5-7) in the CSR (Figure 4). Table 23 shows various PCC values for configuring program memory system 23.

Table 23.

| Program and Data Cache Fields | | | | |
|---|---|---|---|---|
| Bit Field Counter | Program Cache (PCC) | Data Cache Control (DCC) | Mode Name | Description |
| 000 | PCM | DCM | Cache mapped | Cache mapped into memory. Cache not updated. Cache not accessed (except as mapped into memory). Tags can either be invalidated automatically or invalidated by preceding or following flush (depending on cache implementation). |
| 001 | PCFL | DCFL | Cache flush | Entire cache invalidated. Cache bypassed for accesses. Cache not updated on accesses. |
| 010 | PCE | DCE | Cache enable | Cache accessed. Cache updated. |
| 011 | PCFR | DCFR | Cache freeze | Cache accessed on reads. Cache not updated on reads. Whether the cache is updated or invalidated on writes depends on the specific device. |

Table 23. (continued)

| Program and Data Cache Fields | | | | |
|---|---|---|---|---|
| Bit Field Counter | Program Cache (PCC) | Data Cache Control (DCC) | Mode Name | Description |
| 100 | PCB | DCB | Cache bypass | Cache not accessed. Cache not updated on reads. Write action is the same as for cache freeze. |
| 101 | Reserved | Reserved | | |
| 110 | Reserved | Reserved | | |
| 111 | Reserved | Reserved | | |

When the PCC field of the CSR contains the value 000b, the program memory is mapped as valid program memory space. The addresses that make up the program memory map depend on the value on the MAP_BOOT pin on the device.

Emulation Features

An aspect of the present invention involves novel and improved techniques for emulating the operation of DSP 1 in order to develop software programs or to test DSP 1 for correct operation. Portions of DSP 1 which relate to emulation will now be described in more detail.

Referring again to Figure 1, CPU 10 has emulation circuitry 50 and interrupt circuitry 90 to support the following emulation functions which will be described in more detail: execution and scan control through the test ports; analysis support; and real-time emulation support.

Execution and scan control through the test ports involves halting CPU 10. CPU Halt Support is provided in the following ways: A RDY-based CPU halt based on a software breakpoint (SWBP) or an analysis event.

Analysis support includes the following: a single, exact-match hardware program address breakpoint (PABP); analysis events which can be triggered by the EMUOIN or EMU1IN inputs from the Megamodule Test Access Port (MTAP), or by a program address breakpoint; and a Special Emulation Event input (SEE) which can trigger an analysis event.

Real-time emulation support includes message passing and a CPU Analysis Interrupt (AINT) based on a software interrupt, an analysis event, or the next cycle boundary.

Referring now to Figure 15, emulation circuitry 50 is illustrated in more detail. Megamodule Test Access Port (MTAP) 305 is connected to CPU test port (CPUTP) 310, analysis test port (ATP) 320, and Megamodule test port (ATP) 330. Three domains, CPU domain 10, analysis domain 321, and Megamodule domain 331 are interconnected with the test ports. MTAP 305 provides scan and execution control to the various domains within the megamodule. The test ports provide an interface for each domain to the MTAP. Test ports also generate, distribute, and perform clock switching functions for the functional and scan clocks on the megamodule. MTAP 305 provides an interface between XDS 51 and the CPU real-time analysis and message passing features. MTAP 305 provides data streaming for fast memory download/upload. MTAP 305 also supports performance analysis through an event counter and test port control of execution and clocking for both emulation and test. The operation and design of emulation circuitry 50, including MTAP 305 and test ports 310, 320 and 330 is described in greater detail in U.S. Patent Serial No. 08/974,630, (TI-24948), *Processor Test Port with Scan Chains and Data Streaming,* issued to D. Deao, et al, and is incorporated herein by reference.

Figure 17 is a block diagram of an alternative embodiment of a digital system 1700 with processor core 10 of Figure 1. A direct mapped program cache 1710, having 16 kbytes capacity, is controlled by L1 Program (L1P) controller 1711 and connected thereby to the instruction fetch stage 10a. A 2-way set associative data cache, having a 16 kbyte capacity, is controlled by L1 Data (L1D) controller 1721 and connected thereby to data units D1 and D2. An L2 memory 1730 having four banks of memory, 128 Kbytes total, is connected to L1P 1711 and to L1D 1721 to provide storage for data and programs. External memory interface (EMIF) 1750 provides a 64 bit data path to external memory, not shown, which provides memory data to L2 memory 1730 via extended direct memory access (DMA) controller 1740.

EMIF 1752 provides a 16 bit interface for access to external peripherals, not shown. Expansion bus 1770 provides host and I/O support similarly to host port 60/80 of Figure 1. Three multi-channel buffered serial ports (McBSP) 1760, 1762, 1764 are connected to DMA controller 1740. A detailed description of a McBSP is provided in U.S. Patent Serial No. 09/055,011 (TI-26204, Seshan, et al) and is incorporated herein reference.

Detailed Description of Extended Instructions

As discussed earlier, the set of extended instructions included in the present embodiment of the invention increases orthogonality of the instruction set, provides data flow enhancements with 8-bit and 16-bit extension, and provides instructions that reduce code size and increase register flexibility.

For example, there is an extensive collection of PACK and byte shift instructions to simplify manipulation of packed data types. A set of instructions is provided that operate directly on packed data to streamline data flow and increase instruction set efficiency. They are summarized in Table 24 below:

Table 24.

| Instruction for Operating Directly on Packed Data | | |
|---|---|---|
| Operation | Quad 8-bit | Paired 16-bit |
| Multiply | X | X |
| Multiply with Saturation | | X |
| Addition/Subtraction | X | X * |
| Addition with Saturation | X | X |
| Absolute Value | | X |
| Subtract with Absolute Value | X | |
| Compare | X | X |
| Shift | | X |
| Data Pack/Unpack | X | X |
| Data Pack with Saturation | X | X |
| Dot product with optional negate | X | X |
| Min/Max/Average | X | X |
| Bit-expansion (Mask generation) | X | X |

Table 25 contains a detailed description of each extended instruction of the improved Instruction Set Architecture (ISA).

Table 25 - Extended Instruction Set Description

| ABS2 |
|---|
| Absolute Value With Saturation, Signed Packed 16-bit: The absolute values of the upper and lower halves of the src2 operand are placed in the upper and lower halves of the dst. |

| |
|---|
| ADD4<br>Add Four 8-bit Pairs for Four 8-bit Results: The ADD4 instruction performs 2's-complement addition between packed 8-bit quantities. The values in src1 and src2 are treated as packed 8-bit data and the results are written in packed 8-bit format.<br>For each pair of packed 8-bit values found in src1 and src2, the sum between the 8-bit value from src1 and the 8-bit value from src2 is calculated to produce an 8-bit result. The result is placed in the corresponding positions in dst. No saturation is performed. The carry from one 8-bit add does not affect the add of any other 8-bit add. |
| ADDKPC<br>Add a Signed 7-bit Constant to Program Counter: In the ADDKPC instruction, a 7-bit signed constant is shifted 2 bits to the left , then added to the address of the first instruction of the fetch packet that contains the ADDKPC instruction (PCE1). The result is placed in the destination register. The 3-bit unsigned constant defines the number of parallel nops. This instruction helps reduce the number of instructions needed to set up the return address for a function call. |
| ANDN<br>Bit-Wise Logical AND Invert: In the ANDN instruction, a bitwise logical AND is performed between src1 and the bitwise logical inverse of src2. The result is placed in dst. |
| AVG2<br>Average, Signed Packed 16-bit: The AVG2 instruction performs an averaging operation on packed 16-bit data. For each pair of signed 16-bit values found in src1 and src2, AVG2 calculates the average of the two values and returns a signed 16-bit quantity in the corresponding position in the dst |

| |
|---|
| AVGU4<br>Average, Unsigned Packed 8-bit: The AVGU4 instruction performs an averaging operation on packed 8-bit data. The values in src1 and src2 are treated as unsigned packed 8-bit data and the results are written in unsigned packed 8-bit format. For each unsigned packed 8-bit values found in src1 and src2, AVGU4 calculates the average of the two values and returns an unsigned 8-bit quantity in the corresponding positions in the dst. |
| BDEC<br>Branch and Decrement: If the predication and decrement register (dst) is positive (greater than or equal to 0), the BDEC instruction performs a relative branch and decrements dst by one.<br>The instruction performs the relative branch using a 10-bit signed constant specified by the scst10. The constant is shifted 2 bits to the left, then added to the address of the first instruction of the fetch packet that contains the BDEC instruction (PCE1). The result is placed in the program fetch counter (PFC).<br>This instruction helps reduce the number of instructions needed to decrement a register and branch conditionally based upon that register's value. Note also that any register can be used which can free the predicate registers (A0-A2 and B0-B2) for other uses. |
| BITC4<br>Bit Count, Packed 8-bit: The BITC4 performs a bit-count operation on 8-bit quantities. The value in *src2* is treated as packed 8-bit data, and the result is written in packed 8-bit format. For each of the 8-bit quantities in *src2*, the count of the number of "1" bits in that value is written to the corresponding position in *dst*. |

| |
|---|
| BITR<br>Bit Reverse: The BITR instruction implements a bit-reversal. A bit-reversal function reverses the order of bits in a 32-bit word. In other words, bit 0 of the source becomes bit 31 of the result, bit 1 of the source becomes bit 30 of the result, bit 2 becomes bit 29, and so on. |
| BNOP<br>Branch Using a Displacement with NOP: The constant displacement form of the BNOP instruction performs a relative branch with NOPs. The instruction performs the relative branch using the 12-bit signed constant specified by src2. The constant is shifted 2 bits to the left, then added to the address of the first instruction of the fetch packet that contains the BNOP instruction (PCE1). The result is placed in the program fetch counter (PFC).<br>The 3-bit unsigned constant specified in src1, gives the number of delay slot NOPs to be inserted, from 0 to 5. With src1 = 0, no NOP cycles are inserted.<br>This instruction helps reduce the number of instructions to perform a branch when NOPs are required to fill the delay slots of a branch<br>The register form of the BNOP instruction performs an absolute branch with NOPs. The register specified in src2 is placed in the program fetch counter (PFC). |

| |
|---|
| BPOS<br>Branch Positive: If the predication register (dst) is positive (greater than or equal to 0), the BPOS instruction performs a relative branch. If dst is negative, the BPOS instruction takes no other action.<br>The instruction performs the relative branch using a 10-bit signed constant specified by the scst10. The constant is shifted 2 bits to the left, then added to the address of the first instruction of the fetch packet that contains the BPOS instruction (PCE1). The result is placed in the program fetch counter (PFC).<br>Note that any register can be used which can free the predicate registers (A0-A2 and B0-B2) for other uses. |
| CMPEQ2<br>Compare if Equal, Packed 16-bit: The CMPEQ2 instruction performs equality comparisons on packed 16-bit data. Each 16-bit value in *src1* is compared against the corresponding 16-bit value in *src2*, returning a 1 if equal or 0 if not equal. The equality results are packed into the two least-significant bits of *dst*. The result for the lower pair of values is placed in bit 0, and the results for the upper pair of values are placed in bit 1. The remaining bits of *dst* are set to 0. |

| |
|---|
| CMPEQ4<br>Compare if Equal, Packed 8-bit: The CMPEQ4 instruction performs equality comparisons on packed 8-bit data. Each 8-bit value in *src1* is compared against the corresponding 8-bit value in *src2*, returning a 1 if equal or 0 if not equal. The equality results are packed into the four least-significant bits of *dst*.<br>The 8-bit values in each input are numbered from 0 to 3 starting with the least-significant byte, working towards the most- significant byte. The comparison results for byte 0 are written to bit 0 of the result. Likewise, the results for byte 1 to 3 are written to bits 1 to 3 of the result, respectively, as shown in the diagram below. The remaining bits of *dst* are set to 0. |
| CMPGT2<br>Compare for Greater Than, Packed 16-bit: The CMPGT2 instruction performs greater than comparisons on signed packed 16-bit data. Each signed 16-bit value in *src1* is compared against the corresponding signed 16-bit value in *src2*, returning a 1 if src1 is greater than src2 or returning a 0 if it is not greater. The comparison results are packed into the two least-significant bits of *dst*. The result for the lower pair of values is placed in bit 0, and the results for the upper pair of values are placed in bit 1. The remaining bits of *dst* are set to 0. |

| |
|---|
| CMPGTU4<br><br>Compare for Greater Than, Unsigned Packed 8-bit: The CMPGTU4 instruction performs greater than comparisons on packed 8-bit data. Each unsigned 8-bit value in *src1* is compared against the corresponding 8-bit unsigned value in *src2*, returning a 1 if the byte in src1 is greater than the corresponding byte in src2 or 0 if is not greater than. The comparison results are packed into the four least-significant bits of *dst*.<br><br>The 8-bit values in each input are numbered from 0 to 3 starting with the least-significant byte, working towards the most-significant byte. The comparison results for byte 0 are written to bit 0 of the result. Likewise, the results for byte 1 to 3 are written to bits 1 to 3 of the result, respectively, as shown in the diagram below. The remaining bits of *dst* are set to 0. |
| CMPLT2<br><br>Compare for Less Than, Packed 16-bit (Pseudo-Operation): CMPLT2 is a pseudo-operation used to perform less than comparisons on signed packed 16-bit data. Each signed 16-bit value in *src2* is compared against the corresponding signed 16-bit value in *src1*, returning a 1 if src2 is less than src1 or returning a 0 if it is not less than. The comparison results are packed into the two least-significant bits of *dst*. The result for the lower pair of values is placed in bit 0, and the results for the upper pair of values are placed in bit 1. The remaining bits of *dst* are set to 0. The assembler uses the operation CMPGT2 (.unit) src1,src2,dst to perform this task. |

| |
|---|
| CMPLTU4<br>Compare for Less Than, Unsigned Packed 8-bit (Pseudo-Operation): CMPLTU4 is a pseudo-operation that performs less than comparisons on packed 8-bit data. Each unsigned 8-bit value in *src2* is compared against the corresponding 8-bit unsigned value in *src1*, returning a 1 if the byte in src2 is less than the corresponding byte in src1 or 0 if is not less than. The comparison results are packed into the four least-significant bits of *dst*.<br>The 8-bit values in each input are numbered from 0 to 3 starting with the least-significant byte, working towards the most-significant byte. The comparison results for byte 0 are written to bit 0 of the result. Likewise, the results for byte 1 to 3 are written to bits 1 to 3 of the result, respectively, as shown in the diagram below. The remaining bits of *dst* are set to 0.<br>The assembler uses the instruction CMPGTU4 (.unit) src1,src2,dst to perform this task |
| DEAL<br>De-interleave and Pack: The DEAL instruction performs a de-interleave and pack operation on the bits in *src2*. The odd and even bits of *src2* are extracted into two separate 16-bit quantities. These 16-bit quantities are then packed such that the even bits are placed in the lower half-word, and the odd bits are placed in the upper half word.<br>As a result, bits 0, 2, 4, ... , 28, 30 of *src2* are placed in bits 0, 1, 2, … , 14, 15 of *dst*. Likewise, bits 1, 3, 5, …, 29, 31 of *src2* are placed in bits 16, 17, 18, …, 30, 31 of *dst*.<br>The DEAL instruction is the exact inverse of the SHFL instruction. |

| |
|---|
| DOTP2<br>Dot Product, Signed Packed 16-bit: The DOTP2 instruction returns the dot-product between two pairs of signed packed 16-bit values. The values in *src1* and *src2* are treated as signed packed 16-bit quantities. The signed result is written either to a single 32-bit register, or sign-extended into a 64-bit register pair.<br>The product of the lower half-words of *src1* and *src2* is added to the product of the upper half-words of *src1* and *src2*. The result is then written to dst.<br>In the 64-bit result version, the upper word of the register pair always contains either all 0's or all 1's, depending on whether the result is positive or negative, respectively.<br>The 32-bit result version returns the same results as the 64-bit result version does in the lower 32 bits. The upper 32-bits are discarded. |
| DOTPN2<br>Dot Product with Negate, Signed Packed 16-bit: The DOTPN2 instruction returns the dot-product between two pairs of signed packed 16-bit values where the second product is negated. The values in *src1* and *src2* are treated as signed packed 16-bit quantities. The signed result is written either to a single 32-bit register.<br>The product of the lower half-words of *src1* and *src2* is subtracted from the product of the upper half-words of *src1* and *src2*. The result is then written to dst. |

| |
|---|
| DOTPNRSU2<br>Dot Product with Negate, Shift and Round, Signed by Unsigned Packed 16-bit: The DOTPNRSU2 instruction returns the dot-product between two pairs of packed 16-bit values, where the second product is negated. This instruction takes the result of the dot-product, and performs an additional round and shift step. The values in *src1* are treated as signed packed 16-bit quantities, whereas the values in *src2* are treated as unsigned packed 16-bit quantities. The results are written to dst.<br>The product of the lower half-words of *src1* and *src2* is subtracted from the product of the upper half-words of *src1* and *src2*. The value $2^{15}$ is then added to this sum, producing an intermediate 32-bit result. The intermediate result is signed shifted right by 16, producing a rounded, shifted result that is sign extended and placed in dst. |
| DOTPNRUS2<br>Dot Product with Negate, Shift and Round, Unsigned by Signed Packed 16-bit: The DOTPNRUS2 pseudo-operation performs the dot-product between two pairs of packed 16-bit values, where the second product is negated. This instruction takes the result of the dot-product, and performs an additional round and shift step. The values in *src1* are treated as signed packed 16-bit quantities, whereas the values in *src2* are treated as unsigned packed 16-bit quantities. The results are written to dst. The assembler uses the DOTPNRSU2 src1, src2, dst instruction to perform this task.<br>The product of the lower half-words of *src1* and *src2* is subtracted from the product of the upper half-words of *src1* and *src2*. The value $2^{15}$ is then added to this sum, producing an intermediate 32-bit result. The intermediate result is signed shifted right by 16, producing a rounded, shifted result that is sign extended and placed in dst. |

| |
|---|
| DOTPRSU2<br>Dot Product with Shift and Round, Signed by Unsigned Packed 16-bit: The DOTPRSU2 instruction returns the dot-product between two pairs of packed 16-bit values. This instruction takes the result of the dot-product, and performs an additional round and shift step. The values in *src1* are treated as signed packed 16-bit quantities, whereas the values in *src2* are treated as unsigned packed 16-bit quantities. The results are written to dst.<br>The product of the lower half-words of *src1* and *src2* is added to the product of the upper half-words of *src1* and *src2*. The value $2^{15}$ is then added to this sum, producing an intermediate 32-bit result. The intermediate result is signed shifted right by 16, producing a rounded, shifted result that is sign extended and placed in dst. |
| DOTPRUS2<br>Dot Product with Shift and Round, Unsigned by Signed Packed 16-bit (Pseudo-Operation): The DOTPRUS2 pseudo-operation returns the dot-product between two pairs of packed 16-bit values. This instruction takes the result of the dot-product, and performs an additional round and shift step. The values in *src1* are treated as signed packed 16-bit quantities, whereas the values in *src2* are treated as unsigned packed 16-bit quantities. The results are written to dst. . The assembler uses the DOTPRSU2 src1, src2, dst instruction to perform this task.<br>The product of the lower half-words of *src1* and *src2* is added to the product of the upper half-words of *src1* and *src2*. The value $2^{15}$ is then added to this sum, producing an intermediate 32-bit result. The intermediate result is signed shifted right by 16, producing a rounded, shifted result that is sign extended and placed in dst. |

| |
|---|
| DOTPSU4<br>Dot Product, Signed by Unsigned Packed 8-bit: The DOTPSU4 instruction returns the dot-product between four sets of packed 8-bit values. The values in *src1* are treated as signed packed 8-bit quantities, whereas the values in src2 are treated as unsigned 8-bit packed data. The signed result is written into dst.<br>For each pair of 8-bit quantities in *src1* and *src2*, the signed 8-bit value from *src1* is multiplied with the unsigned 8-bit value from *src2*. The four products are summed together, and the resulting dot product is written as a signed 32-bit result to *dst*. |
| DOTPUS4<br>Dot Product, Unsigned by Signed Packed 8-bit(Pseudo-Operation: The DOTPSU4 pseudo-operation returns the dot-product between four sets of packed 8-bit values. The values in *src1* are treated as signed packed 8-bit quantities, whereas the values in src2 are treated as unsigned 8-bit packed data. The signed result is written into dst. The assembler uses the DOTPSU4 src1, src2, dst instruction to perform this task.<br>For each pair of 8-bit quantities in *src1* and *src2*, the signed 8-bit value from *src1* is multiplied with the unsigned 8-bit value from *src2*. The four products are summed together, and the resulting dot product is written as a signed 32-bit result to *dst*. |

| |
|---|
| DOTPU4<br>Dot Product, Unsigned Packed 8-bit: The DOTPU4 instruction returns the dot-product between four sets of packed 8-bit values. The values in both *src1* and src2 are treated as unsigned 8-bit packed data. The unsigned result is written into dst.<br>For each pair of 8-bit quantities in *src1* and *src2*, the unsigned 8-bit value from *src1* is multiplied with the unsigned 8-bit value from *src2*. The four products are summed together, and the resulting dot product is written as a 32-bit result to *dst*. |
| GMPY4<br>Galois Field Multiply, Packed 8-bit: The GMPY4 instruction performs the Galois field multiply on four values in src1 with four parallel values in src2. The four products are packed into dst. The values in both *src1* and src2 are treated as unsigned 8-bit packed data.<br>For each pair of 8-bit quantities in *src1* and *src2*, the unsigned 8-bit value from *src1* is Galois field multiplied with the unsigned 8-bit value from *src2*. The product of *src1* byte 0 and *src2* byte 0 is written to byte0 of *dst*. The product of *src1* byte 1 and *src2* byte 1 is written to byte1 of *dst*. The product of *src1* byte 2 and *src2* byte 2 is written to byte2 of *dst*. The product of *src1* byte 3 and *src2* byte 3 is written to the most significant byte in *dst*. |
| LDNDW<br>Load Non-Aligned Double Word: The LDNDW instruction loads a 64-bit quantity from memory into a register pair, dst_o:dst_e. The LDNDW instruction may read a 64-bit value from any byte boundary. Thus alignment to a 64-bit boundary is not required. The memory effective address is formed from a base address register (baseR) and an optional offset that is either a register (offsetR) or a 5-bit unsigned constant (ucst5). |

| |
|---|
| LDNW<br>Load Non-Aligned Word: The LDNW instruction loads a 32-bit quantity from memory into a 32-bit register, dst. The LDNW instruction may read a 32-bit value from any byte boundary. Thus alignment to a 32-bit boundary is not required. The effective memory address is formed from a base address register (baseR) and an optional offset that is either a register (offsetR) or a 5-bit unsigned constant (ucst5). If an offset is not given, the assembler assigns an offset of zero. |
| MAX2<br>Maximum, Signed Packed 16-bit: The MAX2 performs a maximum operation on packed signed 16-bit values. For each pair of signed 16-bit values in *src1* and *src2*, MAX2 places the larger value in the corresponding position in *dst*. |
| MAXU4<br>Maximum, Unsigned Packed 8-bit: The MAXU4 performs a maximum operation on packed unsigned 8-bit values. For each pair of unsigned 8-bit values in *src1* and *src2*, MAXU4 places the larger value in the corresponding position in *dst*. |
| MIN2<br>Minimum, Signed Packed 16-bit : The MIN2 performs a minimum operation on packed signed 16-bit values. For each pair of signed 16-bit values in *src1* and *src2*, MIN2 places the smaller value in the corresponding position in *dst*. |
| MINU4<br>Minimum, Unsigned Packed 8-bit: The MINU4 performs a minimum operation on packed unsigned 8-bit values. For each pair of unsigned 8-bit values in *src1* and *src2*, MINU4 places the smaller value in the corresponding position in *dst*. |

| |
|---|
| MPY2<br>Multiply Signed by Signed, Packed 16-bit: The MPY2 instruction performs two 16-bit by 16-bit multiplication between two pairs of signed packed 16-bit values. The values in *src1* and *src2* are treated as signed packed 16-bit quantities. The 32-bit results are written into a 64-bit register pair.<br>The product of the lower half-words of *src1* and *src2* is written to the even destination register, dst_e. The product of the upper half-words of *src1* and *src2* is written to the odd destination register, dst_o. |
| MPYHI<br>Multiply 16 MSB x 32-bit into 64-bit Result: The MPYHI instruction performs a 16-bit by 32-bit multiply. The upper half of src1 is used as a 16 bit signed input. The value in src2 is treated as a 32-bit signed value. The result is written into the lower 48 bits of a 64-bit register pair, dst_o:dst_e, and sign extended to 64 bits. |
| MPYHIR<br>Multiply 16 MSB x 32-bit, Shifted by 15 to Produce a Rounded 32-bit Result: The MPYHIR instruction performs a 16-bit by 32-bit multiply. The upper half of src1 is used as a 16-bit signed input. The value in src2 is treated as a 32-bit signed value. The product is then rounded to a 32-bit result by adding the value $2^{14}$ and then this sum is right shifted by 15. The lower 32-bits of the result are written into dst. |

| |
|---|
| MPYIH<br>Multiply 32-bit x 16 MSB into 64-bit Result(Pseudo-Operation): The MPYIH pseudo-operation performs a 16-bit by 32-bit multiply. The upper half of src1 is used as a 16 bit signed input. The value in src2 is treated as a 32-bit signed value. The result is written into the lower 48 bits of a 64-bit register pair, dst_o:dst_e, and sign extended to 64 bits. The assembler uses the MPYHI src1, src2, dst instruction to perform this task. |
| MPYIHR<br>Multiply 32-bit x 16 MSB, Shifted by 15 to Produce a Rounded 32-bit Result (Pseudo-Operation): The MPYIHR pseudo-operation performs a 16-bit by 32-bit multiply. The upper half of src1 is used as a 16-bit signed input. The value in src2 is treated as a 32-bit signed value. The product is then rounded to a 32-bit result by adding the value $2^{14}$ and then this sum is right shifted by 15. The lower 32-bits of the result are written into dst. The assembler uses a MPYHIR src1, src2, dst to perform this operation. |
| MPYIL<br>Multiply 32-bit x 16 LSB into 64-bit Result (Pseudo-Operation: The MPYIL pseudo-operation performs a 16-bit by 32-bit multiply. The lower half of src1 is used as a 16 bit signed input. The value in src2 is treated as a 32-bit signed value. The result is written into the lower 48 bits of a 64-bit register pair, dst_o:dst_e, and sign extended to 64 bits. The assembler uses the MPYLI src1, src2, dst instruction to perform this operation. |

| |
|---|
| MPYILR<br>Multiply 32-bit x 16 LSB, Shifted by 15 to Produce a Rounded 32-bit Result (Pseudo-Operation): The MPYLIR pseudo-operation performs a 16-bit by 32-bit multiply. The lower half of src1 is used as a 16-bit signed input. The value in src2 is treated as a 32-bit signed value. The product is then rounded to a 32-bit result by adding the value $2^{14}$ and then this sum right shifted by 15. The lower 32-bits of the result are written into dst. The assembler uses a MPYLIR src1, src2, dst instruction to perform this operation. |
| MPYLI<br>Multiply 16 LSB x 32-bit into 64-bit Result: The MPYLI instruction performs a 16-bit by 32-bit multiply. The lower half of src1 is used as a 16 bit signed input. The value in src2 is treated as a 32-bit signed value. The result is written into the lower 48 bits of a 64-bit register pair, dst_o:dst_e, and sign extended to 64 bits. |
| MPYLIR<br>Multiply 16 LSB x 32-bit, Shifted by 15 to Produce a Rounded 32-bit Result: The MPYLIR instruction performs a 16-bit by 32-bit multiply. The lower half of src1 is used as a 16-bit signed input. The value in src2 is treated as a 32-bit signed value. The product is then rounded to a 32-bit result by adding the value $2^{14}$ and then this sum right shifted by 15. The lower 32-bits of the result are written into dst. |

MPYSU4

Multiply Signed by Unsigned Packed, 8-bit: The MPYSU4 instruction returns the product between four sets of packed 8-bit values producing four signed 16-bit results. The four signed 16-bit results are packed into a 64-bit register pair, *dst_o:dst_e*. The values in *src1* are treated as signed packed 8-bit quantities, whereas the values in src2 are treated as unsigned 8-bit packed data.

For each pair of 8-bit quantities in *src1* and *src2*, the signed 8-bit value from *src1* is multiplied with the unsigned 8-bit value from *src2*. The product of *src1* byte 0 and *src2* byte 0 is written to the lower half of *dst_e*. The product of *src1* byte 1 and *src2* byte 1 is written to the upper half of *dst_e*. The product of *src1* byte 2 and *src2* byte 2 is written to the lower half of *dst_o*. The product of *src1* byte 3 and *src2* byte 3 is written to the upper half of *dst_o*.

| |
|---|
| MPYUS4<br>Multiply Unsigned by Signed Packed, 8-bit (Pseudo-Operation): The MPYUS4 pseudo-operation returns the product between four sets of packed 8-bit values producing four signed 16-bit results. The four signed 16-bit results are packed into a 64-bit register pair, *dst_o:dst_e*. The values in *src1* are treated as signed packed 8-bit quantities, whereas the values in src2 are treated as unsigned 8-bit packed data. The assembler uses a MPYSU4 src1, src2, dst instruction to perform this operation.<br>For each pair of 8-bit quantities in *src1* and *src2*, the signed 8-bit value from *src1* is multiplied with the unsigned 8-bit value from *src2*. The product of *src1* byte 0 and *src2* byte 0 is written to the lower half of *dst_e*. The product of *src1* byte 1 and *src2* byte 1 is written to the upper half of *dst_e*. The product of *src1* byte 2 and *src2* byte 2 is written to the lower half of *dst_o*. The product of *src1* byte 3 and *src2* byte 3 is written to the upper half of *dst_o*. |
| MPYU4<br>Multiply Unsigned by Unsigned Packed, 8-bit: The MPYU4 instruction returns the product between four sets of packed 8-bit values producing four unsigned 16-bit results that are packed into a 64-bit register pair, *dst_o:dst_e*. The values in both *src1* and src2 are treated as unsigned 8-bit packed data.<br>For each pair of 8-bit quantities in *src1* and *src2*, the unsigned 8-bit value from *src1* is multiplied with the unsigned 8-bit value from *src2*. The product of *src1* byte 0 and *src2* byte 0 is written to the lower half of *dst_e*. The product of *src1* byte 1 and *src2* byte 1 is written to the upper half of *dst_e*. The product of *src1* byte 2 and *src2* byte 2 is written to the lower half of *dst_o*. The product of *src1* byte 3 and *src2* byte 3 is written to the upper half of *dst_o*. |

| |
|---|
| MVD<br>Move from Register to Register, Delayed: The MVD instruction moves data from the src2 register to the dst register over 4 cycles. This is done using the multiplier path. |
| PACK2<br>Pack 16lsb, 16lsb into Packed 16-bit: The PACK2 instruction takes the lower half-words from *src1* and *src2* and packs them both into *dst*. The lower half-word of *src1* is placed in the upper half-word of *dst*. The lower half-word of *src2* is placed in the lower half-word of *dst*.<br>This instruction is useful for manipulating and preparing pairs of 16-bit values to be used by the packed arithmetic operations, such as ADD2. |
| PACKH2<br>Pack 16msb, 16msb into Packed 16-bit: The PACKH2 instruction takes the upper half-words from *src1* and *src2* and packs them both into *dst*. The upper half-word of *src1* is placed in the upper half-word of *dst*. The upper half-word of *src2* is placed in the lower half-word of *dst*.<br>This instruction is useful for manipulating and preparing pairs of 16-bit values to be used by the packed arithmetic operations, such as ADD2. |

| |
|---|
| PACKH4<br>Pack High Bytes of Four Half-words into Packed 8-bit: The PACKH4 instruction moves the high bytes of the two half-words in *src1* and *src2* and packs them into *dst*. The bytes from *src1* will be packed into the most significant bytes of *dst*, and the bytes from *src2* will be packed into the least significant bytes of *dst*.<br>Specifically, the high byte of the upper half-word of *src1* is moved to the upper byte of the upper half-word of *dst*. The high byte of the lower half-word of *src1* is moved to the lower byte of the upper half-word of *dst*. The high byte of the upper half-word of *src2* is moved to the upper byte of the lower half-word of *dst*. The high byte of the lower half-word of *src2* is moved to the lower byte of the lower half-word of *dst*. |
| PACKHL2<br>Pack 16msb, 16lsb into Packed 16-bit: The PACKHL2 instruction takes the upper half-word from *src1* and the lower half-word from *src2* and packs them both into *dst*. The upper half-word of *src1* is placed in the upper half-word of *dst*. The lower half-word of *src2* is placed in the lower half-word of *dst*.<br>This instruction is useful for manipulating and preparing pairs of 16-bit values to be used by the packed arithmetic operations, such as ADD2. |

| |
|---|
| PACKL4<br>Pack Low Bytes of Four Half-words into Packed 8-bit: The PACKL4 instruction moves the low bytes of the two half-words in *src1* and *src2* and packs them into *dst*. The bytes from *src1* will be packed into the most significant bytes of *dst*, and the bytes from *src2* will be packed into the least significant bytes of *dst*.<br>Specifically, the low byte of the upper half-word of *src1* is moved to the upper byte of the upper half-word of *dst*. The low byte of the lower half-word of *src1* is moved to the lower byte of the upper half-word of *dst*. The low byte of the upper half-word of *src2* is moved to the upper byte of the lower half-word of *dst*. The low byte of the lower half-word of *src2* is moved to the lower byte of the lower half-word of *dst*. |
| PACKLH2<br>Pack 16lsb, 16msb into Packed 16-bit: The PACKLH2 instruction takes the lower half-word from *src1* and the upper half-word from *src2* and packs them both into *dst*. The lower half-word of *src1* is placed in the upper half-word of *dst*. The upper half-word of *src2* is placed in the lower half-word of *dst*.<br>This instruction is useful for manipulating and preparing pairs of 16-bit values to be used by the packed arithmetic operations, such as ADD2. |
| ROTL<br>Rotate Left: The ROTL instruction rotates the 32-bit value of *src2* to the left and places the result in dst. The number of bits to rotate is given in the five least-significant bits of *src1*. Bits 5 through 31 of *src1* are ignored and may be non-zero. |

| |
|---|
| SADD2<br>Add with Saturation, Signed Packed 16-bit: The SADD2 instruction performs 2s-complement addition between signed packed 16-bit quantities in *src1* and *src2*. The results are placed in a signed packed 16-bit format into dst.<br>For each pair of 16-bit quantities in *src1* and *src2*, the sum between the signed 16-bit value from *src1* and the signed 16-bit value from *src2* is calculated and saturated to produce a signed 16-bit result. The result is placed in the corresponding position in *dst*. |
| SADDSU2<br>Add with Saturation, Signed with Unsigned Packed 16-bit (Pseudo-Operation): The SADDSU2 pseudo-operation performs 2s-complement addition between unsigned and signed packed 16-bit quantities. The values in *src1* are treated as unsigned packed 16-bit quantities and the values in src2 are treated as signed packed 16-bit quantities. The results are placed in an unsigned packed 16-bit format into dst. The assembler uses the SADDUS2 src1, src2, dst instruction to perform this operation.<br>For each pair of 16-bit quantities in *src1* and *src2*, the sum between the unsigned 16-bit value from *src1* and the signed 16-bit value from *src2* is calculated and saturated to produce a signed 16-bit result. The result is placed in the corresponding position in *dst*. |

| |
|---|
| SADDU4<br>Add with Saturation, Unsigned, Packed 8-bit: The SADDU4 instruction performs 2s-complement addition between unsigned packed 8-bit quantities. The values in *src1* and *src2* are treated as unsigned packed 8-bit quantities. The results are written into dst in an unsigned packed 8-bit format.<br>For each pair of 8-bit quantities in *src1* and *src2*, the sum between the unsigned 8-bit value from *src1* and the unsigned 8-bit value from *src2* is calculated and saturated to produce an unsigned 8-bit result. The result is placed in the corresponding position in *dst*.<br>This operation is performed on each 8-bit quantity separately. This instruction does not affect the SAT bit in the CSR. |
| SADDUS2<br>Add with Saturation, Unsigned with Signed Packed 16-bit: The SADDUS2 instruction performs 2s-complement addition between unsigned and signed packed 16-bit quantities. The values in *src1* are treated as unsigned packed 16-bit quantities and the values in src2 are treated as signed packed 16-bit quantities. The results are placed in an unsigned packed 16-bit format into dst.<br>For each pair of 16-bit quantities in *src1* and *src2*, the sum between the unsigned 16-bit value from *src1* and the signed 16-bit value from *src2* is calculated and saturated to produce a signed 16-bit result. The result is placed in the corresponding position in *dst*. |

| |
|---|
| SHFL<br>Shuffle: The SHFL instruction performs an interleave operation on the two half-words in *src2*. The bits in the lower half-word of *src2* are placed in the even bit positions in *dst*, and the bits in the upper half-word of *src2* are placed in the odd bit positions in *dst*.<br>As a result, bits 0, 1, 2, ..., 14, 15 of *src2* are placed in bits 0, 2, 4, ... , 28, 30 of *dst*. Likewise, bits 16, 17, 18, .. 30, 31 of *src2* are placed in bits 1, 3, 5, .. 29, 31 of *dst*.<br>The SHFL instruction is the exact inverse of the DEAL instruction. |
| SHLMB<br>Shift Left and Merge Byte: The SHLMB instruction shifts the contents of *src2* left by one byte, and then the most significant byte of *src1* is merged into the least significant byte position. The result is then placed in *dst*. |
| SHR2<br>Shift Right, Signed Packed 16-bit: The SHR2 instruction performs an arithmetic shift right on signed packed 16-bit quantities. The values in *src2* are treated as signed packed 16-bit quantities. The lower five bits of *src1* or *ucst5* are treated as the shift amount. The results are placed in a signed packed 16-bit format into dst.<br>For each signed 16-bit quantity in *src2*, the quantity is shifted right by the number of bits specified in the lower five bits of *src1* or *ucst5* . Bits 5 through 31 of src1 are ignored and may be non-zero. The shifted quantity is sign-extended, and placed in the corresponding position in *dst*. Bits shifted out of the least-significant bit of the signed 16-bit quantity are discarded. |

| |
|---|
| SHRMB<br>Shift Right and Merge Byte: The SHRMB instruction shifts the contents of *src2* right by one byte, and then the least significant byte of *src1* is merged into the most significant byte position. The result is then placed in *dst*. |
| SHRU2<br>Shift Right, Unsigned Packed 16-bit: The SHRU2 instruction performs an arithmetic shift right on unsigned packed 16-bit quantities. The values in *src2* are treated as unsigned packed 16-bit quantities. The lower five bits of *src1* or *ucst5* are treated as the shift amount. The results are placed in an unsigned packed 16-bit format into dst.<br>For each unsigned 16-bit quantity in *src2*, the quantity is shifted right by the number of bits specified in the lower five bits of *src1* or *ucst5*. Bits 5 through 31 of src1 are ignored and may be non-zero. The shifted quantity is zero-extended, and placed in the corresponding position in *dst*. Bits shifted out of the least-significant bit of the signed 16-bit quantity are discarded. |

SMPY2

Multiply Signed by Signed, with Left Shift and Saturate, Packed 16-bit: The SMPY2 instruction performs two 16-bit by 16-bit multiplication between two pairs of signed packed 16-bit values, with an additional left-shift and saturate. The values in *src1* and *src2* are treated as signed packed 16-bit quantities. The two 32-bit results are written into a 64-bit register pair.

The SMPY2 instruction produces two 16 x 16 products. Each product is shifted left by one, and if the left-shifted result is equal to 0x80000000, the output value is saturated to 0x7FFFFFFF.

The saturated product of the lower half-words of *src1* and *src2* is written to the even destination register, dst_e. The saturated product of the upper half-words of *src1* and *src2* is written to the odd destination register, dst_o.

Note: If either product saturates, the SAT bit is set in the CSR on the cycle the result is written. If neither product saturates, the SAT bit in the CSR is not affected.

This instruction helps reduce the number of instructions required to perform two 16-bit by 16-bit saturated multiplies on both the lower and upper halves of two registers

SPACK2

Saturate and Pack into Signed Packed 16-bit: The SPACK2 instruction takes two signed 32-bit quantities in *src1* and *src2* and saturates them to signed 16-bit quantities. The signed 16-bit results are then packed into a signed packed 16-bit format and written to *dst*. Specifically, the saturated 16-bit signed value of *src1* is written to the upper half word of dst and the saturated 16-bit signed value of *src2* is written to the lower half word of dst.

Saturation is performed on each input value independently. The input values start as signed 32-bit quantities, and are saturated to 16-bit quantities according to the following rules:

If the value is in the range $-2^{15}$ to $2^{15}-1$, inclusive, then no saturation is performed and the value is merely truncated to 16 bits.

If the value is greater than $2^{15}-1$, then the result is set to $2^{15}-1$.

If the value is less than $-2^{15}$, then the result is set to $-2^{15}$.

This instruction is useful in code which manipulates 16-bit data at 32-bit precision for its intermediate steps, but which requires the final results to be in a 16-bit representation. The saturate step ensures that any values outside the signed 16-bit range are clamped to the high or low end of the range before being truncated to 16 bits.

NOTE: This operation is performed on each 16-bit value separately. This instruction does not affect the SAT bit in the CSR.

SPACKU4

Saturate and Pack into Unsigned Packed 8-bit: The SPACKU4 instruction takes four signed 16-bit values and saturates them to unsigned 8-bit quantities. The values in *src1* and *src2* are treated as signed packed 16-bit quantities. The results are written into dst in an unsigned packed 8-bit format.

Each signed 16-bit quantity in *src1* and *src2* is saturated to an unsigned 8-bit quantity as described below. The resulting quantities are then packed into an unsigned packed 8-bit format. Specifically, the upper half word of src1 is used to produce the most significant byte of dst. The lower half of src1 is used to produce the second most significant byte (bits 16 to 23) of dst. The upper half word of *src2* is used to produce the third most significant byte (bits 8 to 15) of dst. The lower half word of *src2* is used to produce the least significant byte of dst.

Saturation is performed on each signed 16-bit input independently, producing separate unsigned 8-bit results. For each value, the following tests are applied:

If the value is in the range $0$ to $2^8 - 1$, inclusive, then no saturation is performed and the result is truncated to 8 bits.

If the value is greater than $2^8 - 1$, then the result is set to $2^8 - 1$.

If the value is less than $0$, the result is set to $0$.

This instruction is useful in code which manipulates 8-bit data at 16-bit precision for its intermediate steps, but which requires the final results to be in an 8-bit representation. The saturate step ensures that any values outside the unsigned 8-bit range are clamped to the high or low end of the range before being truncated to 8 bits.

NOTE: This operation is performed on each 8-bit quantity separately. This instruction does not affect the SAT bit in the CSR.

| | |
|---|---|
| SSHVL<br>Variable Shift Left, Signed: The SSHVL instruction shifts the signed 32-bit value in *src2* to the left or right by the number of bits specified by *src1 and places the result in dst*.<br>The *src1* argument is treated as a 2s-complement shift value. Shift amounts that are larger than 31 are clamped to a shift amount of 31. Shift amounts that are smaller than -31 are clamped to a shift amount of -31. If src1 is positive, *src2* is shifted to the left. If src1 is negative, *src2* is shifted to the right by the absolute value of the shift amount with the sign-extended shifted value being placed in dst. It should also be noted that when src1 is negative, the bits shifted to the right past bit 0 are lost.<br>NOTE: If the shifted value is saturated, then the SAT bit is set in CSR in the same cycle that the result is written. If the shifted value is not saturated, then the SAT bit is unaffected. | |
| SSHVR<br>Variable Shift Right, Signed: The SSHVR instruction shifts the signed 32-bit value in *src2* to the left or right by the number of bits specified by *src1 and places the result in dst*.<br>The *src1* argument is treated as a 2s-complement shift value. Shift amounts that are larger than 31 are clamped to a shift amount of 31. Shift amounts that are smaller than -31 are clamped to a shift amount of -31. If src1 is positive, *src2* is shifted to the right by the value specified with the sign-extended shifted value being placed in dst. It should also be noted that when src1 is positive, the bits shifted to the right past bit 0 are lost. If src1 is negative, *src2* is shifted to the left by the absolute value of the shift amount value and the result is placed in dst. | |

| | |
|---|---|
| STDW<br>Store Double Word: The STDW instruction stores a 64-bit quantity to memory from a odd:even register pair, srcd. Alignment to a 64-bit boundary is required. The effective memory address is formed from a base address register (baseR) and an optional offset that is either a register (offsetR) or a 5-bit unsigned constant (ucst5). |
| STNDW<br>Store Non-Aligned Double Word: The STNDW instruction stores a 64-bit quantity to memory from a 64-bit register pair, srcd. The STNDW instruction may write a 64-bit value to any byte boundary. Thus alignment to a 64-bit boundary is not required. The effective memory address is formed from a base address register (baseR) and an optional offset that is either a register (offsetR) or a 5-bit unsigned constant (ucst5). |
| STNW<br>Store Non-Aligned Word: The STNW instruction stores a 32-bit quantity to memory from a 32-bit register, src. The STNW instruction may write a 32-bit value to any byte boundary. Thus alignment to a 32-bit boundary is not required. The effective memory address is formed from a base address register (baseR) and an optional offset that is either a register (offsetR) or a 5-bit unsigned constant (ucst5). If an offset is not given, the assembler assigns an offset of zero. |

SUB4

Subtract without Saturation, Signed Packed 8-bit : The SUB4 performs 2s-complement subtraction between packed 8-bit quantities. The values in *src1* and *src2* are treated as packed 8-bit quantities, and the results are written into dst in a packed 8-bit format.

For each pair of 8-bit quantities in *src1* and *src2*, the difference between the 8-bit value from *src1* and the 8-bit value from *src2* is calculated to produce an 8-bit result. The result is placed in the corresponding position in *dst*.

Specifically, the difference between src1 byte0 and src2 byte0 is placed in byte0 of *dst*. The difference between src1 byte1 and src2 byte1 is placed in byte1 of *dst*. The difference between src1 byte2 and src2 byte2 is placed in byte2 of *dst*. The difference between src1 byte3 and src2 byte3 is placed in byte3 of *dst*.

No saturation is performed.

| |
|---|
| SUBABS4<br>Subtract with Absolute Value, Unsigned Packed 8-bit : SUBABS4: The SUBABS4 instruction calculates the absolute value of the differences between the packed 8-bit data contained in the source registers. The values in src1 and src2 are treated as unsigned packed 8-bit quantities. The result is written into dst in an unsigned packed 8-bit format.<br>For each pair of unsigned 8-bit values in src1 and src2, the absolute value of the difference is calculated. This result is then placed in the corresponding position in dst.<br>Specifically, the absolute value of the difference between src1 byte0 and src2 byte0 is placed in byte0 of dst. The absolute value of the difference between src1 byte1 and src2 byte1 is placed in byte1 of dst. The absolute value of the difference between src1 byte2 and src2 byte2 is placed in byte2 of dst. And the absolute value of the difference between src1 byte3 and src2 byte3 is placed in byte3 of dst. |
| SWAP2<br>Swap Half-words in Each Word (Pseudo-Operation): The SWAP2 is a pseudo-operation that takes the lower half-word from *src2 and* places it in the upper half-word of *dst while the upper-half word from src2* is placed in the lower half-word of *dst*. It assembles as PACKLH2 src,src, dst.<br>This instruction is useful for manipulating and preparing pairs of 16-bit values to be used by the packed arithmetic operations, such as ADD2.<br>The SWAP2 instruction can be used in conjunction with the SWAP4 instruction to change the byte ordering (and therefore, the endianness) of 32-bit data. |

| |
|---|
| SWAP4<br><br>Swap Bytes in Each Half-word: The SWAP4 instruction exchanges pairs of bytes within each half-word of *src2*, placing the result in *dst*. The values in src2 are treated as packed 8-bit values.<br><br>Specifically, the upper byte in the upper half-word is placed in the lower byte in the upper halfword while the lower byte of the upper half-word is placed in the upper byte of the upper half-word. Also the upper byte in the lower half-word is placed in the lower byte of the lower half-word while the lower byte in the lower half-word is placed in the upper byte of the lower half word.<br><br>By itself, this instruction changes the ordering of bytes within half words. This effectively changes the endianness of 16-bit data packed in 32-bit words. The endianness of full 32-bit quantities can be changed by using the SWAP4 instruction in conjunction with the SWAP2 instruction |
| UNPKHU4<br><br>Unpack High Unsigned Packed 8-bit to Unsigned Packed 16-bit: The UNPKHU4 instruction moves the two most significant bytes of *src2* into the two low bytes of the two half-words of *dst*.<br><br>Specifically, the upper byte in the upper half-word is placed in the lower byte in the upper halfword while the lower byte of the upper half-word is placed in the lower byte of the lower half-word. The *src2* bytes are zero-extended when unpacked, filling the two high bytes of the two half-words of *dst* with zeros. |

| |
|---|
| UNPKLU4<br>Unpack Low Unsigned Packed 8-bit to Unsigned Packed 16-bit: The UNPKLU4 instruction moves the two least significant bytes of *src2* into the two low bytes of the two half-words of *dst*.<br>Specifically, the upper byte in the lower half-word is placed in the lower byte in the upper halfword while the lower byte of the lower half-word is kept in the lower byte of the lower half-word. The *src2* bytes are zero-extended when unpacked, filling the two high bytes of the two half-words of *dst* with zeros. |
| XPND2<br>Expand Bits to Packed 16-bit Masks: The XPND2 instruction reads the two least-significant bits of *src2* and expands them into two half-word masks written to dst. Bit 1 of src2 is replicated and placed in the upper half-word of dst. Bit 0 of src2 is replicated and placed in the lower half-word of dst. Bits 2 through 31 of *src2* are ignored.<br>This instruction is useful when combined with the output of CMPGT2 or CMPEQ2, for generating a mask that corresponds to the individual half-word positions that were compared. That mask may then be used with ANDN, AND or OR instructions to perform other operations such as compositing. |

| |
|---|
| XPND4<br>Expand Bits to Packed 8-bit Masks: The XPND4 instruction reads the four least-significant bits of *src2* and expands them into four byte masks written to dst. Bit 0 of src2 is replicated and placed in the least significant byte of dst. Bit 1 of src2 is replicated and placed in second least significant byte of dst. Bit 2 of src2 is replicated and placed in second most significant byte of dst. Bit 3 of src2 is replicated and placed in most significant byte of dst. Bits 4 through 31 of *src2* are ignored.<br>This instruction is useful when combined with the output of CMPGT4 or CMPEQ4, for generating a mask that corresponds to the individual byte positions that were compared. That mask may then be used with ANDN, AND or OR instructions to perform other operations such as compositing. |

As an example of the power of the improved instruction set architecture of the present embodiment, a dot-product example will now be described that illustrates a unification of the following concepts:

- VLIW
- Software Pipelining
- High level Vector Optimizations to transform the code
- Non-aligned memory accesses
- Split-ALU operations

Table 26 is a listing of a dot-product routine written in the know programming language code, C. Two arrays are involved, pointed to by two pointers, bvPtr and vecPtr. Each element pair are multiplied together and added to a running total.

Table 26 - Dot Product, Natural Version of C-code

```
int dot_vselp_cn(const short * RESTRICT bvPtr, const
short * RESTRICT vecPtr)
{
    int i, psi = 0;

    WORD_ALIGNED(bvPtr);
    WORD_ALIGNED(vecPtr);

    for (i = 0, psi = 0; i < 40; i++)
        psi += bvPtr[i] * vecPtr[i];

    return psi;
}
```

Notice that a "WORD_ALIGNED" directive is included to "tell" an optimizing compiler that the pointers bvPTR and vecPTR are aligned in order to enable the split-alu operations of the present invention. In order to take advantage of the split ALU operations of the present embodiment, the optimizer will unroll the loop and load two 16bit values into a 32bit register, as shown in Table 27.

Table 27 - Creating two pointers for packed data

```
int dot_vselp_c(const int * RESTRICT bvPtr, const int *
RESTRICT vecPtr)
{
    int i, psi1 = 0, psi2 = 0;

    WORD_ALIGNED(bvPtr);
    WORD_ALIGNED(vecPtr);
```

Notice in Figure 27 that bvPTR and vecPTR are now int*, so it can be assumed that they point to 16bit arrays that are aligned/packed on 32bit boundaries. Without this knowledge, which was explicitly provided in the code of Table 26, the vector transformation optimization shown in Table 28 cannot be done to allow two multiply-accumulate (mac) operations to be performed during each instruction execution phase.

Table 28 - Vector transformation

```
    for (i = 0; i < 20; i++)
    {
        psi1 += _mpy (bvPtr[i], vecPtr[i]);
        psi2 += _mpyh(bvPtr[i], vecPtr[i]);
    }

    return psi1 + psi2;
}
```

With a non-aligned load double word (lddw) instruction of the present embodiment, alignment is not an issue, as shown in Table 29.

Table 29 - Dot Product, improved version with non-aligned capability

```
int dot_vselp_c(const short * RESTRICT bvPtr, const
short * RESTRICT vecPtr)
{
    int i, psi1 = 0, psi2 = 0;

    for (i = 0; i < 20; i++)
    {
```

The non-aligned load/store operations on the present embodiment use both D-units, so even though 64-bits are being read at a time, it still takes two cycles to perform this loop. In this case, four mac operation are performed in two cycles for a net throughput of two mac/cycle, as shown in Table 30. Advantageously, the compiler/optimizer does not have to know anything about alignment.

Table 30 - Optimized Dot Product Code

```
        int64 t1 = _mem64(bvPtr[i]);  /* read nonaligned
64bits */
        int64 t2 = _mem64(vecPtr[i]); /* read nonaligned
64bits */
        int64 psi1 += _mpy2(hi(t1), hi(t2));
        int64 psi2 += _mpy2(lo(t1), lo(t2));
    }

    return  _hi(psi1)  +  _lo(psi1)  +  _hi(psi2)  +
_lo(psi2);
}
```

Advantageously, the split ALU instructions combined with non-aligned load/store instructions of the present embodiment enable more loops to have the two mac/cycle throughput. Furthermore, if the optimizer can determine if bvPtr and vecPtr are aligned, then the code can be optimized further to provide four mac/cycle throughput. Advantageously, the instruction set architecture of the present embodiment simplifies the programming model by enabling higher performance of natural C code by a combination of the concepts listed above.

Other System Examples

Several example systems which can benefit from aspects of the present invention are described in U.S. Patent 5,072,418, which was incorporated by reference herein, particularly with reference to Figures 2-18 of U.S. Patent 5,072,418. A microprocessor incorporating an aspect of the present invention to improve performance or reduce cost can be used to further improve the systems described in U.S. Patent 5,072,418. Such systems include, but are not limited to, industrial process controls, automotive vehicle systems, motor controls, robotic control systems, satellite telecommunication systems, echo canceling systems, modems, video imaging systems, speech recognition systems, vocoder-modem systems with encryption, and such.

For example, digital system 1 can be included in a mobile telecommunications device, such as a wireless telephone with integrated keyboard and display. Digital system 1 with processor 10 is connected to the keyboard, where appropriate via a keyboard adapter, to the display, where appropriate via a display adapter, and to radio frequency (RF) circuitry. The RF circuitry is connected to an aerial. Advantageously, the SIMD instruction set along with non-aligned load/store operations allows more complex algorithms to be performed in a given amount of time so that the wireless telephone can provide improved communication services.

Fabrication of digital system 10 involves multiple steps of implanting various amounts of impurities into a semiconductor substrate and diffusing the impurities to selected depths within the substrate to form transistor devices. Masks are formed to control the placement of the impurities. Multiple layers of conductive material and insulative material are deposited and etched to interconnect the various devices. These steps are performed in a clean room environment.

A significant portion of the cost of producing the data processing device involves testing. While in wafer form, individual devices are biased to an operational state and probe tested for basic operational functionality. The wafer is then separated into individual dice which may be sold as bare die or packaged. After packaging, finished parts are biased into an operational state and tested for operational functionality.

Thus, a digital system is provided with a processor having an improved instruction set architecture. The processor is code-compatible with C62xx DSP processors from Texas Instruments Incorporated. It provides a superset of the C62x architecture while providing complete code compatibility for existing C62x code. The processor provides extensions to the existing C62x architecture in several areas: register file enhancements, data path extensions, additional functional unit hardware, increased orthogonality of the instruction set, data flow enhancements, 8-bit and 16-bit extensions, and additional instructions that reduce code size and increase register flexibility.

Advantageously, each .M unit can perform two 16x16 bit multiplies or four 8x8 bit multiplies every clock cycle. The .D units can access words and double words on any byte boundary by using non-aligned load and store instructions. The .L unit can perform byte shifts and the .M unit can perform bi-directional variable shifts in addition to the .S unit's ability to do shifts. The bi-directional shifts directly assist voice-compression codecs (vocoders). Special communications-specific instructions, such as SHFL, DEAL and GMPY4 have been added to the .M unit to address common operations in error-correcting codes. Bit-count, Bit-Reverse and Rotate hardware on the .M unit extends support for bit-level algorithms such as binary morphology, image metric calculations and encryption algorithms.

Advantageously, in an embodiment of the present invention, increased orthogonality of the Instruction Set Architecture is provided: the .D unit can perform 32-bit logical instructions in addition to the .S and .L units; the .L, and .D units can be used to load 5-bit constants in addition to the .S unit's ability to load 16-bit constants; the .L unit can perform byte shifts and the .M unit can perform bi-directional variable shifts in addition to the .S unit's ability to do shifts; the bi-directional shifts directly assist voice-compression codecs (vocoders).

Advantageously, an extensive collection of PACK and byte shift instructions simplifies manipulation of packed data types. Single Instruction, Multiple Data (SIMD) instructions have been added that operate directly on packed data to streamline data flow and increase instruction set efficiency. The processor has a comprehensive collection of 8-bit and 16-bit instruction set extensions.

Advantageously, additional instructions are provided that reduce code size and increase register flexibility. BDEC and BPOS combine a branch instruction with the decrement/test positive of a destination register respectively. These instructions help reduce the number of instructions needed to decrement a loop counter and conditionally branch based upon the value of that counter. Any register can be used as the loop counter which can free the standard conditional registers (A0-A2 and B0-B2) for other uses. The ADDKPC instruction helps reduce the number of instructions needed to set up the return address for a function call. The BNOP instruction helps reduce the number of instructions required to perform a branch when NOPs are needed to fill the delay slots of a branch.

Advantageously, in another embodiment of the present invention, there are no execute packet boundary restrictions, thereby eliminating a need to pad a fetch packet by adding unneeded NOP instructions.

In an embodiment of the present invention, there are 64 general-purpose registers. General purpose registers A0, A1, A2, B0, B1 and B2 can each be used as a conditional register.

In another embodiment of the present invention, each .D unit can load and store double words (64 bits). The .D units can access words and double words on any byte boundary. The .D unit supports data as well as address cross paths. The same register can be used as a data path cross operand for more than one functional unit in an execute packet. A delay clock cycle is introduced whenever an instruction attempts to read a register via a cross path that was updated in the previous cycle. Up to two long sources and two long results can be accessed on each data path every cycle.

As used herein, the terms "applied," "connected," and "connection" mean electrically connected, including where additional elements may be in the electrical connection path. "Associated" means a controlling relationship, such as a memory resource that is controlled by an associated port. The terms assert, assertion, de-assert, de-assertion, negate and negation are used to avoid confusion when dealing with a mixture of active high and active low signals. Assert and assertion are used to indicate that a signal is rendered active, or logically true. De-assert, de-assertion, negate, and negation are used to indicate that a signal is rendered inactive, or logically false.

While the invention has been described with reference to illustrative embodiments, this description is not intended to be construed in a limiting sense. Various other embodiments of the invention will be apparent to persons skilled in the art upon reference to this description. It is therefore contemplated that the appended claims will cover any such modifications of the embodiments as fall within the true scope of the invention.

## Claims

**1.** A microprocessor having an instruction execution pipeline with a plurality of pipeline phases, comprising:

program fetch circuitry operable to fetch instructions;
instruction decode circuitry connected to receive fetched instructions from the program fetch circuitry, the instruction decode circuitry operable to decode a set of single instruction, multiple data (SIMD) instructions; and
at least a first functional unit connected to receive control signals from the instruction decode circuitry, wherein the first functional unit comprises:
multi-field arithmetic/logic unit (ALU) circuitry connected to receive a plurality of source operands and having outputs connected to provide a multi-field result as a destination operand in response to control signals from the instruction decode circuitry, wherein the multi-field ALU circuitry is operable to treat the plurality of source operands as a set of N1 fields, such that the multi-field result includes N1 results corresponding to the set of N1 fields; and
wherein the first functional unit is operable to provide the multi-field result in response to a single SIMD instruction of a first type.

**2.** The microprocessor of claim 1, further comprising a second functional unit connected to operate in parallel with the first functional unit, wherein the second functional unit comprises multi-field multiplication circuitry connected to receive a plurality of source operands and having outputs connected to provide a multi-field result as a destination operand in response to control signals from the instruction decode circuitry, wherein the multi-field multiplication circuitry is operable to treat the plurality of source operands as a set of N2 fields, such that the multi-field result includes N2 results corresponding to the set of N2 fields; and
wherein the second functional unit is operable to provide the multi-field result in response to a single SIMD instruction of a second type.

**3.** The microprocessor of claim 1 or claim 2, further comprising:

at least a first load/store unit connected to at least a first storage register of the microprocessor;
a memory subsystem having at least a first memory port connected to the first load/store unit;
address generation circuitry in the first load/store unit having a first address output connected to the first memory port, the address generation circuitry operable to provide a first byte address on the first address output;
an extraction circuit connected to the first memory port, wherein the extraction circuit is operable to provide a first non-aligned multi-byte data item to the first load/store unit responsive to the first byte address; and wherein the load/store unit is operable to provide the multi-byte data item in response to a single instruction of a third type.

**4.** The microprocessor of claim 3, wherein the first storage register is part of a register file connected to the first functional unit and to the second functional unit for providing the plurality of source operands and connected to the first functional unit and to the second function unit to receive the destination operands.

**5.** The microprocessor of Claim 3 or claim 4, wherein the instructions of the first type, second type and third type all have a field for identifying a predicate register.

**6.** A digital system including a microprocessor as claimed in any one of claims 1 to 5.

**7.** A digital system as claimed in claim 6, which is a cellular telephone, further comprising:

an integrated keyboard connected to the microprocessor via a keyboard adapter;
a display, connected to the microprocessor via a display adapter;
radio frequency (RF) circuitry connected to the microprocessor; and
an aerial connected to the RF circuitry.

**8.** A method of operating a microprocessor, comprising the steps of:

providing multi-field arithmetic/logic unit (ALU) circuitry for operating on a set of source operands to form a multi-field destination operand by treating the plurality of source operands as a set of N1 fields, such that the multi-field result includes N1 results corresponding to the set of N1 fields; and
providing a set of single instruction, multiple data (SIMD) instructions to direct the operation of the multi-field ALU circuitry.

**9.** A method of operating a microprocessor, comprising the steps of:

providing multi-field arithmetic/logic unit (ALU) circuitry for operating on a set of source operands to form a multi-field destination operand by treating the plurality of source operands as a set of N1 fields, such that the multi-field result includes N1 results corresponding to the set of N1 fields;
providing multi-field multiplication circuitry for operating on a set of source operands to form a multi-field destination operand by treating the plurality of source operands as a set of N2 fields, such that the multi-field result includes N2 results corresponding to the set of N2 fields; and

providing a set of single instruction, multiple data (SIMD) instructions to direct the operation of the multi-field ALU circuitry and the multi-field multiplication circuitry.

**10.** The method of claim 8 or claim 9, further comprising the step of providing load/store circuitry operable to transfer a multi-byte data item to a memory circuit at a byte address that is not word aligned.

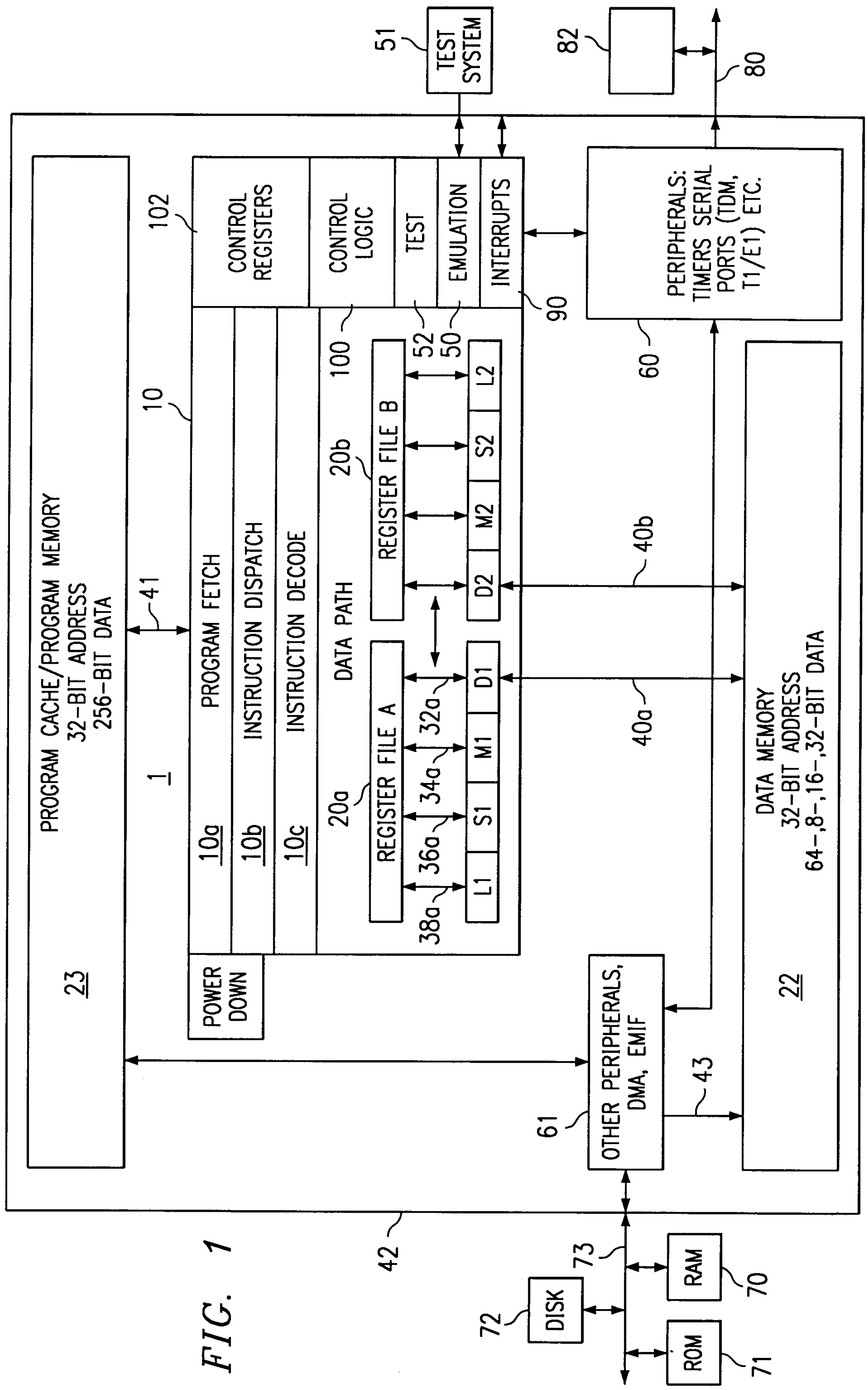
PROGRAM CACHE/PROGRAM MEMORY
32-BIT ADDRESS
256-BIT DATA
23
41
10
1
102
CONTROL REGISTERS
CONTROL LOGIC
TEST
EMULATION
INTERRUPTS
90
PROGRAM FETCH
10a
INSTRUCTION DISPATCH
10b
INSTRUCTION DECODE
10c
DATA PATH
100
POWER DOWN
20a
REGISTER FILE A
20b
REGISTER FILE B
38a
36a
34a
32a
L1
S1
M1
D1
D2
M2
S2
L2
52
50
51
TEST SYSTEM
82
80
PERIPHERALS: TIMERS SERIAL PORTS (TDM, T1/E1) ETC.
60
40a
40b
DATA MEMORY
32-BIT ADDRESS
64-,8-,16-,32-BIT DATA
22
OTHER PERIPHERALS, DMA, EMIF
61
43
42
73
DISK
72
RAM
70
ROM
71

FIG. 1

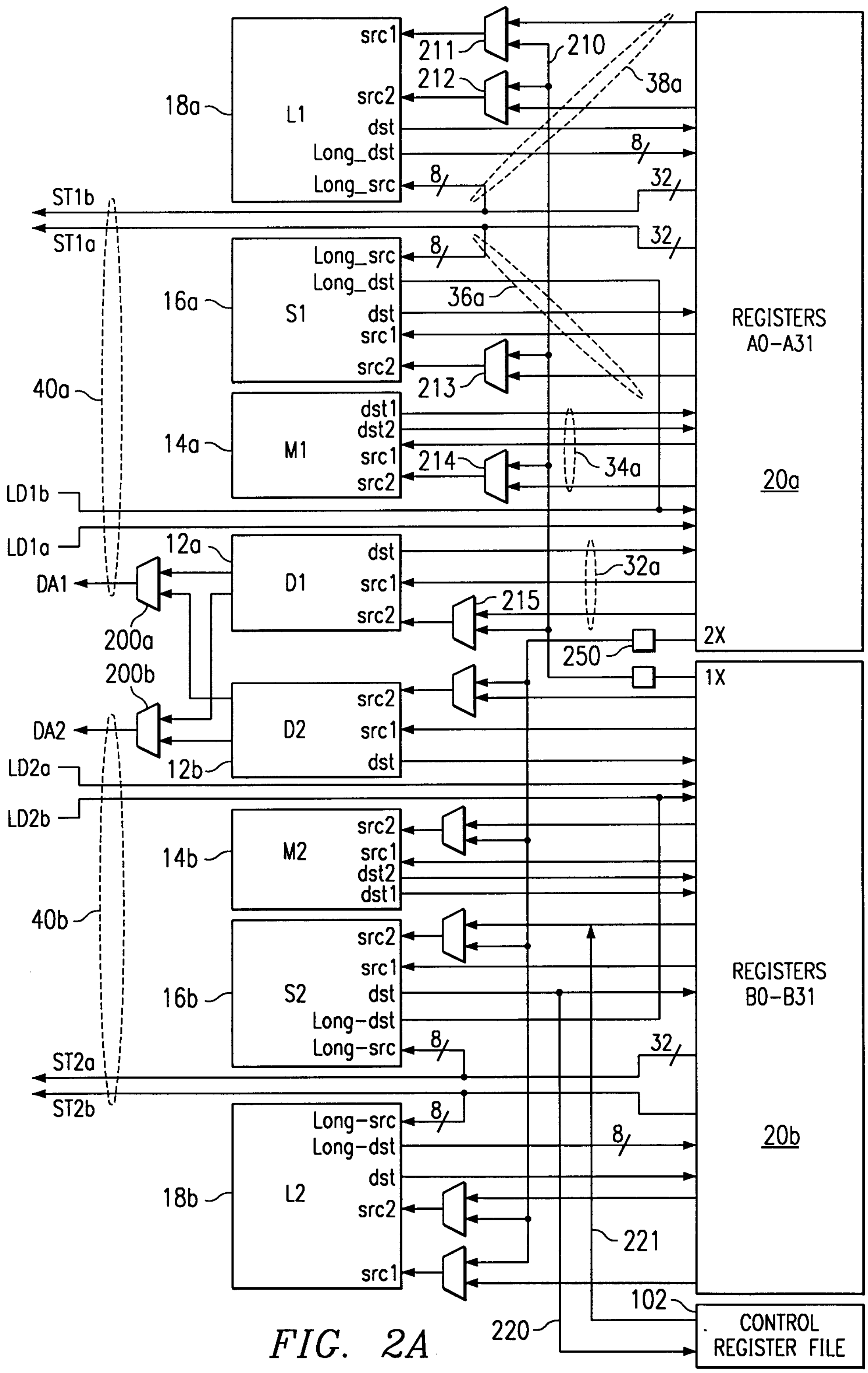
src1
src2
dst
Long_dst
Long_src
L1
18a
211
212
210
38a
8
32
ST1b
ST1a
Long_src
Long_dst
dst
src1
src2
S1
16a
36a
213
REGISTERS
A0-A31
40a
dst1
dst2
src1
src2
M1
14a
214
34a
20a
LD1b
LD1a
12a
dst
src1
src2
D1
32a
DA1
215
200a
2X
250
200b
1X
src2
src1
dst
D2
DA2
12b
LD2a
LD2b
src2
src1
dst2
dst1
M2
14b
40b
src2
src1
dst
Long-dst
Long-src
S2
16b
REGISTERS
B0-B31
ST2a
ST2b
Long-src
Long-dst
dst
src2
src1
L2
18b
20b
221
102
220
CONTROL
REGISTER FILE

FIG. 2A

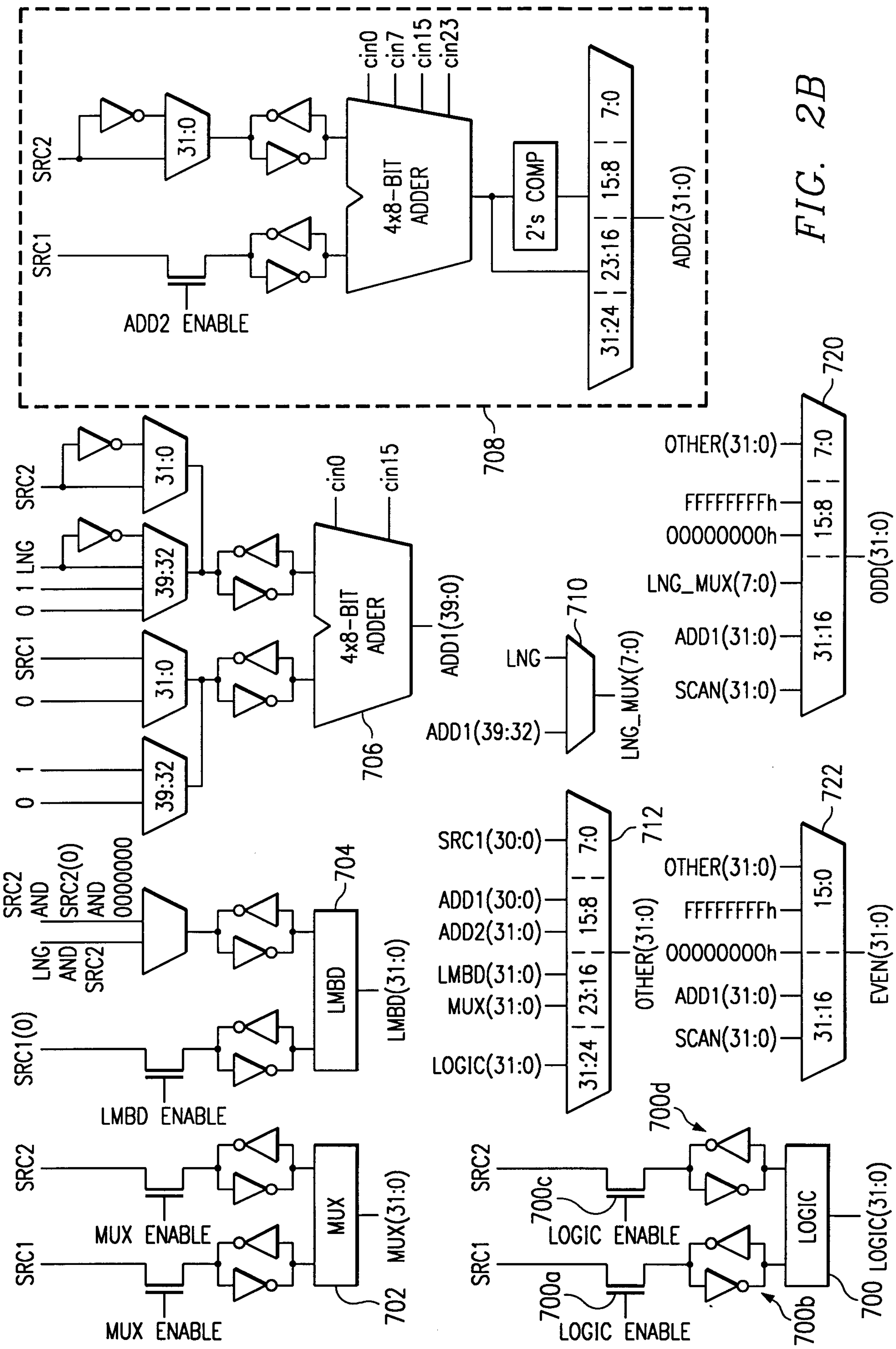
SRC1
SRC2
MUX ENABLE
MUX ENABLE
MUX
MUX(31:0)
702
SRC1(0)
LNG AND SRC2
SRC2 AND SRC2(0) AND 0000000
LMBD ENABLE
LMBD
LMBD(31:0)
704
0 1
0 SRC1
0 1 LNG
SRC2
39:32
31:0
39:32
31:0
4x8-BIT ADDER
cin0
cin15
ADD1(39:0)
706
708
SRC1
SRC2
ADD2 ENABLE
31:0
4x8-BIT ADDER
cin0
cin7
cin15
cin23
2's COMP
31:24
23:16
15:8
7:0
ADD2(31:0)
LNG
ADD1(39:32)
710
LNG_MUX(7:0)
SRC1(30:0)
ADD1(30:0)
ADD2(31:0)
LMBD(31:0)
MUX(31:0)
LOGIC(31:0)
31:24
23:16
15:8
7:0
712
OTHER(31:0)
OTHER(31:0)
FFFFFFFFh
00000000h
LNG_MUX(7:0)
ADD1(31:0)
SCAN(31:0)
31:16
15:8
7:0
720
ODD(31:0)
OTHER(31:0)
FFFFFFFFh
00000000h
ADD1(31:0)
SCAN(31:0)
31:16
15:0
722
EVEN(31:0)
SRC1
SRC2
LOGIC ENABLE
LOGIC ENABLE
700a
700b
700c
700d
LOGIC
LOGIC(31:0)
700

*FIG. 2B*

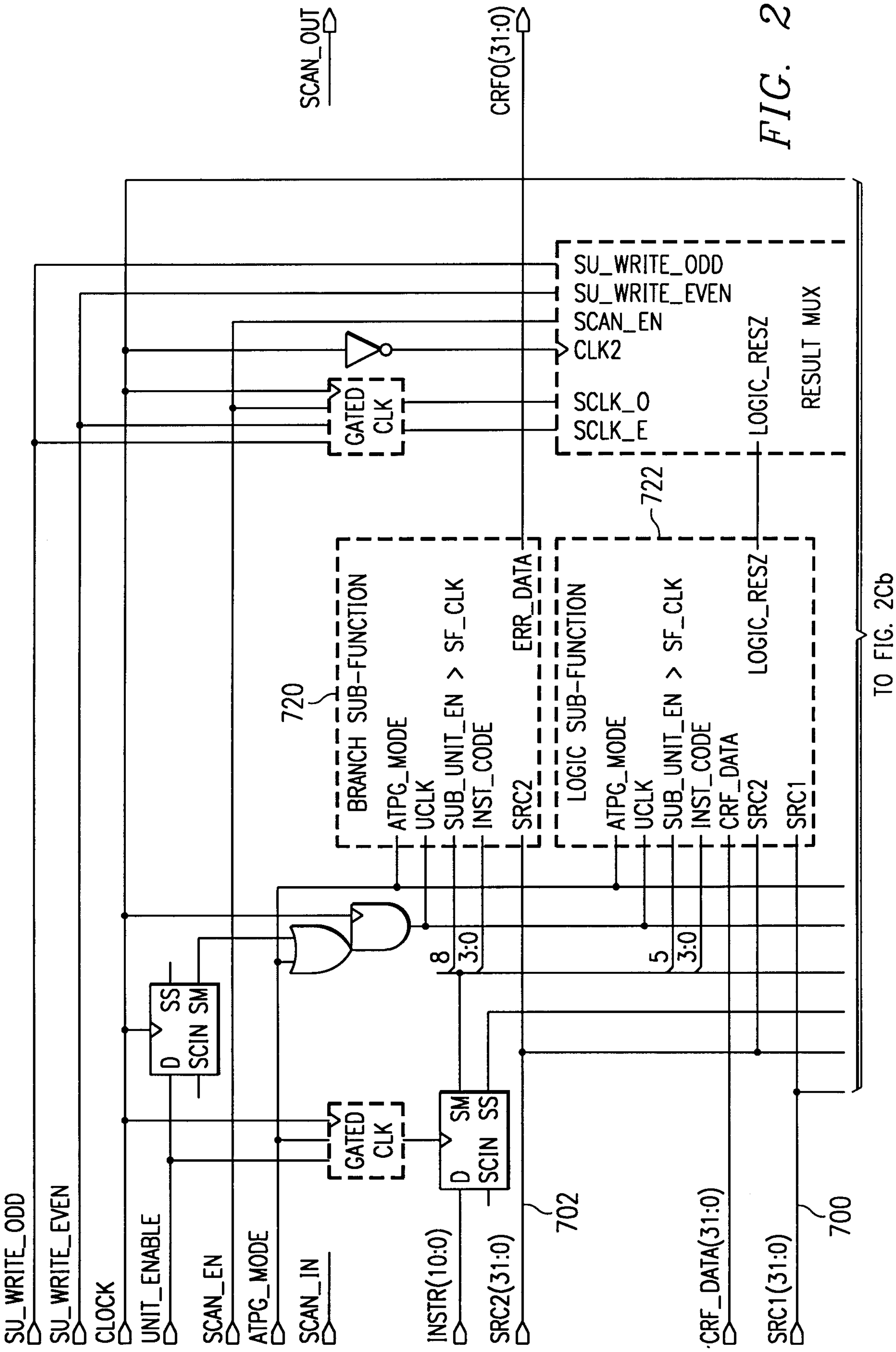
SU_WRITE_ODD
SU_WRITE_EVEN
CLOCK
UNIT_ENABLE
SCAN_EN
ATPG_MODE
SCAN_IN
INSTR(10:0)
SRC2(31:0)
CRF_DATA(31:0)
SRC1(31:0)
SCAN_OUT
CRFO(31:0)
GATED CLK
D SCIN SM SS
8
3:0
5
3:0
702
700
720
BRANCH SUB-FUNCTION
ATPG_MODE
UCLK
SUB_UNIT_EN > SF_CLK
INST_CODE
SRC2
ERR_DATA
722
LOGIC SUB-FUNCTION
ATPG_MODE
UCLK
SUB_UNIT_EN > SF_CLK
INST_CODE
CRF_DATA
SRC2
SRC1
LOGIC_RESZ
SU_WRITE_ODD
SU_WRITE_EVEN
SCAN_EN
CLK2
SCLK_O
SCLK_E
LOGIC_RESZ
RESULT MUX
TO FIG. 2Cb

FIG. 2Ca

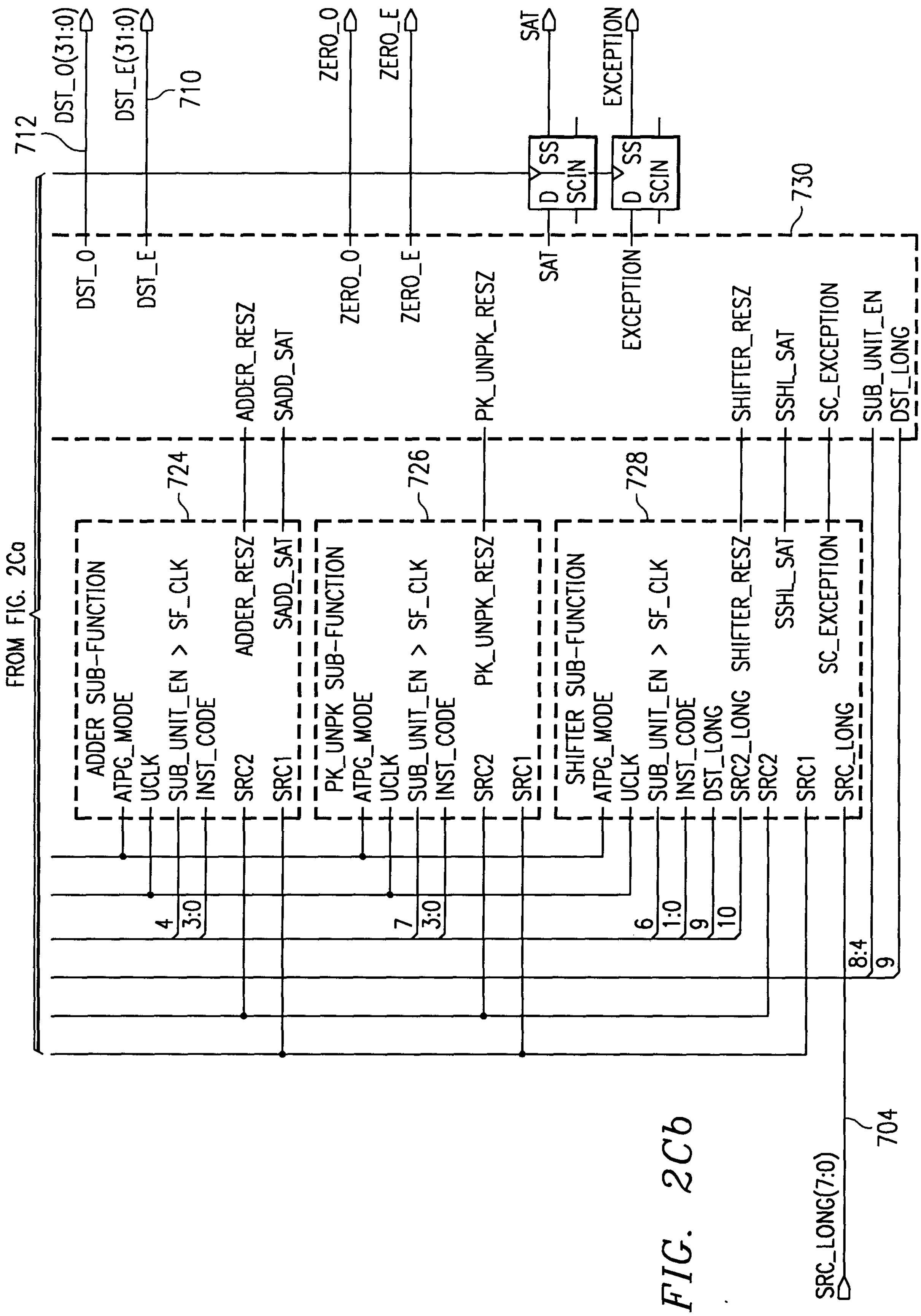
712
DST_O(31:0)
DST_E(31:0)
710
ZERO_O
ZERO_E
SAT
EXCEPTION
D
SS
SCIN
730
DST_O
DST_E
ADDER_RESZ
SADD_SAT
ZERO_O
ZERO_E
PK_UNPK_RESZ
SAT
EXCEPTION
SHIFTER_RESZ
SSHL_SAT
SC_EXCEPTION
SUB_UNIT_EN
DST_LONG
FROM FIG. 2Ca
724
ADDER SUB-FUNCTION
ATPG_MODE
UCLK
SUB_UNIT_EN
INST_CODE
SRC2
SRC1
> SF_CLK
ADDER_RESZ
SADD_SAT
726
PK_UNPK SUB-FUNCTION
ATPG_MODE
UCLK
SUB_UNIT_EN
INST_CODE
SRC2
SRC1
> SF_CLK
PK_UNPK_RESZ
728
SHIFTER SUB-FUNCTION
ATPG_MODE
UCLK
SUB_UNIT_EN
INST_CODE
DST_LONG
SRC2_LONG
SRC2
SRC1
SRC_LONG
> SF_CLK
SHIFTER_RESZ
SSHL_SAT
SC_EXCEPTION
4
3:0
7
3:0
6
1:0
9
10
8:4
9
SRC_LONG(7:0)
704

*FIG. 2Cb*

FIG. 2D

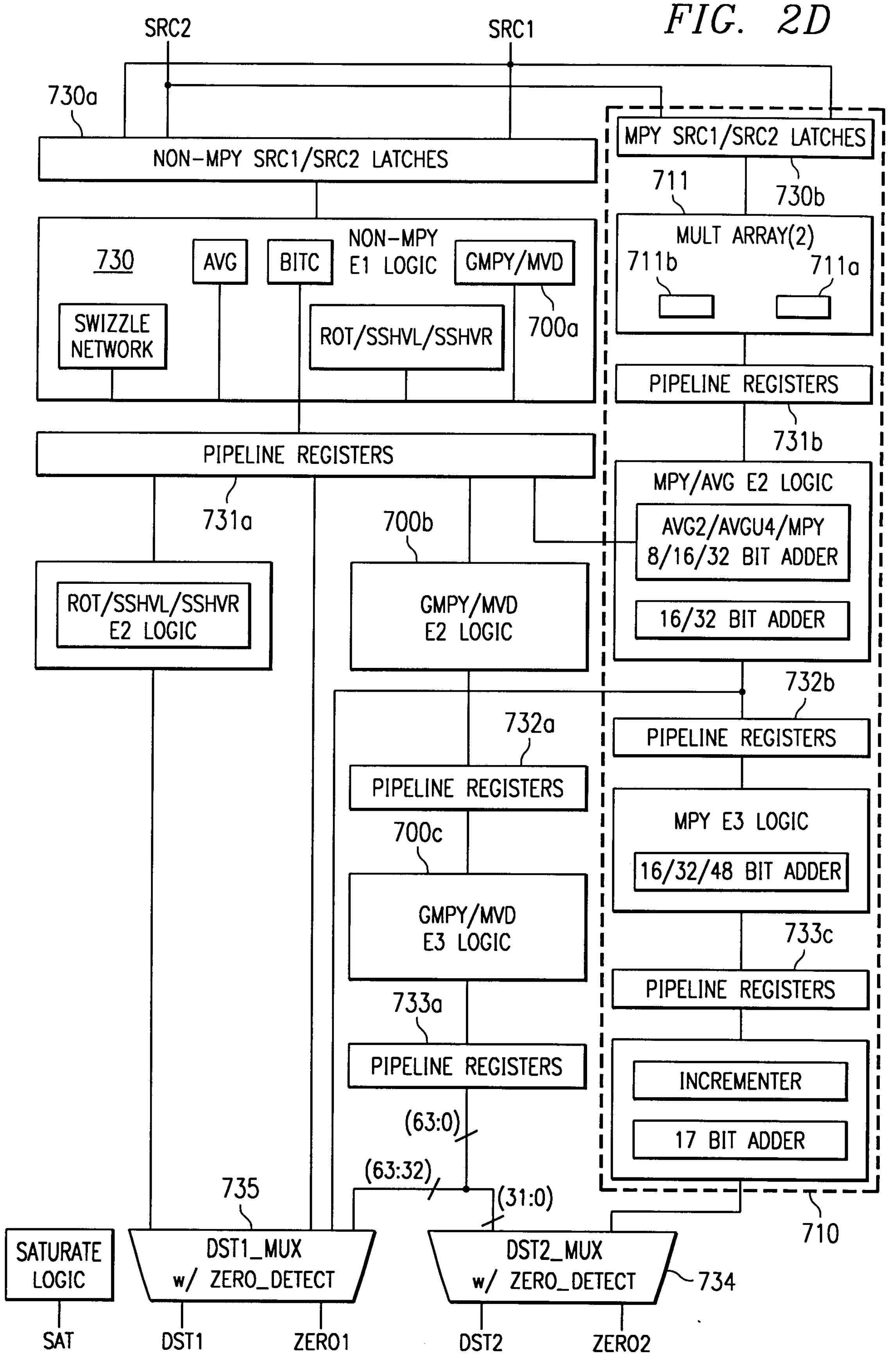
SRC2
SRC1
730a
NON-MPY SRC1/SRC2 LATCHES
MPY SRC1/SRC2 LATCHES
711
730b
MULT ARRAY(2)
711b
711a
730
AVG
BITC
NON-MPY
E1 LOGIC
GMPY/MVD
SWIZZLE
NETWORK
ROT/SSHVL/SSHVR
700a
PIPELINE REGISTERS
731b
PIPELINE REGISTERS
731a
700b
MPY/AVG E2 LOGIC
AVG2/AVGU4/MPY
8/16/32 BIT ADDER
16/32 BIT ADDER
ROT/SSHVL/SSHVR
E2 LOGIC
GMPY/MVD
E2 LOGIC
732b
732a
PIPELINE REGISTERS
PIPELINE REGISTERS
700c
MPY E3 LOGIC
16/32/48 BIT ADDER
GMPY/MVD
E3 LOGIC
733c
PIPELINE REGISTERS
733a
PIPELINE REGISTERS
INCREMENTER
17 BIT ADDER
(63:0)
(63:32)
(31:0)
735
710
SATURATE
LOGIC
DST1_MUX
w/ ZERO_DETECT
DST2_MUX
w/ ZERO_DETECT
734
SAT
DST1
ZERO1
DST2
ZERO2

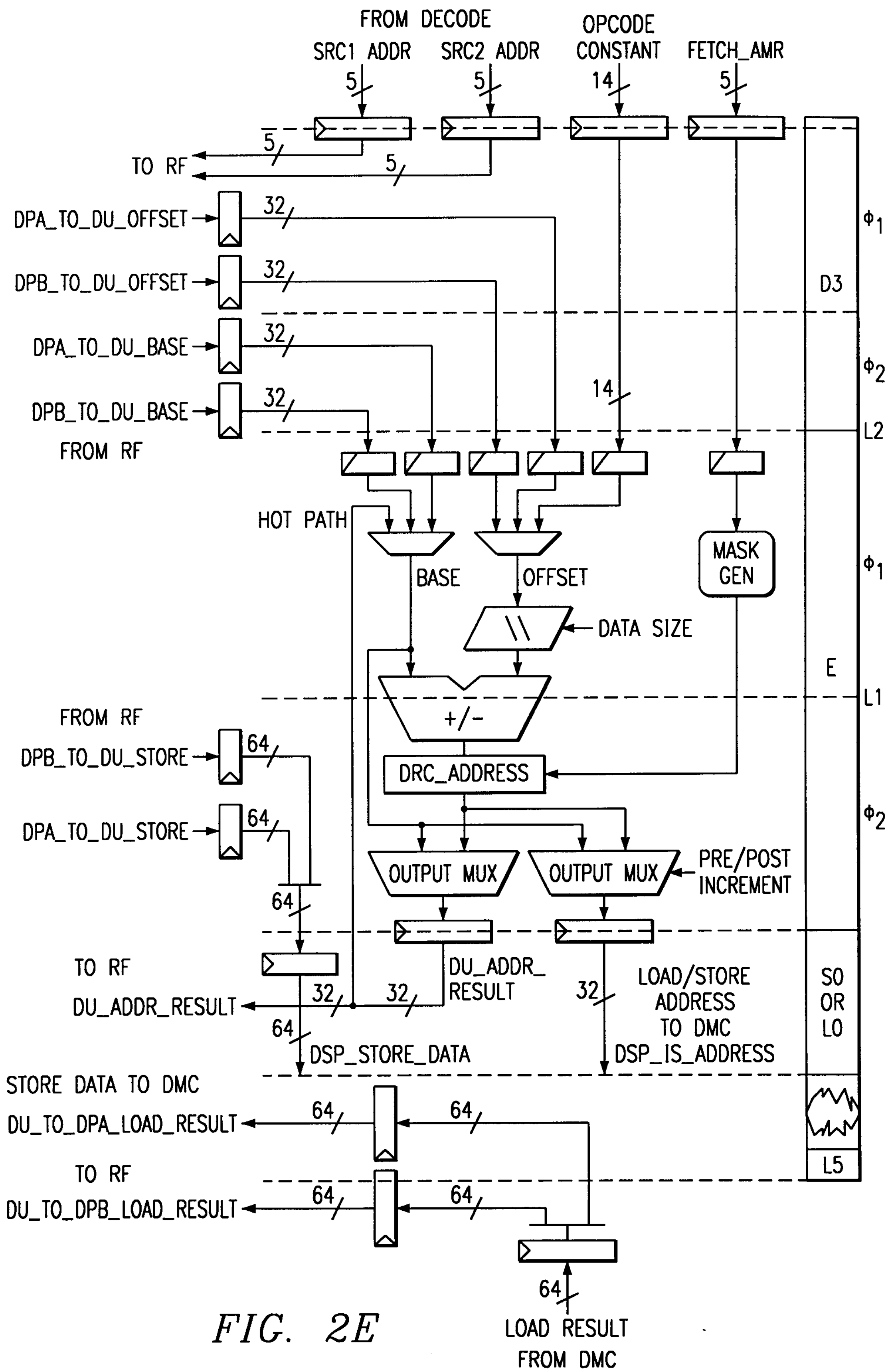

FROM DECODE
SRC1 ADDR
SRC2 ADDR
OPCODE CONSTANT
FETCH_AMR
5
5
14
5
TO RF
5
5
DPA_TO_DU_OFFSET
32
DPB_TO_DU_OFFSET
32
DPA_TO_DU_BASE
32
DPB_TO_DU_BASE
32
FROM RF
14
HOT PATH
BASE
OFFSET
MASK GEN
DATA SIZE
+/-
DRC_ADDRESS
FROM RF
DPB_TO_DU_STORE
64
DPA_TO_DU_STORE
64
64
OUTPUT MUX
OUTPUT MUX
PRE/POST INCREMENT
TO RF
DU_ADDR_RESULT
32
32
DU_ADDR_ RESULT
32
LOAD/STORE ADDRESS TO DMC
DSP_IS_ADDRESS
64
DSP_STORE_DATA
STORE DATA TO DMC
DU_TO_DPA_LOAD_RESULT
64
64
TO RF
DU_TO_DPB_LOAD_RESULT
64
64
64
LOAD RESULT FROM DMC
Φ1
D3
Φ2
L2
Φ1
E
L1
Φ2
SO OR LO
L5


*FIG. 2E*

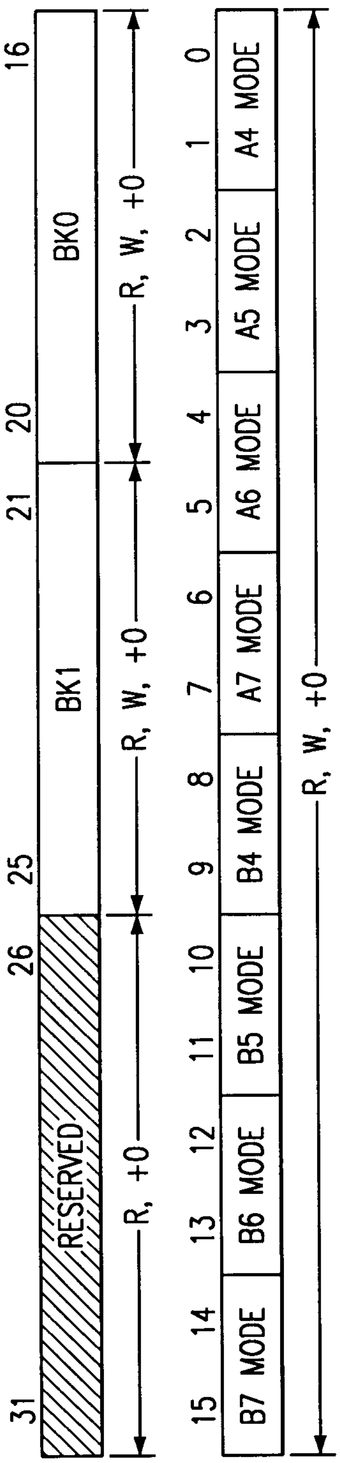


FIG. 3A

NOTE: R=READABLE BY THE MVC INSTRUCTION
W=WRITEABLE BY THE MVC INSTRUCTION
+0=VALUE IS ZERO AFTER RESET

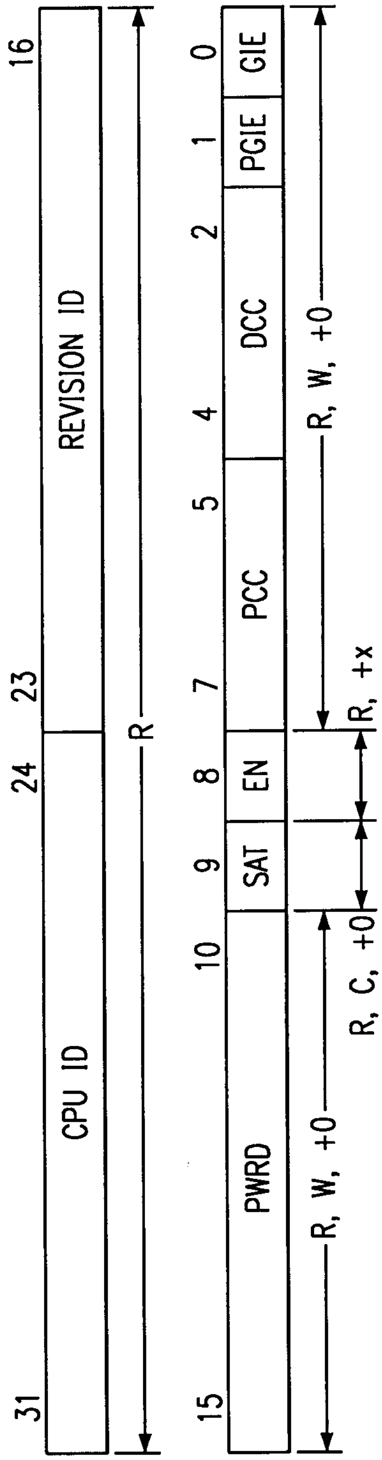


FIG. 3B

NOTE: R=READABLE BY THE MVC INSTRUCTION
W=WRITEABLE BY THE MVC INSTRUCTION
+x=VALUE UNDEFINED AFTER RESET
+0=VALUE IS ZERO AFTER RESET
C=CLEARABLE USING THE MVC INSTRUCTION

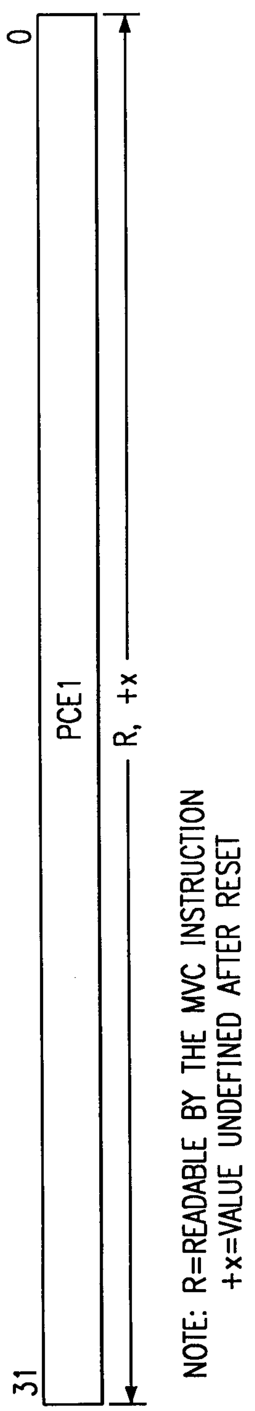


FIG. 3C

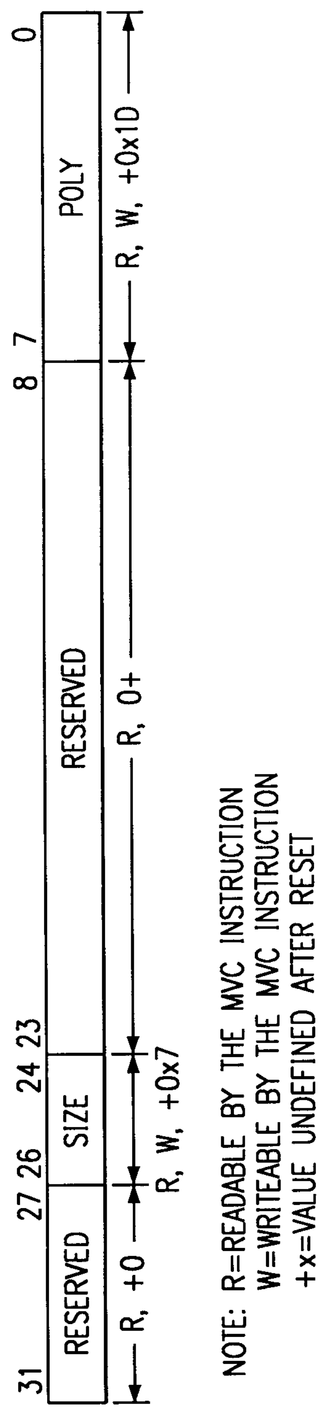


FIG. 4

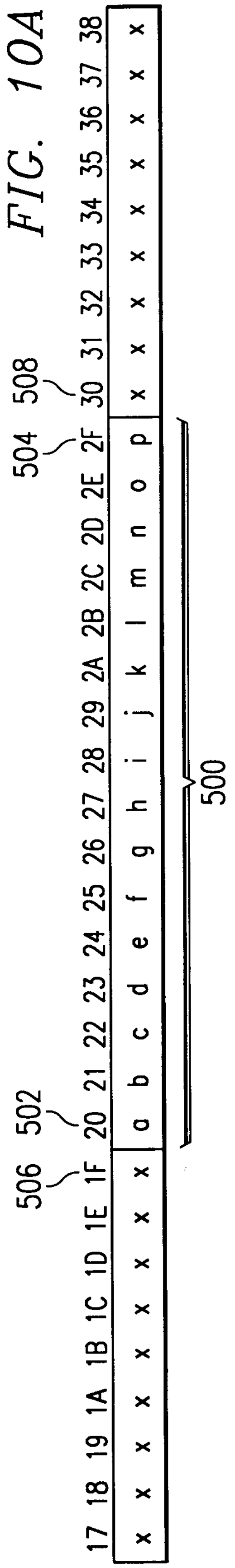


FIG. 10A

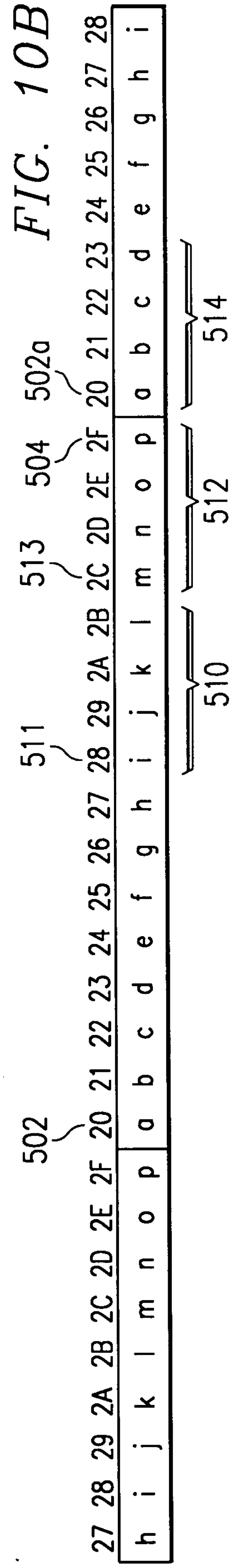


FIG. 10B

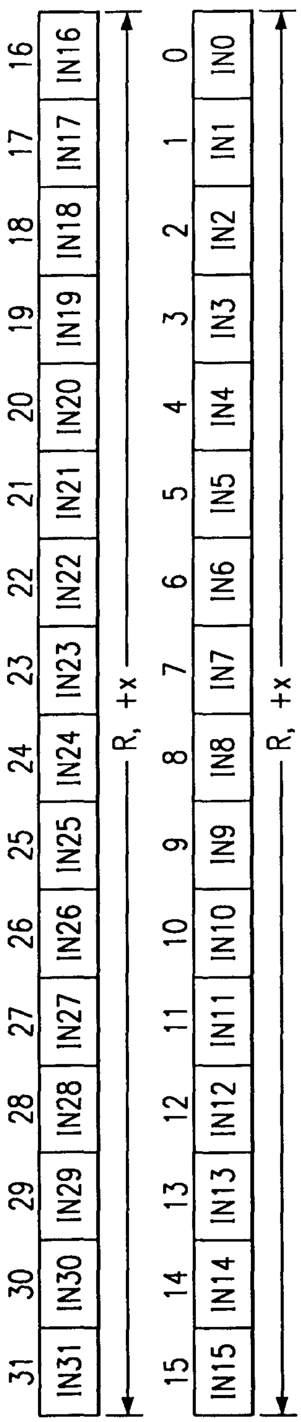


NOTE: R=READABLE BY MVC INSTRUCTION
+x=VALUE UNDEFINED AT RESET

*FIG. 5*

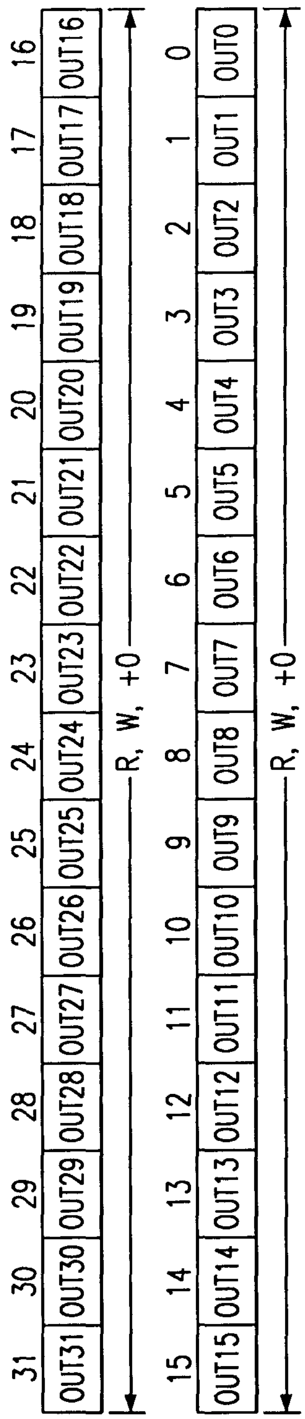


NOTE: R=READABLE BY MVC INSTRUCTION
W=WRITEABLE BY MVC INSTRUCTION
+0=VALUE IS ZERO AT RESET

*FIG. 6*

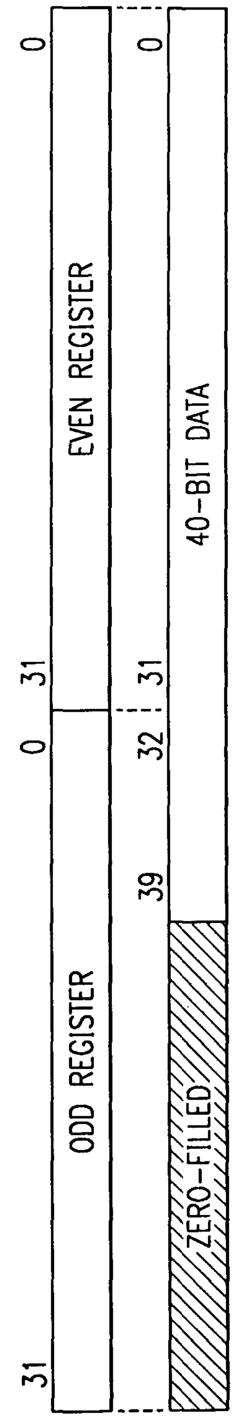


*FIG. 7*

OPERATIONS ON THE .L UNIT

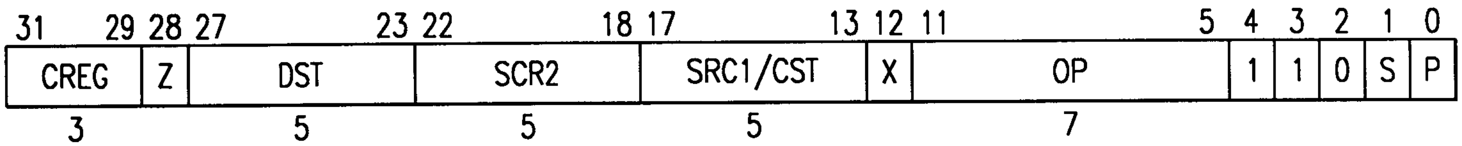


FIG. 8A

OPERATIONS ON THE .M UNIT

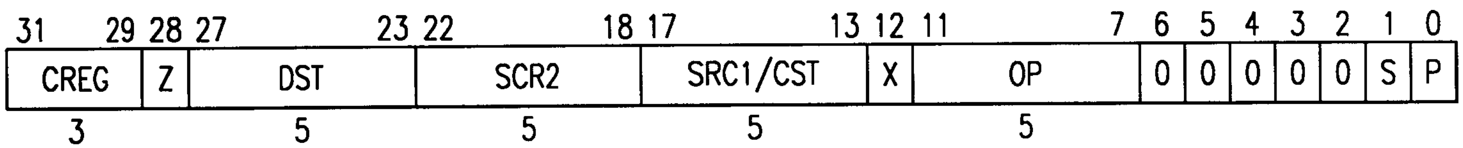


FIG. 8B

OPERATIONS ON THE .D UNIT

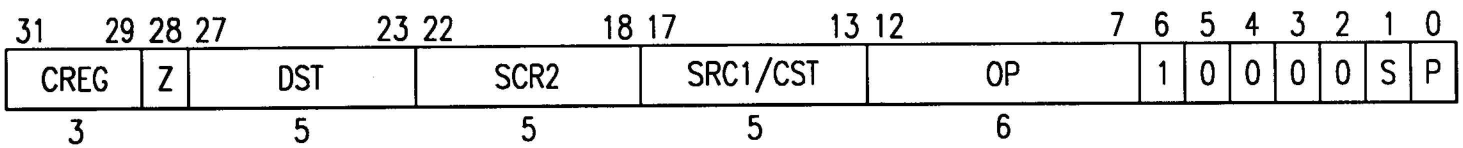


FIG. 8C

LOAD/STORE WITH 15-BIT OFFSET (ON THE .D UNIT)

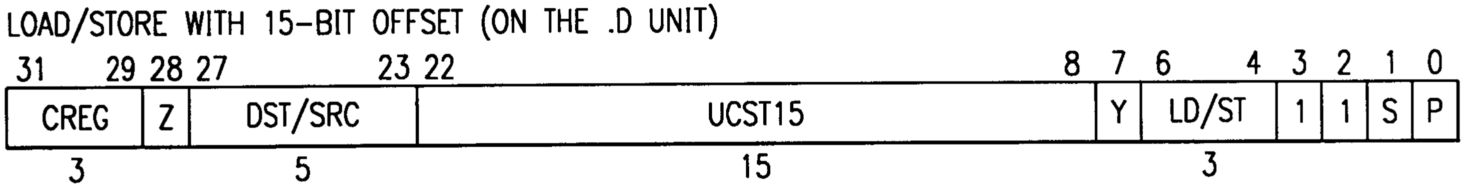


FIG. 8D

LOAD/STORE 'BASER' + 'OFFSETR/CST' ON THE .D UNIT

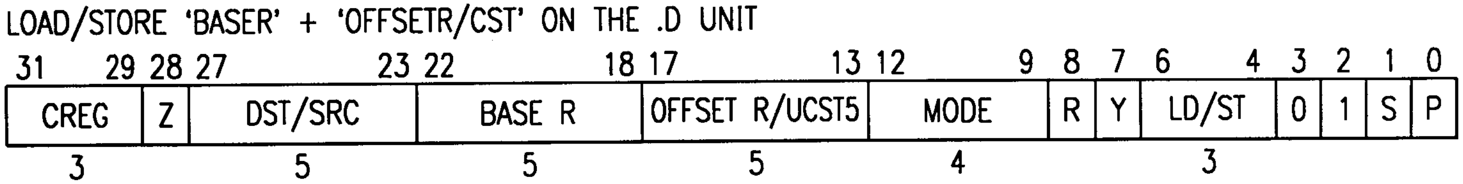


FIG. 8E

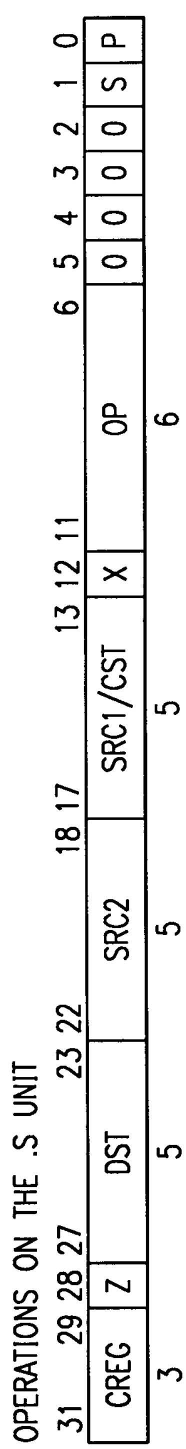


FIG. 8F

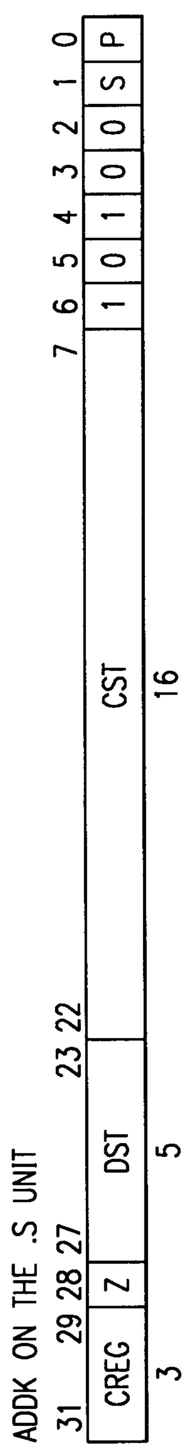


FIG. 8G

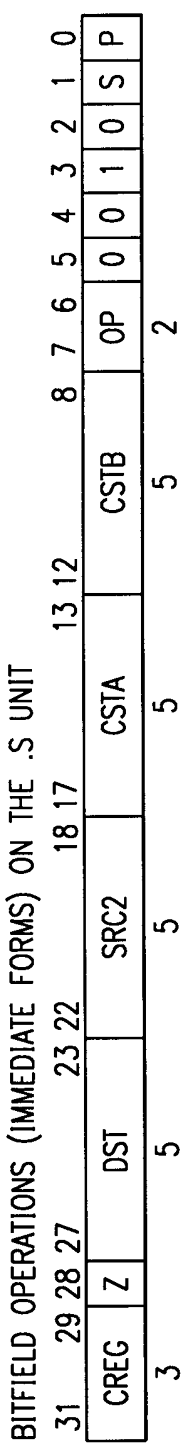


FIG. 8H

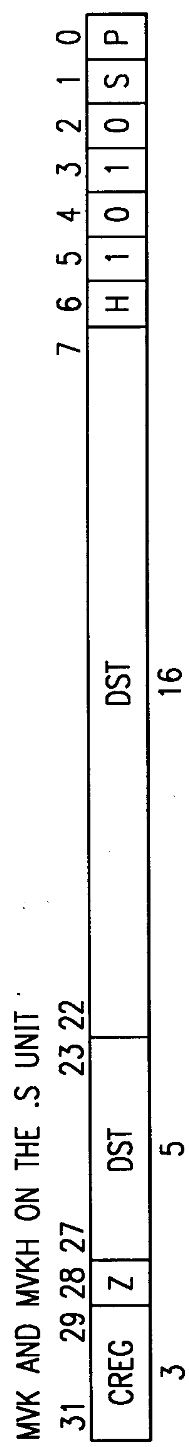


FIG. 8I

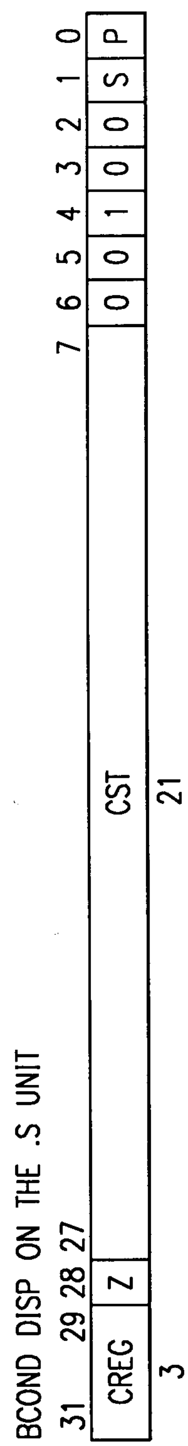


FIG. 8J

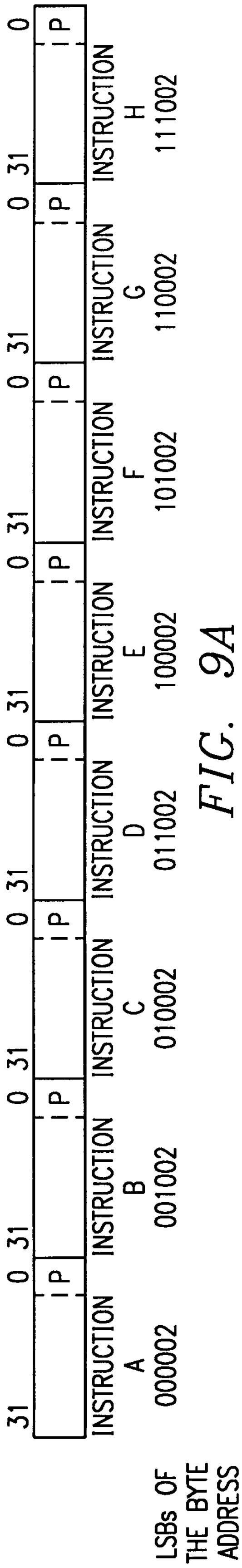


FIG. 9A

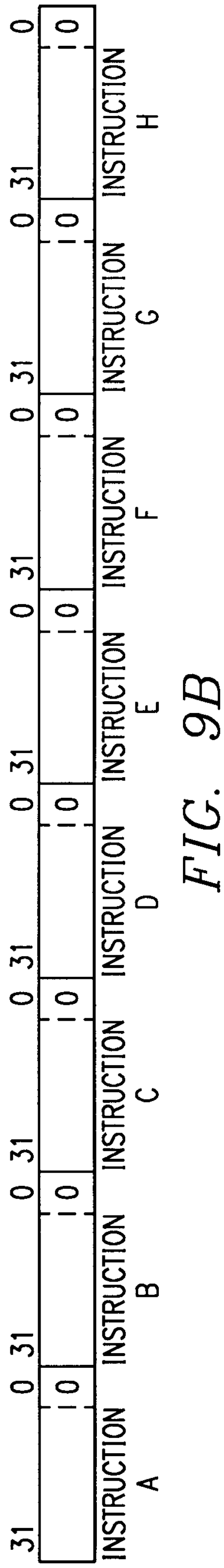


FIG. 9B

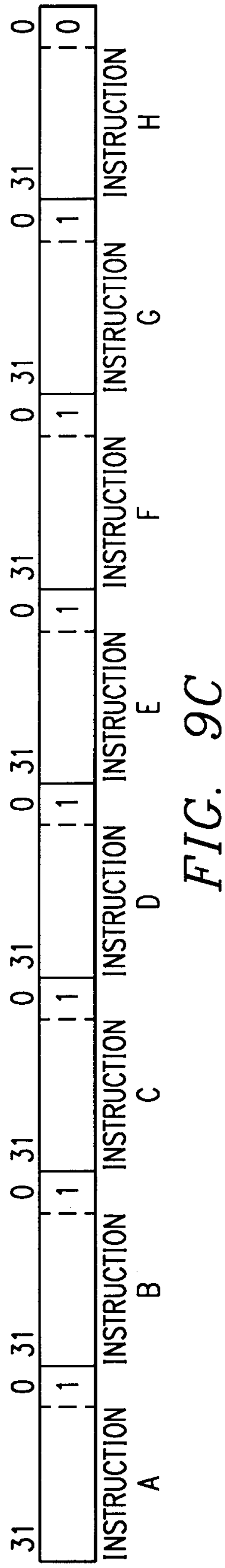


FIG. 9C

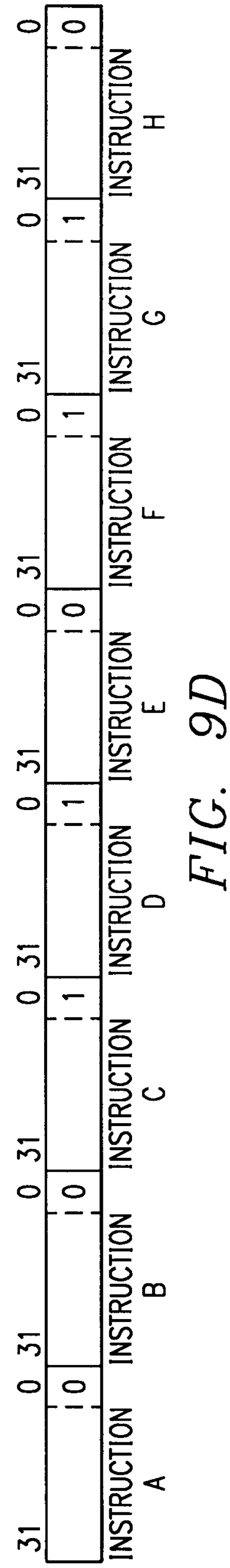


FIG. 9D

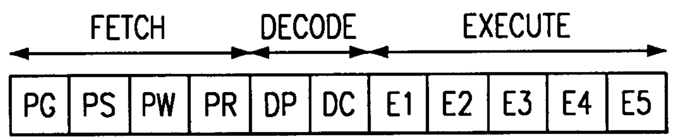


FIG. 11

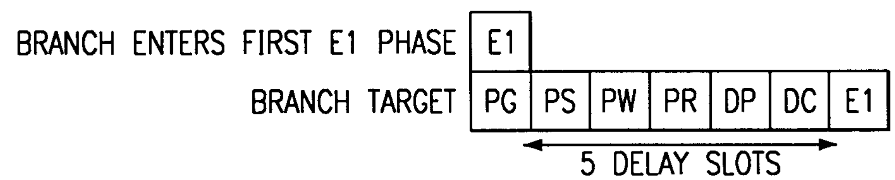


FIG. 12

CLOCK CYCLE

| FETCH PACKET | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | 25 |
|---|---|---|---|---|---|---|---|---|---|---|---|---|---|---|---|---|---|---|---|---|---|---|---|---|---|
| n | PG | PS | PW | PR | DP | DC | E1 | E2 | E3 | E4 | E5 | | | | | | | | | | | | | | |
| n+1 | | PG | PS | PW | PR | DP | DC | E1 | E2 | E3 | E4 | E5 | | | | | | | | | | | | | |
| n+2 | | | PG | PS | PW | PR | DP | DC | E1 | E2 | E3 | E4 | E5 | | | | | | | | | | | | |
| n+3 | | | | PG | PS | PW | PR | DP | DC | E1 | E2 | E3 | E4 | E5 | | | | | | | | | | | |
| n+4 | | | | | PG | PS | PW | PR | DP | DC | E1 | E2 | E3 | E4 | E5 | | | | | | | | | | |
| n+5 | | | | | | PG | PS | PW | PR | DP | DC | E1 | E2 | E3 | E4 | E5 | | | | | | | | | |
| n+6 | | | | | | | PG | PS | PW | PR | DP | DC | E1 | E2 | E3 | E4 | E5 | | | | | | | | |
| n+7 | | | | | | | | PG | PS | PW | PR | DP | DC | E1 | E2 | E3 | E4 | E5 | | | | | | | |
| n+8 | | | | | | | | | PG | PS | PW | PR | DP | DC | E1 | E2 | E3 | E4 | E5 | | | | | | |
| n+9 | | | | | | | | | | PG | PS | PW | PR | DP | DC | E1 | E2 | E3 | E4 | E5 | | | | | |
| n+10 | | | | | | | | | | | PG | PS | PW | PR | DP | DC | E1 | E2 | E3 | E4 | E5 | | | | |
| n+11 | | | | | | | | | | | | PG | PS | PW | PR | DP | DC | E1 | E2 | E3 | E4 | E5 | | | |
| n+12 | | | | | | | | | | | | | PG | PS | PW | PR | DP | DC | E1 | E2 | E3 | E4 | E5 | | |

FIG. 13

| FETCH PACKET | EXECUTE PACKET | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 |
|---|---|---|---|---|---|---|---|---|---|---|---|---|---|---|---|---|---|---|---|---|---|---|---|---|
| n | k | PG | PS | PW | PR | DP | DC | E1 | E2 | E3 | E4 | E5 | | | | | | | | | | | | |
| n | k+1 | | | | | | DP | DC | E1 | E2 | E3 | E4 | E5 | | | | | | | | | | | |
| n | k+2 | | | | | | | DP | DC | E1 | E2 | E3 | E4 | E5 | | | | | | | | | | |
| n+1 | k+3 | | PG | PS | PW | PR | PR | PR | DP | DC | E1 | E2 | E3 | E4 | E5 | | | | | | | | | |
| n+2 | k+4 | | | PG | PS | PW | PW | PW | PR | DP | DC | E1 | E2 | E3 | E4 | E5 | | | | | | | | |
| n+3 | k+5 | | | | PG | PS | PS | PS | PW | PR | DP | DC | E1 | E2 | E3 | E4 | E5 | | | | | | | |
| n+4 | k+6 | | | | | PG | PG | PG | PS | PW | PR | DP | DC | E1 | E2 | E3 | E4 | E5 | | | | | | |
| n+5 | k+7 | | | | | | | | PG | PS | PW | PR | DP | DC | E1 | E2 | E3 | E4 | E5 | | | | | |
| n+6 | k+8 | | | | | | | | | PG | PS | PW | PR | DP | DC | E1 | E2 | E3 | E4 | E5 | | | | |

CLOCK CYCLE

*FIG. 14*

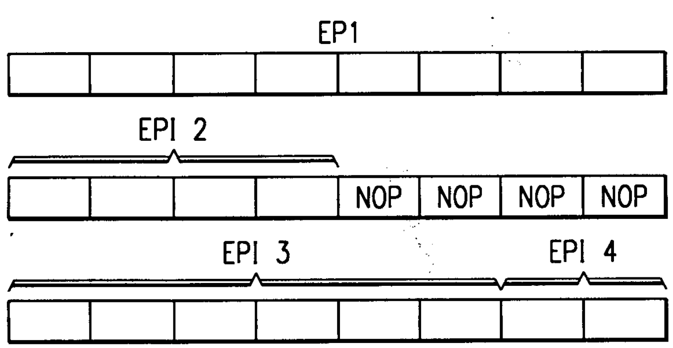


*FIG. 16A*
*(PRIOR ART)*

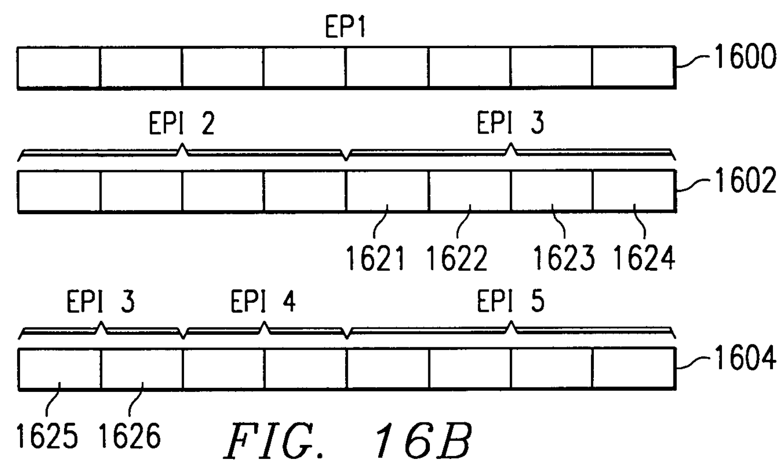


*FIG. 16B*

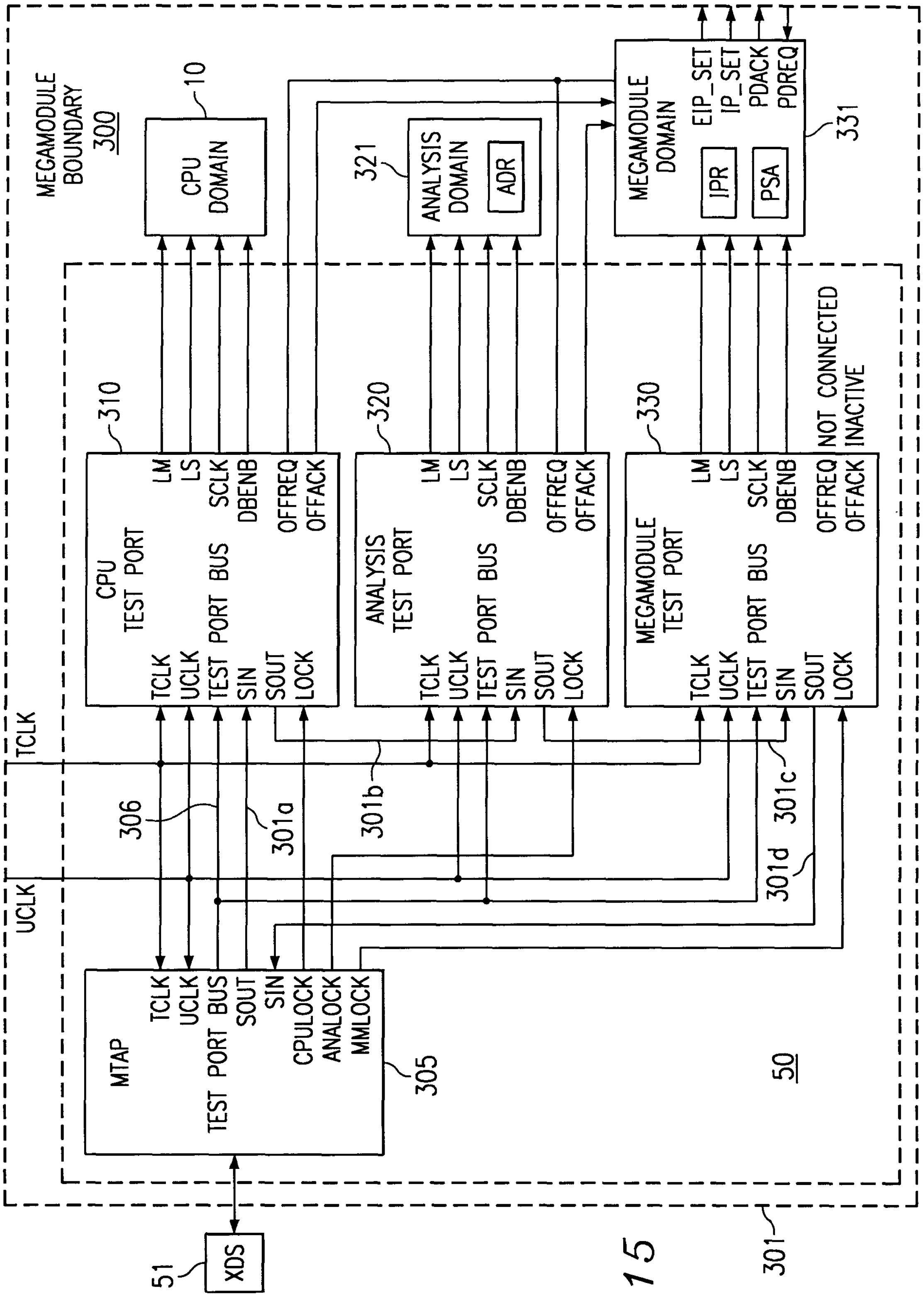
MEGAMODULE BOUNDARY 300
CPU DOMAIN
10
ANALYSIS DOMAIN
ADR
321
MEGAMODULE DOMAIN
IPR
PSA
EIP_SET
IP_SET
PDACK
PDREQ
331
CPU TEST PORT
310
ANALYSIS TEST PORT
320
MEGAMODULE TEST PORT
330
TEST PORT BUS
TCLK
UCLK
SIN
SOUT
LOCK
LM
LS
SCLK
DBENB
OFFREQ
OFFACK
NOT CONNECTED
INACTIVE
306
301a
301b
301c
301d
MTAP
CPULOCK
ANALOCK
MMLOCK
305
50
XDS
51
301

FIG. 15

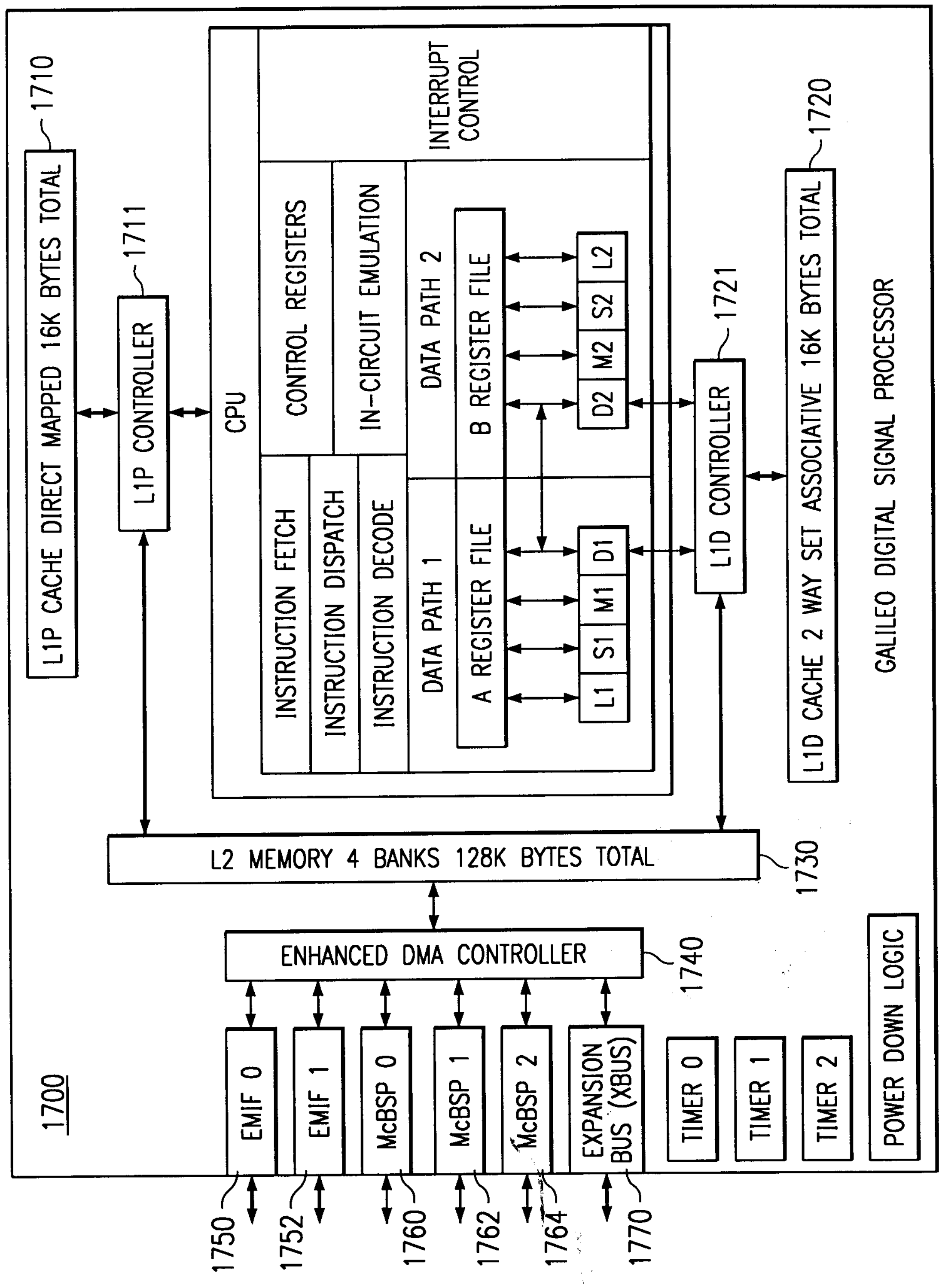
1700
L1P CACHE DIRECT MAPPED 16K BYTES TOTAL
1710
L1P CONTROLLER
1711
CPU
INSTRUCTION FETCH
INSTRUCTION DISPATCH
INSTRUCTION DECODE
CONTROL REGISTERS
IN-CIRCUIT EMULATION
INTERRUPT CONTROL
DATA PATH 1
DATA PATH 2
A REGISTER FILE
B REGISTER FILE
L1
S1
M1
D1
D2
M2
S2
L2
L1D CONTROLLER
1721
L1D CACHE 2 WAY SET ASSOCIATIVE 16K BYTES TOTAL
1720
GALILEO DIGITAL SIGNAL PROCESSOR
L2 MEMORY 4 BANKS 128K BYTES TOTAL
1730
ENHANCED DMA CONTROLLER
1740
EMIF 0
EMIF 1
McBSP 0
McBSP 1
McBSP 2
EXPANSION BUS (XBUS)
TIMER 0
TIMER 1
TIMER 2
POWER DOWN LOGIC
1750
1752
1760
1762
1764
1770

*FIG. 17*